(19) Europäisches Patentamt
European Patent Office
Office européen des brevets

(11) Veröffentlichungsnummer: **0 501 266 B1**

(12) # EUROPÄISCHE PATENTSCHRIFT

(45) Veröffentlichungstag der Patentschrift: **21.06.95**

(51) Int. Cl.$^6$: **C09B 62/503**, C09B 62/04, D06P 1/38

(21) Anmeldenummer: **92102586.2**

(22) Anmeldetag: **17.02.92**

Die Akte enthält technische Angaben, die nach dem Eingang der Anmeldung eingereicht wurden und die nicht in dieser Patentschrift enthalten sind.

(54) **Bifunktionelle Reaktivfarbstoffe.**

(30) Priorität: **28.02.91 DE 4106255**

(43) Veröffentlichungstag der Anmeldung:
**02.09.92 Patentblatt 92/36**

(45) Bekanntmachung des Hinweises auf die Patenterteilung:
**21.06.95 Patentblatt 95/25**

(84) Benannte Vertragsstaaten:
**CH DE FR GB LI**

(56) Entgegenhaltungen:
**EP-A- 0 282 443**
**EP-A- 0 369 385**

(73) Patentinhaber: **BAYER AG**
**D-51368 Leverkusen (DE)**

(72) Erfinder: **Harms, Wolfgang, Dr.**
**Osenauerstrasse 46**
**W-5068 Odenthal (DE)**
Erfinder: **Eizenhöfer, Thomas, Dr.**
**Johannes-Müller-Strasse 3**
**W-5000 Köln 60 (DE)**

**EP 0 501 266 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind neue Reaktivfarbstoffe der Formel

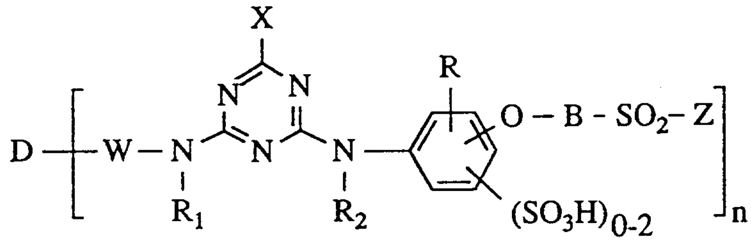

(I)

worin

- D Rest eines organischen Farbstoffes,
- W direkte Bindung oder Brückenglied,
- $R_1$ H oder Alkyl,
- $R_2$ H oder Alkyl,
- R H, $C_1$-$C_2$-Alkyl, Halogen, $C_1$-$C_4$-Alkoxy,
- B $C_3$-$C_6$ -Alkylen, gegebenenfalls verzweigt oder/und unterbrochen durch Stickstoff, Sauerstoff, $-SO_2-$ oder 1,4-Piperazinylen,
- X

F, Cl, 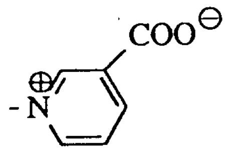

- Z $-CH=CH_2$, $-CH_2-CH_2-OSO_3H$, $-CH_2-CH_2-Cl$, $-CH_2-CH_2-Br$, $-CH_2-CH_2-S_2O_3H$, $-CH_2-CH_2-O-CO-CH_3$, $-CH_2-CH_2-OPO_3H_2$, $-CH_2-CH_2-OH$,
- n 1 oder 2,

bedeuten.

Aus EP-A-369 385 und EP-A-282 443 sind zwar bereits Reaktivfarbstoffe mit einem Vinylsulfonyl- und einem Halogentriazin-Reaktivrest bekannt, jedoch zeigen die bekannten Farbstoffe noch nicht allseits befriedigende anwendungstechnische Eigenschaften.

Als Reste D seien beispielsweise genannt: solche der Monoazo-, Polyazo-, Metallkomplexo-, Anthrachinon-, Phthalocyanin-, Formazan-, Azomethin-, Dioxazin-, Phenazin-, Stilben-, Triphenylmethan-, Xanthen-, Thioxanthon- oder Nitroarylreihe. Insbesondere kommt als Rest eines organischen Farbstoffs ein solcher in Frage, der eine oder mehrere wasserlöslichmachende Gruppen, insbesondere Sulfogruppen enthält.

Für die in der vorliegenden Anmeldung genannten Alkyl-, Aryl-, Aralkyl-, Hetaryl-, Alkoxy-, Halogen und Acylaminoreste sowie für die Brückenglieder gilt folgendes:

Unter Alkylgruppen werden insbesondere solche mit 1 bis 4 C-Atomen verstanden, die gegebenenfalls Substituenten aufweisen können, beispielsweise Halogen wie Cl oder Br, OH, CN oder $OSO_3H$.

Unter Arylgruppen werden insbesondere Phenylreste verstanden, die gegebenenfalls Substituenten aufweisen, beispielsweise Halogen wie Cl und Br, $C_1$-$C_4$-Alkyl, $C_1$-$C_4$-Alkoxy, $C_1$-$C_4$-Alkylsulfonyl, $NO_2$, CN, $CF_3$, $SO_3H$, COOH.

Unter Aralkylresten werden insbesondere Benzylreste verstanden, die gegebenenfalls die für die Phenylreste genannten Substituenten aufweisen können.

Unter Alkoxyresten werden insbesondere solche mit 1 bis 4 C-Atomen verstanden.

Unter Halogen wird insbesondere Chlor oder Fluor verstanden.

Unter Acylaminoresten werden insbesondere solche mit 1 bis 4 C-Atomen verstanden, wie Formylamino, Acetylamino, Propionylamino, n-Butyrylamino.

Geeignete Brückenglieder W sind beispielsweise:

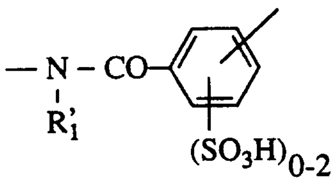

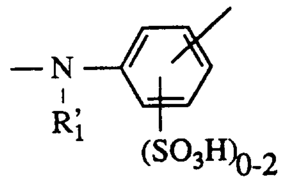

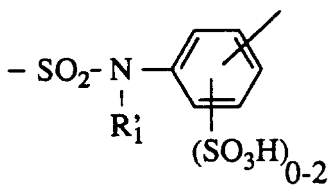

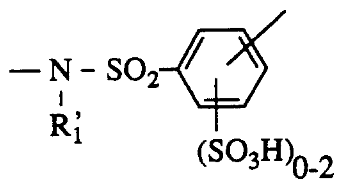

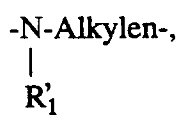

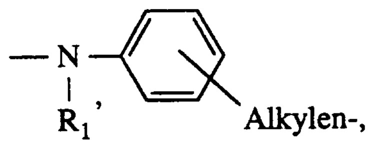

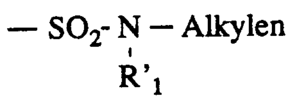

-O-Alkylen-, -Alkylen-, -Alkylen-CO-, -Alkylen-$SO_2$-,
wobei $R'_1$ für Wasserstoff oder Alkyl steht, und Alkylen einen Alkylenrest mit 1 bis 6 C-Atomen bedeutet.

Als Alkylenreste seien aufgeführt: $-CH_2-$, $-CH_2-CH_2-$,

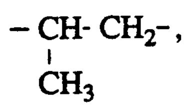

$-(CH_2)_3-$, $-(CH_2)_4-$, $-(CH_2)_6-$.

Geeignete aliphatische Brückenglieder B sind beispielsweise $-(CH_2)_3-$ ,

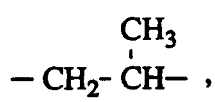

$-(CH_2)_4-$ ,

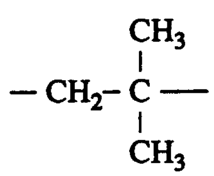

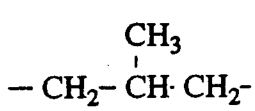 , 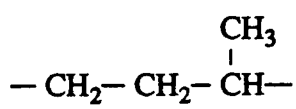 , 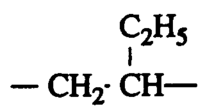 ,

$-(CH_2)_5-$ , $-(CH_2)_6-$ , $-CH_2-CH_2O-CH_2-CH_2-$ ,

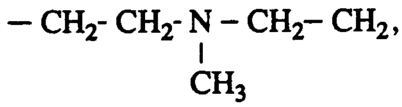

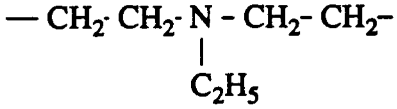 ,

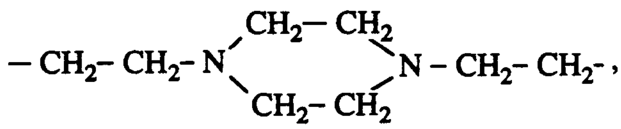

$-CH_2-CH_2-SO_2-CH_2-CH_2-$ .

Die vorliegende Erfindung betrifft weiterhin die Herstellung der Reaktivfarbstoffe der Formel (I) nach an sich bekannten Methoden:

a) entweder durch Kondensation von Farbstoffen der Formel

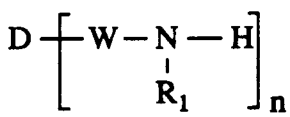

(II)

worin

D, W, $R_1$ und n die oben angegebene Bedeutung haben,

mit n-Molen Trihalogentriazinen der Formel

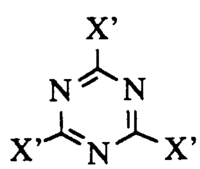

(III)

worin

X' = F, Cl

zu Verbindungen der Formel

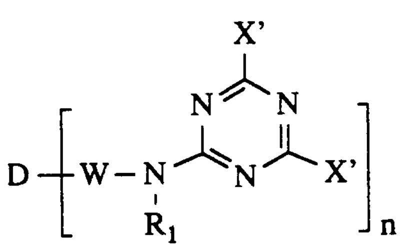

(IV)

und weitere Kondensation der Verbindungen der Formel (IV) mit n-Molen der Komponenten der Formel

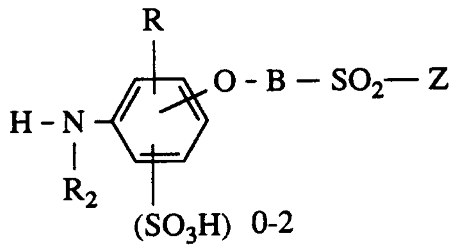

(V)

worin
$R_2$, R, B und Z die oben angegebene Bedeutung haben,
oder
b) in umgekehrter Reihenfolge durch Kondensation von Trihalogentriazinen der Formel (III) mit den Komponenten der Formel (V) zu den Primärkondensationsprodukten

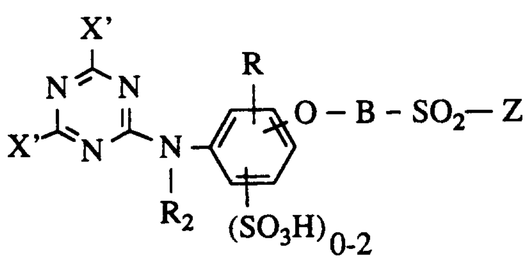

(VI)

worin
X', $R_2$, R, B und Z die oben angegebene Bedeutung haben,
und weitere Kondensation mit n-Molen der Verbindungen der Formel (VI) mit den Farbstoffen der Formel (II),
oder
c) durch Kondensation geeigneter Vorprodukte mit den Trihalogentriazinen (III) und den Komponenten der Formel (V) bzw. durch Kondensation geeigneter Vorprodukte mit den Primärkondensationsprodukten der Formel (VI) und anschließender Farbstoffsynthese,
und
d) gegebenenfalls durch Austausch des Halogenatoms X' gegen den Rest der Pyridin-3-carbonsäure im synthetisierten Halogentriazinfarbstoff.

Die Kondensationen der Ausgangskomponenten mit den Trihalogentriazinen erfolgen unabhängig von der Reihenfolge in wäßrigem oder organisch-wäßrigen Medien in Anwesenheit von säurebindenden Mitteln. In Abhängigkeit von der Natur der Ausgangskomponenten erfolgt dabei die erste Stufe der Kondensation in pH-Bereichen von 2 bis 8, vorzugsweise 3 bis 7, und bei Temperaturen von 0 bis 40 ° C, vorzugsweise 0 bis 25 ° C. Der Austausch des zweiten Halogenatoms des Triazins vollzieht sich im pH-Bereich von 4 bis 10, vorzugsweise 5 bis 9, und im Temperaturbereich von 0 bis 60 ° C, vorzugsweise 0 bis 30 ° C.

Säurebindende Mittel sind beispielsweise Carbonate, Hydroxide oder Phosphate wie Natriumcarbonat, Natriumhydrogencarbonat, verdünnte Natronlauge, Di- oder Trinatriumphosphat oder Natriumfluorid.

Soll die Kondensation bzw. die Farbstoffsynthese direkt zu einer Farbstofflösung bzw. zu einer flüssigen Farbstoffpräparation führen, kann die Verwendung von Lithiumcarbonaten oder Lithiumhydroxid vorteilhaft sein, gegebenenfalls zusammen mit Lösungsvermittlern und/oder stabilisierenden Puffersystemen. Andere Umwandlungsreaktionen der Farbstoffe oder deren Vorprodukte wie Metallisierungsreaktionen, Sulfierungen oder Einführung von Acylaminogruppierungen können im allgemeinen in beliebigen Stufen der Farbstoffsynthesen vorgenommen werden.

Besonders wertvolle Farbstoffe dieser Reihe sind wasserlösliche Azo-, Formazan-, Anthrachinon-, Triphendioxazin- und Phthalocyanin-Farbstoffe, und insbesondere solche, die Sulfonsäure- und/oder Carbonsäuregruppen aufweisen. Die Farbstoffe können sowohl metallfrei als auch metallhaltig sein, wobei unter den Metallkomplexen die Kupfer-, Nickel-, Chrom- und Kobalt-Komplexe bevorzugtes Interesse besitzen.

Geeignete Farbstoffreste D bzw. die den Farbstoffen der Formel (I) zugrundeliegenden aminogruppenhaltigen Farbstoffe sind in der Literatur in sehr großer Zahl beschrieben. Beispielhaft seien hier erwähnt: EP-A 54 515, EP-A 69 703, EP-A 70 807, DE-A 3 222 726, DE-A 2 650 555, DE-A 3 023 855, DE-A 2 847 938, DE-A 2 817 780, GB-A 2 057 479, DE-A 2 916 715, DE-A 2 814 206, DE-A 3 019 936, EP-A 45 488 sowie Venkataraman: The Chemistry of Synthetic Dyes, BD. VI, Kapitel II, S. 211-325, New York, London; 1972.

Wichtige Azofarbstoffe sind beispielsweise solche der Benzol-azo-napthalinreihe, der Bis-(Benzolazo)-naphthalinreihe, der Benzol-azo-5-pyrazolonreihe, der Benzol-azo-benzolreihe, der Naphtalin-azo-benzolreihe, der Benzol-azo-aminonaphthalinreihe, der Naphthalin-azo-naphthalinreihe, der Naphthalin-azo-pyrazolon-5-Reihe,der Benzol-azo-pyridonreihe, der Benzol-azo-aminopyridinreihe, der Naphthalin-azo-pyridonreihe, der Naphthalin-azo-amino-pyridinreihe, und der Stilben-azo-benzolreihe, wobei auch hier die sulfonsäuregruppenhaltigen Farbstoffe bevorzugt sind. Im Falle von Metallkomplexazofarbstoffen befinden sich die metallkomplexgebundenen Gruppen vorzugsweise in den o-Stellungen zur Azogruppe, z.B. in Form von o,o'-Dihydroxy-, o-Hydroxy-o'-carboxy, o-Carboxy-o'-amino- und o-Hydroxy-o'-amino-azogruppierungen.

Bevorzugte Farbstoffe sind die der folgenden Formeln (VII) bis (XXIII), worin generell A einen Rest der Formel

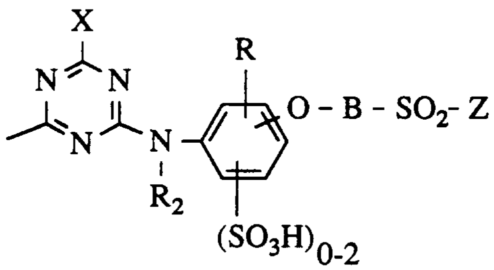

(VIa)

beinhaltet und X, $R_2$, R, B und Z die oben angegebene Bedeutung haben.

Bevorzugte Farbstoffe sind die der folgenden Formeln (VII) bis (XXIII)

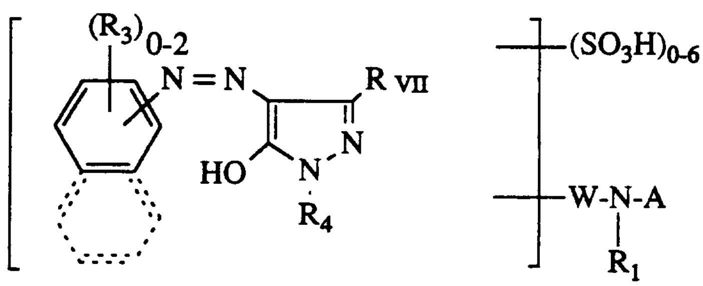

(VII)

| | |
|---|---|
| $R_3$ | Alkyl, Alkoxy, Halogen, |
| $R_4$ | H, Alkyl, Aryl, Hetaryl, Aralkyl |
| $R_{VII}$ | COOH, $CH_3$ |

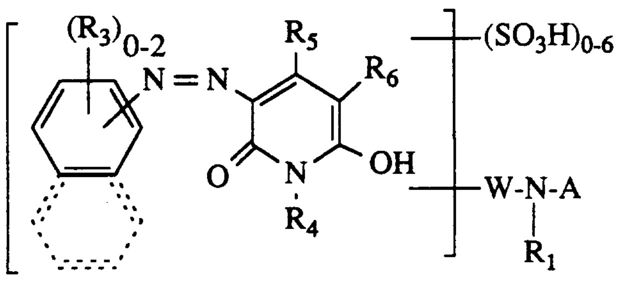

(VIII)

| | |
|---|---|
| $R_3$ | Alkyl, Alkoxy, Halogen, |
| $R_4$ | Alkyl, Aralkyl, Aryl, |
| $R_5$ | Alkyl, Aryl, Aralkyl, Hetaryl, |
| $R_6$ | H, $COOR_3$, |

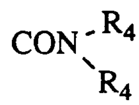 ,

CN, $CH_2$-$SO_3H$, $SO_3H$,

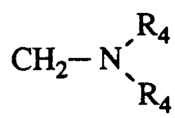

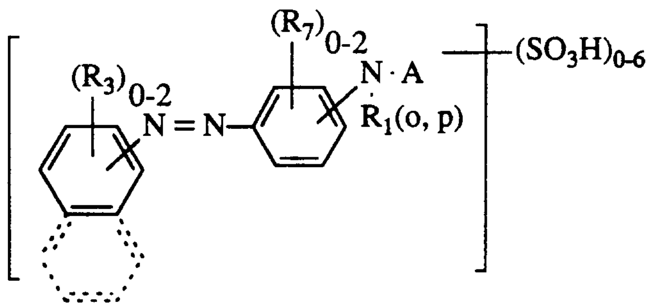

(IX)

| | |
|---|---|
| $R_3$ | Alkyl, Alkoxy, Halogen |
| $R_7$ | H, Alkyl, Alkoxy, Acylamino, Amino |
| o, p | in o- bzw. p-Stellung zur Azo-Gruppe |

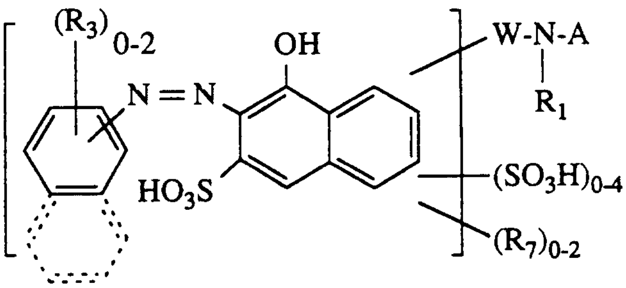

(X)

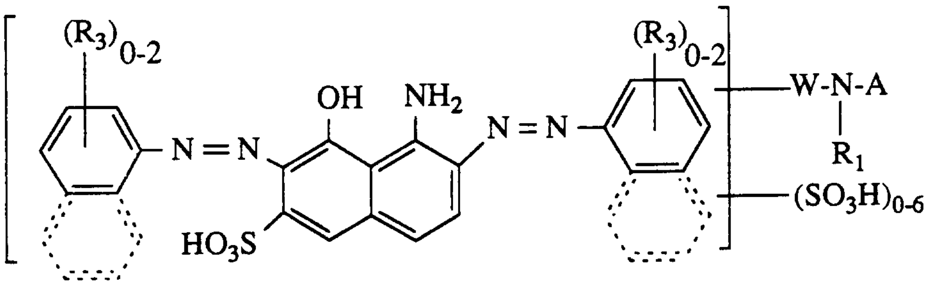

(XI)

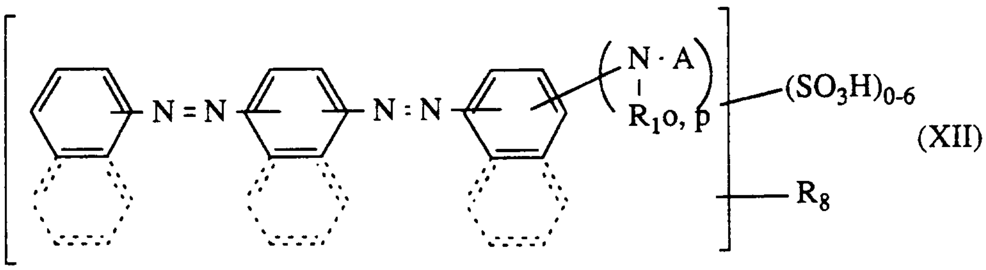

(XII)

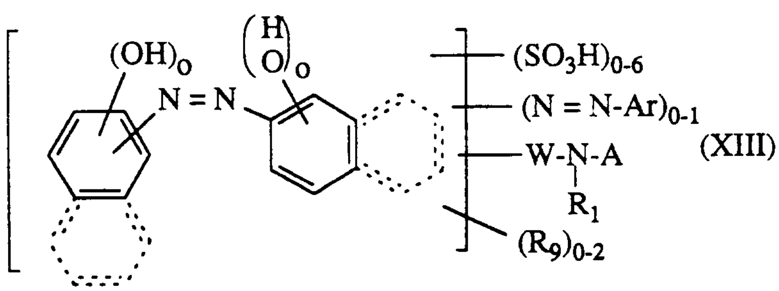

(XIII)

| | |
|---|---|
| $R_3$ | Alkyl, Alkoxy, Halogen |
| $R_7$ | Alkyl, Alkoxy, Arylamino |
| $R_8$ | Alkyl, Alkoxy, Acylamino, Ureido |
| o | in ortho-Stellung zur Azogruppe |
| $R_9$ | $R_8$, $NO_2$ |

Azoderivate dieses Typs können zu 1:1 (Cu, Ni) oder 1:2 (Cr, Co)-Metallkomplexen (symmetrisch und unsymmetrisch) umgesetzt werden.

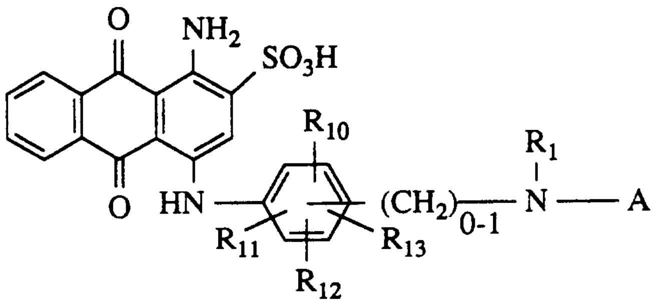

(XIV)

$R_{10}$ H, $C_1$-$C_4$-Alkyl, Halogen (Cl, Br) $C_1$-$C_4$-Alkoxy, Carboxy, $SO_3H$,
$R_{11}$ H, $C_1$-$C_4$-Alkyl, $SO_3H$,
$R_{12}$ H, $C_1$-$C_4$-Alkyl, Cl, Br,
$R_{13}$ H, $C_1$-$C_4$-Alkyl,

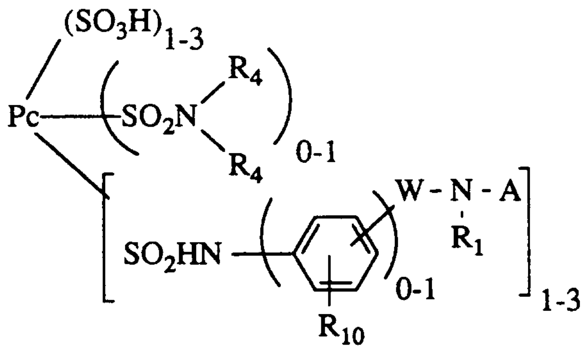

(XV)

$R_4$ H, Alkyl,
$R_{10}$ H, $SO_3H$, COOH
Pc Cu oder Ni-Phthalocyaninrest

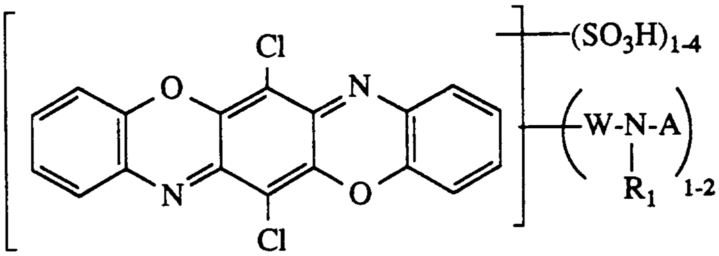 (XVI)

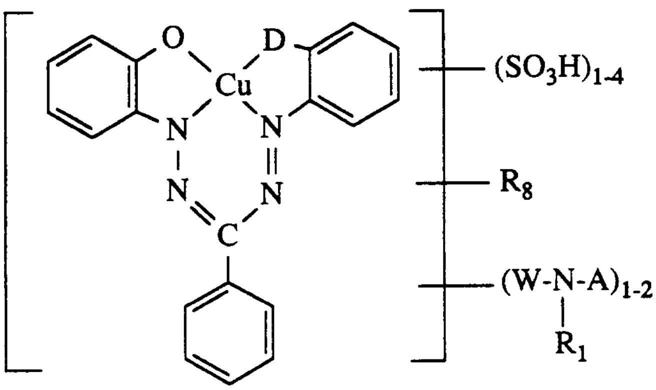 (XVII)

R8 Alkyl, Halogen, Alkylsulfonyl
D zur Komplexbildung befähigter Substituent wie z.B. OH, COOH,

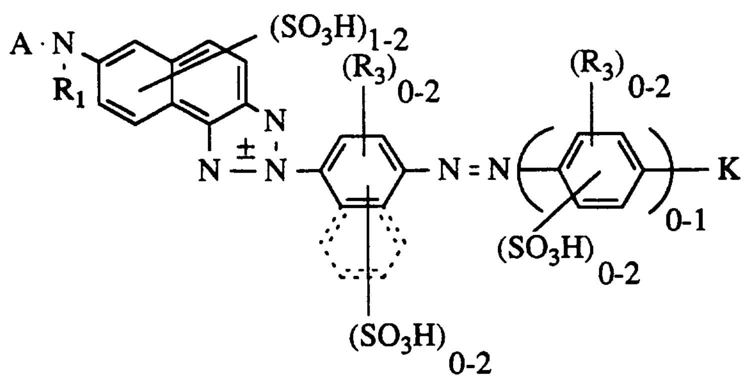 (XVIII)

R3 Alkyl, Alkoxy, Halogen
K Rest einer Kupplungskomponente, wobei als Kupplungskomponenten insbesondere solche der Pyridon-, Pyrazolon-, Acetessigsäurearylid- und Naphtholsulfonsäure-Reihe in Frage kommen.

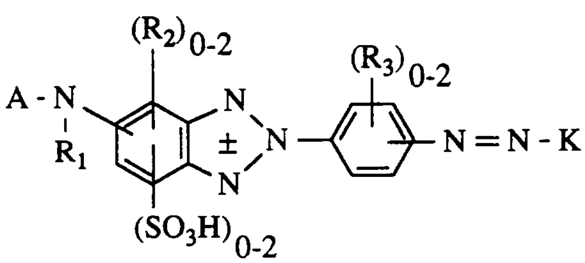 (XIX)

mit

| | |
|---|---|
| $R_2$ | Alkyl, Halogen |
| $R_3$ | Alkyl, Alkoxy |
| K | Rest einer Kupplungskomponente |

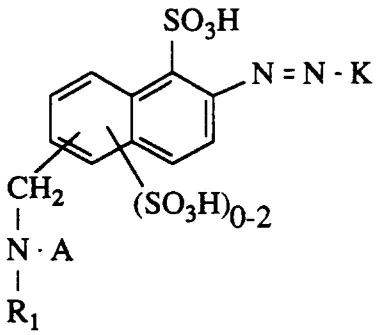

(XX)

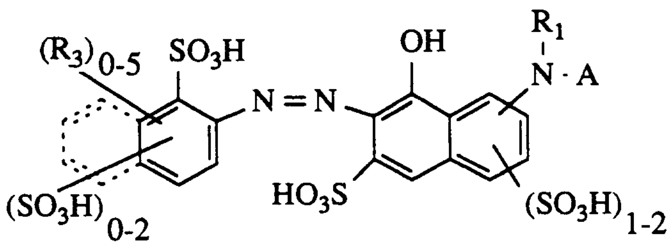

(XXI)

$R_3$ Alkyl, Alkoxy, Arylamino

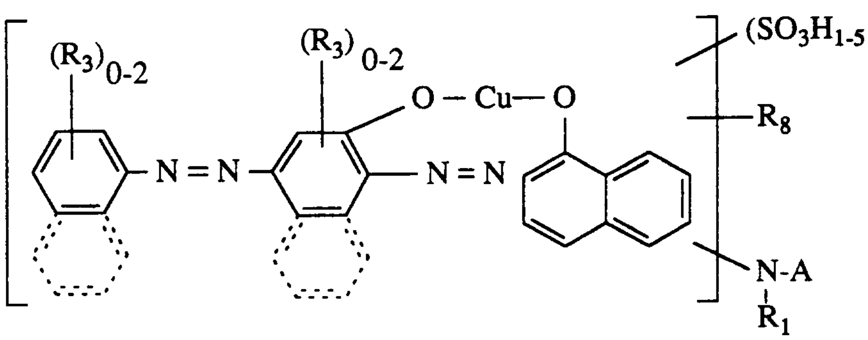

(XXII)

$R_3$ Alkyl, Alkoxy

$R_8$ H, $NH_2$, Arylamino

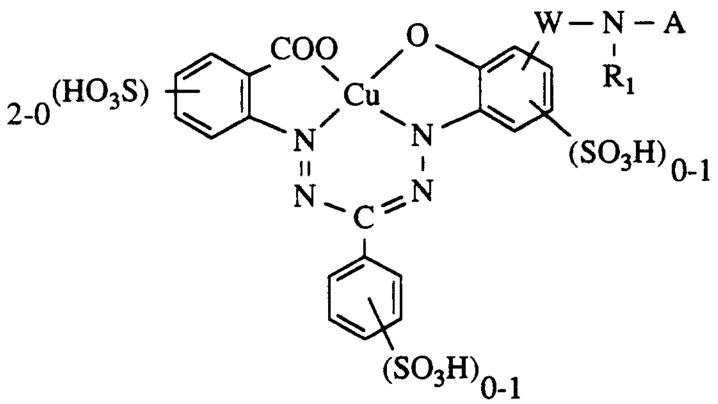

(XXIII)

$R_3$ Alkyl, Alkoxy
$R_8$ H, $NH_2$, Arylamino

Verbindungen der Formel (V) sowie Methoden zu ihrer Herstellung sind in der Europäischen Patentschrift 0 355 492 beschrieben.

Die Reaktivfarbstoffe der Formel (I) eignen sich zum Färben und Bedrucken der verschiedensten Substrate wie Seide, Leder, Wolle, synthetischen Polyamidfasern, insbesondere aber cellulosehaltiger Materialien faseriger Struktur wie Leinen, Zellstoff, regenerierte Zellulose und vor allem Baumwolle. Sie eignen sich sowohl für das Ausziehverfahren als auch zum Färben nach den üblichen Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Die Reaktivfarbstoffe der Formel (I) zeichnen sich durch hohe Reaktivität und ausgezeichnetes Fixiervermögen aus. Aufgrund ihrer Bifunktionalität ergeben sie auch aus langer Flotte hohe Fixierausbeuten. Sie sind charakterisiert durch relative Unabhängigkeit der Ergiebigkeit von der Färbetemperatur und können daher nach dem Ausziehverfahren bei niedrigen bis mittleren Färbetemperaturen eingesetzt werden. Beim Klotz-Dämpf-Verfahren erfordern sie nur kurze Dämpfzeiten. Sie ergeben Färbungen hoher Farbstärke mit guten Licht- und Naßechtheiten.

Beispiel 1

78,4 g 1-Amino-8-hydroxynaphthalin-3,6-disulfonsäure als Mononatriumsalz werden in 800 ml Wasser bei pH 6,5 gelöst. Nach Abkühlung auf 0 °C läßt man zügig 21,5 ml Cyanurfluorid zulaufen und hält den pH-Wert mit 20 %iger Sodalösung auf 4,0 bis 4,5, die Temperatur weiter um 0 °C.

78 g Komponente der Formel

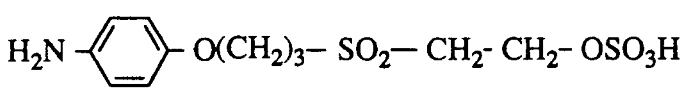

hergestellt nach den Angaben der Europäischen Patentschrift 0 355 492, werden in 500 ml Wasser durch Zugabe von 60 ml 10 %iger Lithiumhydroxidlösung bis zum pH-Wert von 6,9 bei 0 bis 3 °C gelöst. Man gibt beide Lösungen zusammen und hält in dem Reaktionsgemisch dem pH-Wert mit 2 n Sodalösung auf 5,0 bis 5,2.

51,3 g 2-Aminonaphthalin-1-sulfonsäure werden in 575 ml Wasser durch Neutralisation mit Natronlauge bei pH 6,5 und 0 °C gelöst. Man gibt 57,5 ml konzentrierte Salzsäure in einem Guß zu und diazotiert anschließend mit 57,5 ml 4 n Natriumnitrillösung. Nach einstündigem Nachrühren wird gegebenenfalls überschüssiges Nitrit mit Amidosulfonsäurelösung zerstört.

Die erhaltene Diazosuspension wird nun in die oben hergestellte Lösung bei 0 bis 5 °C eingetragen und dabei der pH-Wert in der Mischung mit 2 n Sodalösung auf 7,0 gehalten. Nach 3 Stunden läßt man die Temperatur auf 20 °C ansteigen und rührt bis zur Beendigung der Kupplung nach. Der erhaltene Farbstoff der Formel

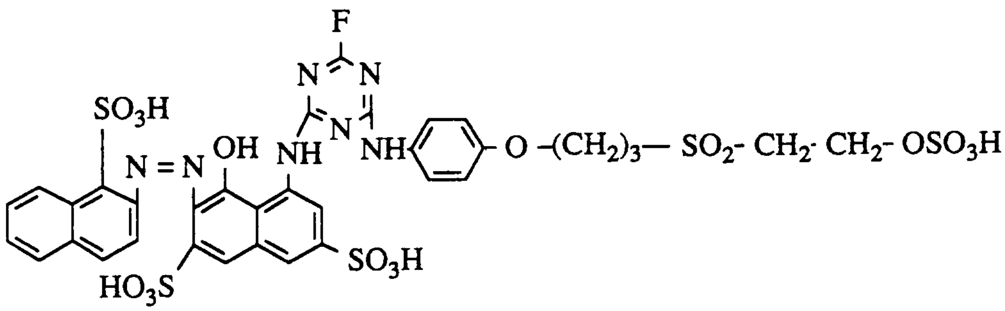

wird mit Kaliumchlorid ausgesalzen, isoliert und nach Zusatz von etwas Phosphatpuffer bei 50 °C im Vakuum getrocknet.

Er färbt Baumwolle aus langer Flotte mit einer optimalen Färbetemperatur von 50 °C in blaustichig roten Tönen mit hohen Fixierausbeuten.
$\lambda_{max}$ = 545 nm in Wasser.

Beispiel 2

78,4 g 1-Amino-8-hydroxynaphthalin-3,6-disulfonsäure werden wie in Beispiel 1 mit 21,5 ml Cyanurfluorid umgesetzt. Man gibt anschließend eine auf 0 bis 3 °C gekühlte Lösung von 78 g der Komponente

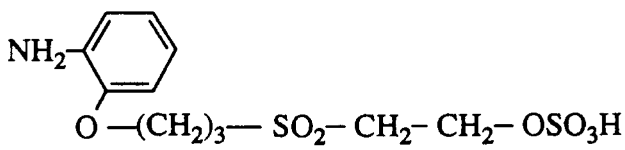

erhalten durch Neutralisation in 400 ml Wasser bis zum pH-Wert 6,5, innerhalb von einigen Minuten zu und hält den pH-Wert mit 2 n Sodalösung auf 5,2.

Wenn die Kondensation beendet ist, setzt man eine Diazosuspension zu, die man nach Beispiel 1 aus 51,3 g 2-Aminonaphthalin-1-sulfonsäure herstellt. Dabei hält man im Kupplungsgemisch den pH-Wert mit Sodalösung auf 7,0 bis 7,5. Man läßt die Temperatur in 2 1/2 Stunden allmählich auf 10 °C und dann über Nacht auf 20 °C steigen, wobei man den pH-Wert weiter auf 7,0 hält. Der teilweise ausgefallene Farbstoff wird mit Natriumchlorid weiter ausgesalzen, abgesaugt und mit 25 %iger Natriumchloridlösung gewaschen. Er wird nach Zusatz von Phosphatpuffer bei 50 °C im Vakuum getrocknet.

Er entspricht der Formel

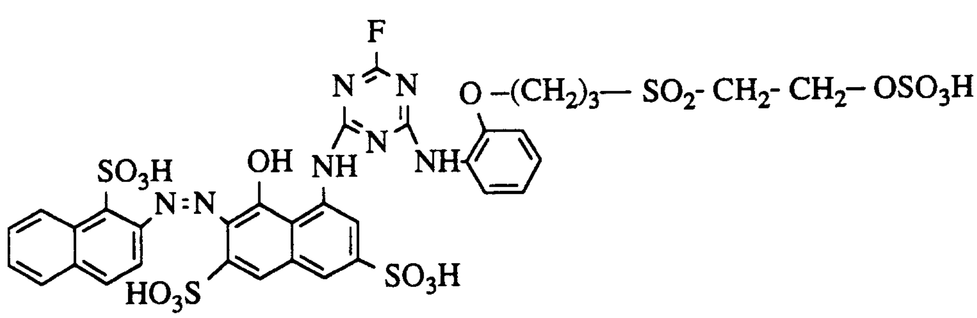

und färbt Baumwolle in blaustichig roten Tönen mit einer optimalen Färbetemperatur von 50 °C und hoher Fixierausbeute.
$\lambda_{max}$ = 545 nm in Wasser.

Beispiel 3

41,7 g Azoverbindung der Formel

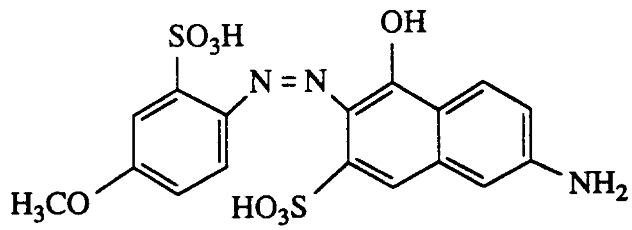

werden in 800 ml Wasser durch Einstellen eines pH-Wertes von 4,5 mit 2 n Natronlauge gelöst. Nach Abkühlung der Lösung auf 0 ° C tropft man in 10 Minuten 8,2 ml Cyanurfluorid ein und hält den pH-Wert mit 2 n Sodalösung auf 4,5 bis 4,7. Man rührt noch 10 Minuten nach und setzt dann eine neutrale Lösung von 40,5 g Komponente der Formel

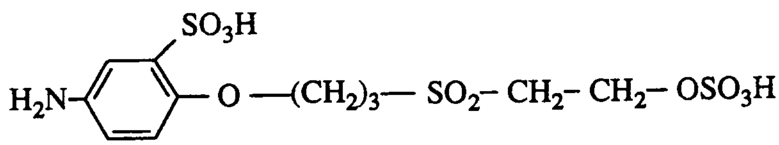

in 150 ml Wasser hinzu, die aus der sulfo- und sulfatogruppenfreien Verbindung durch Behandlung in 20 %igem Oleum und Aufarbeitung entsprechend den Angaben der Europäischen Patentschrift 0 355 492 gewonnen wird. Während der Zudosierung wird die Temperatur weiter auf 0 bis 2 ° C und der pH-Wert mit Sodalösung auf 5,2 bis 5,5 gehalten. Nach 2 Stunden läßt man die Temperatur auf 20 ° C ansteigen. Ist die Kondensation beendet, wird der Farbstoff mit Kaliumchlorid ausgesalzen, abgesaugt, mit 15 %iger Kaliumchloridlösung gewaschen und nach Versatz mit etwas Phosphatpufferlösung bei 50 ° C im Vakuum getrocknet.

Der Farbstoff der Formel

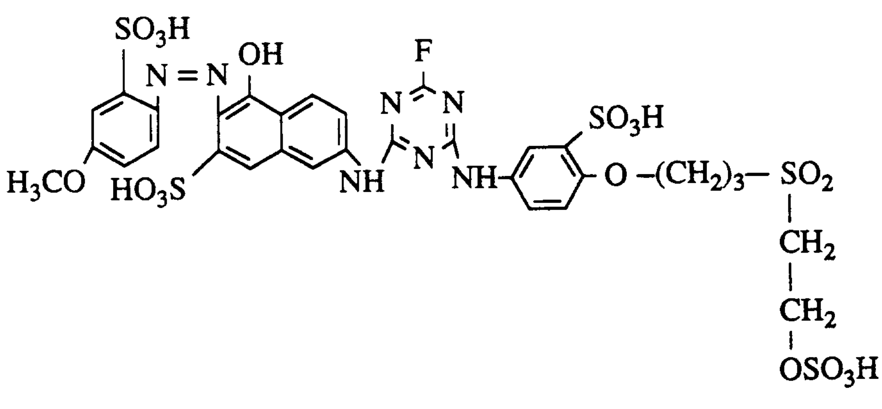

färbt Baumwolle aus langer Flotte mit einer optimalen Färbetemperatur von 50 ° C und hoher Fixierausbeute in Scharlachtönen.
$\lambda_{max}$ = 501 nm in Wasser.

Beispiel 4

78,4 g 1-Amino-8-hydroxynaphthalin-3,6-disulfonsäure werden mit 21,5 ml Cyanurfluorid nach den Angaben des Beispiels 1 kondensiert. Man läßt in 10 Minuten eine auf 0 bis 3 ° C gekühlte und auf pH 5

gestellte Lösung von 41,3 g Komponente der Formel

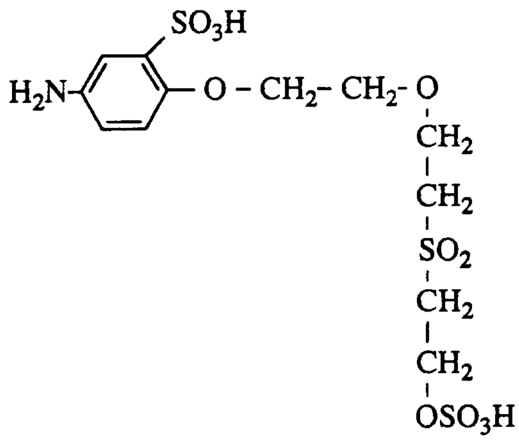

in 130 ml Wasser zulaufen und hält den pH-Wert mit 2 n Sodalösung auf 5,2. Nach 2 1/2 bis 3 Stunden ist die Kondensation beendet.

51,3 g 2-Aminonaphthalin-1-sulfonsäure werden nach den Angaben des Beispiels 1 diazotiert und die Diazosuspension zu obiger Kondensationslösung portionsweise zugegeben. Dabei hält man im Reaktionsgemisch den pH-Wert auf 6,5. Nach dem Eintragen hält man den pH-Wert mit verdünnter Sodalösung auf 7,0 und kühlt weiter. Man läßt über Nacht die Temperatur auf 20 °C ansteigen und salzt dann den Farbstoff aus.

Er wird nach Pufferung bei 50 °C im Vakuum getrocknet.

Der Farbstoff der Formel

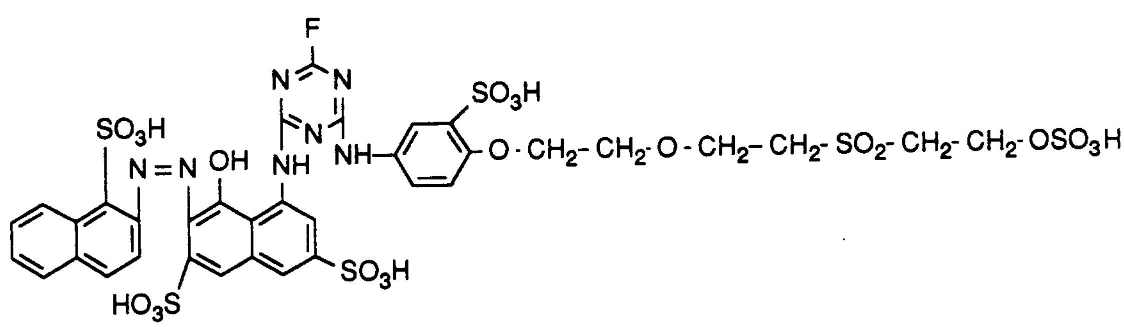

färbt Baumwolle aus langer Flotte mit einer optimalen Färbetemperatur von 40 °C und hoher Fixierausbeute in blaustichig roten Tönen.

$\lambda_{max}$ = 545 nm in Wasser.

Beispiel 5

Nach den Angaben des Beispiels 1 wird aus 78,4 g 1-Amino-8-hydroxynaphthalin-3,6-disulfonsäure, 21,5 ml Cyanurfluorid und 78 g 3-(4-Aminophenoxy)-propyl-$\beta$-sulfatoethylsulfon eine Lösung der Kupplungskomponente

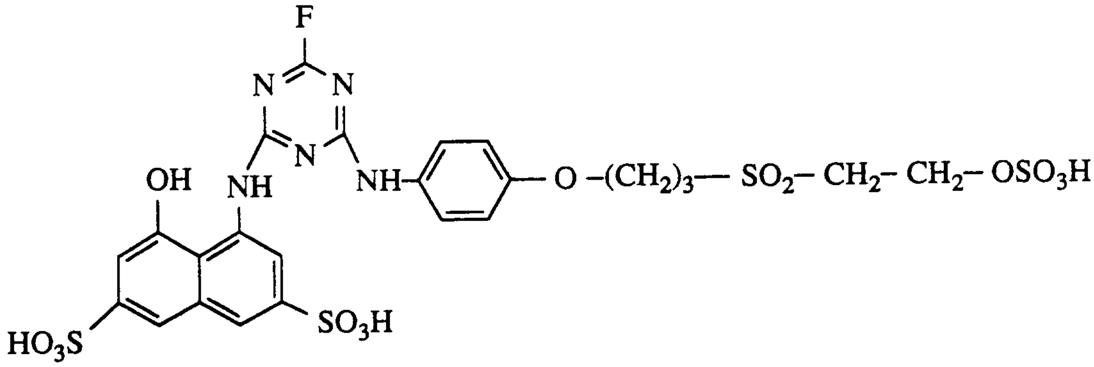

hergestellt.

39,8 g 2-Aminobezolsulfonsäure werden in 300 ml Wasser und 112 ml 2 n Natronlauge bei pH 6 gelöst. Es werden 57,5 ml 4 n Natriumnitritlösung zugesetzt. Die erhaltene Lösung läßt man in 30 Minuten in eine vorgelegte Mischung von 200 ml Wasser, 60 ml konzentrierte Salzsäure und 2,5 ml 4 n Natriumnitritlösung bei 0 bis 2 ° C einlaufen. Man rührt anschließend 1 Stunde nach, beseitigt etwas überschüssige salpetrige Säure mit Amidosulfonsäure und trägt die erhaltene Diazosuspension bei 0 bis 3 ° C in die obige Lösung der Kupplungskomponente ein, wobei man in der entstehenden Mischung durch gleichzeitige Zugabe von 2 n Sodalösung den pH-Wert auf 6,5 hält. Nach zweistündigem Rühren unter Kühlung läßt man die Temperatur auf 20 ° C ansteigen.

Nach beendeter Kupplung wird der Farbstoff mit Kaliumchlorid ausgesalzen, abgesaugt, mit 20 %iger Kaliumchloridlösung gewaschen und nach Pufferung bei 50 ° C im Vakuum getrocknet.

Er entspricht der Formel

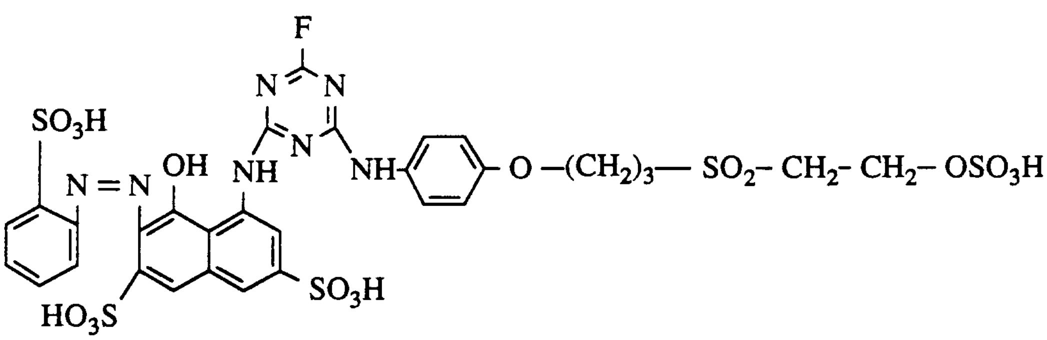

und färbt Baumwolle aus langer Flotte bei einer optimalen Färbetemperatur von 50 ° C mit guten Fixierausbeuten in roten Tönen.

$\lambda_{max}$ = 532 nm in Wasser.

Beispiel 6

78,4 g 1-Amino-8-hydroxynaphthalin-3,6-disulfonsäure werden mit 21,5 ml Cyanurfluorid nach den Angaben des Beispiels 1 kondensiert.

Man läßt in 10 Minuten eine auf 0 bis 3 ° C gekühlte und auf pH 5 gestellte Lösung von 84,9 g

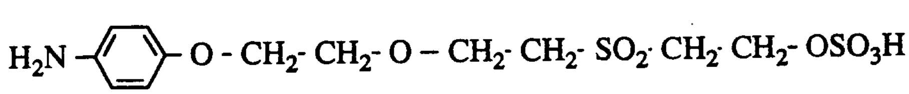

in 250 ml Wasser zulaufen und hält dabei mit 2 n Sodalösung den pH-Wert auf 5,2.

Hergestellt wird die Lösung durch Sulfatierung von 2-[2-(4-Aminophenoxyethoxy)-ethoxy]-2-hydroxyethylsulfon in 2,5 Volumina 96 %iger Schwefelsäure bei 0 bis 3 °C, Einrühren in Eis, Neutralisation der Lösung bis pH 5 mit Calciumcarbonat, Filtration des Calciumsulfates und Einengen des Filtrates.

69,7 g 2-Aminonaphthalin-1,5-disulfonsäure werden in 500 ml Wasser durch Zugabe von Natronlauge bis zum pH 7 gelöst. Man kühlt die Lösung ab auf 0 °C, versetzt sie mit 67,5 ml 4 n Natriumnitritlösung und 300 g Eis und setzt in einem Guß 60 ml konzentrierte Salzsäure zu. Nach einstündigem Nachrühren ist die Diazotierung beendet. Man gibt bis zum Verschwinden der Nitritanzeige Amidosulfonsäure zu.

In die vorgelegte Lösung der oben hergestellten Kupplungskomponente trägt man die Diazoniumsuspension bei 0 °C ein und hält gleichzeitig den pH-Wert im Kupplungsgemisch mit verdünnter Sodalösung auf 7,0. Nach 3 Stunden läßt man die Temperatur auf 20 °C ansteigen und salzt nach beendeter Kupplung den Farbstoff aus. Er wird abgesaugt, gewaschen und nach Zufügen von etwas Phosphatpuffer getrocknet. Der Farbstoff der Formel

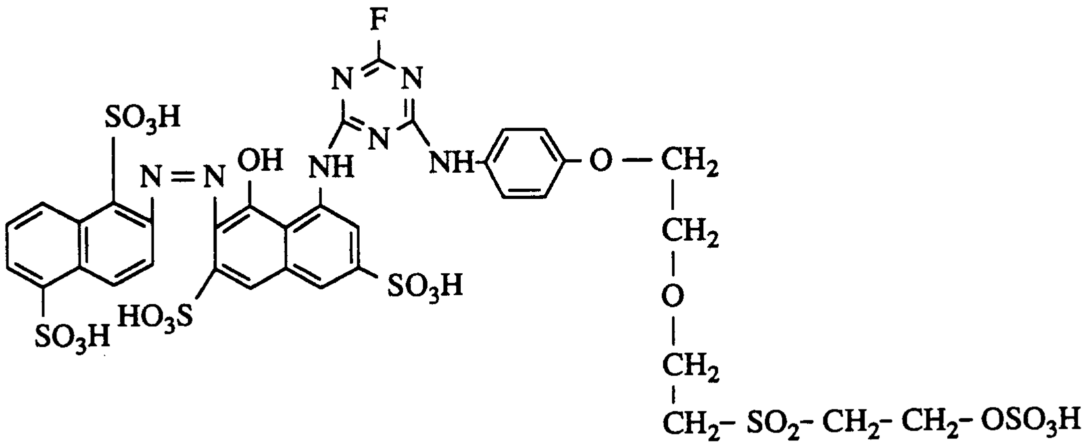

färbt Baumwolle aus langer Flotte bei einer optimalen Färbetemperatur von 50 °C mit guten Fixierausbeuten in blaustichig roten Tönen.

$\lambda_{max}$ = 541 nm in Wasser.

Weitere rote bifunktionelle Reaktivfarbstoffe erhält man durch Umsetzung der in den folgenden Beispielen 7-23 genannten Komponenten.

| Nr. | Diazokomponente | 1-Amino-8-hydroxy-naphthalin-disulfos. | Trihalogen-triazin | 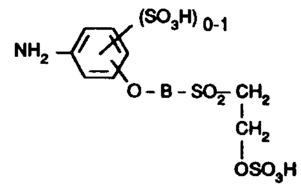 | Farbton | $\lambda_{max}(H_2O)$ |
|---|---|---|---|---|---|---|
| 7 | 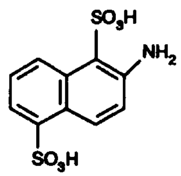 | 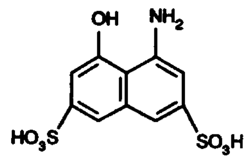 | 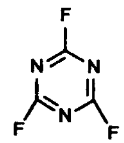 | 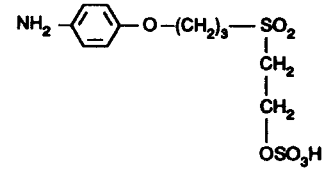 | blaustichig rot | 540 nm |
| 8 | 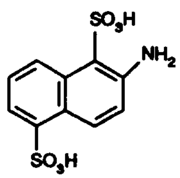 | 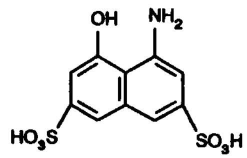 | 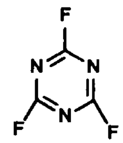 | 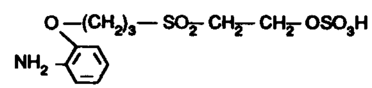 | blaustichig rot | 546 nm |
| 9 | 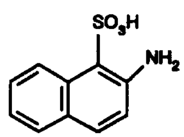 | 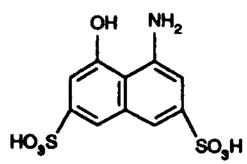 | 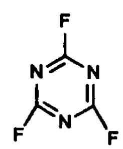 | 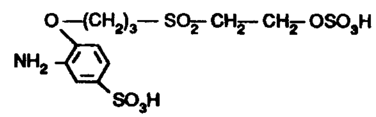 | blaustichig rot | 546 nm |
| 10 | 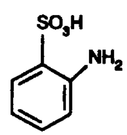 | 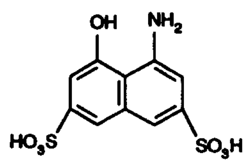 | 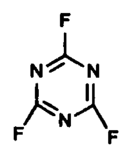 | 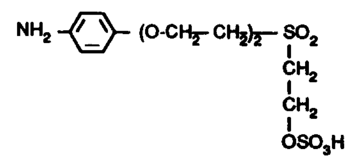 | rot | 532 nm |

| Nr. | Diazokomponente | 1-Amino-8-hydroxy-naphthalin-disulfos. | Trihalogen-triazin | 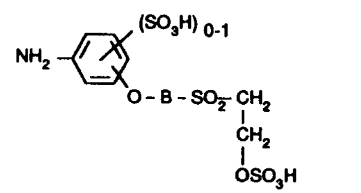 | Farbton | $\lambda_{max}(H_2O)$ |
|---|---|---|---|---|---|---|
| 11 | 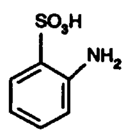 | 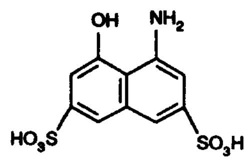 | 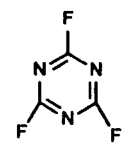 | 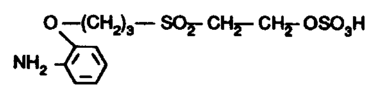 | rot | 533 nm |
| 12 | 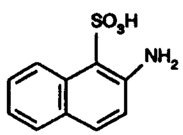 | 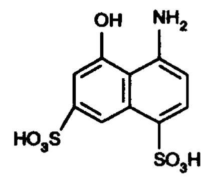 | 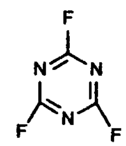 | 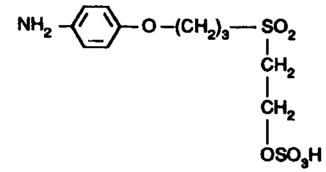 | blausti-chig rot | |
| 13 | 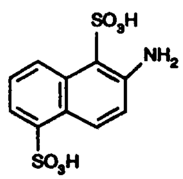 | 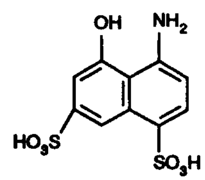 | 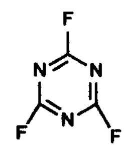 | 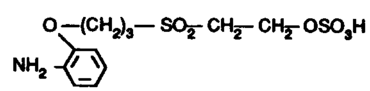 | blausti-chig rot | |
| 14 | 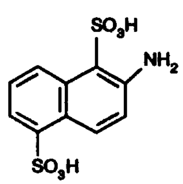 | 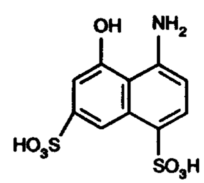 | 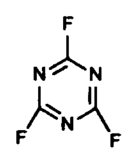 | 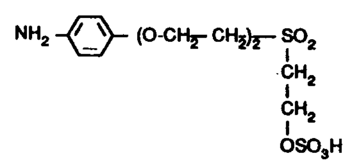 | blausti-chig rot | |

| Nr. | Diazokomponente | 1-Amino-8-hydroxy-naphthalin-disulfos. | Trihalogen-triazin | 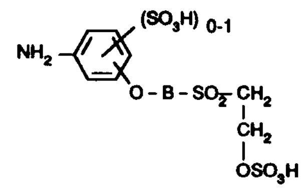 | Farbton | $\lambda_{max}(H_2O)$ |
|---|---|---|---|---|---|---|
| 15 | 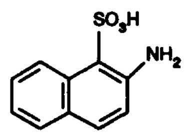 | 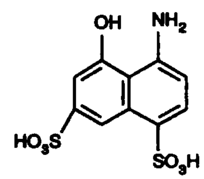 | 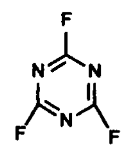 | 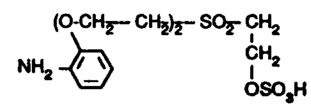 | blaustichig rot | |
| 16 | 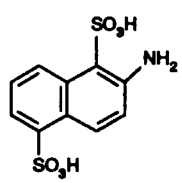 | 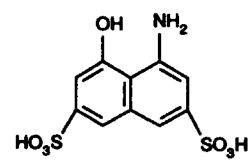 | 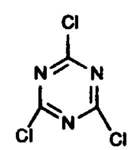 | 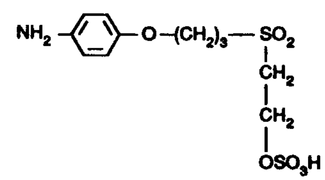 | blaustichig rot | 541 nm |

| Nr. | Diazokomponente | 1-Amino-8-hydroxy-naphthalin-disulfos. | Trihalogen-triazin | 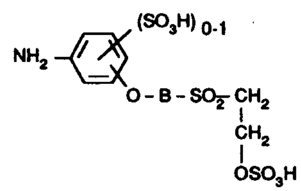 | Farbton | $\lambda_{max}(H_2O)$ |
|---|---|---|---|---|---|---|
| 19 | 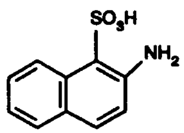 | 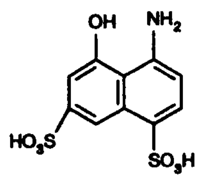 | 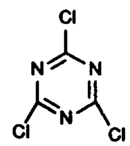 | 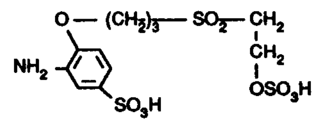 | blausti-chig rot | |
| 20 | 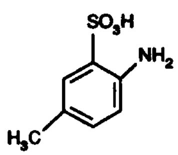 | 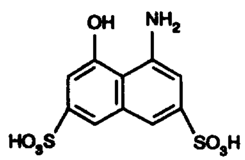 | 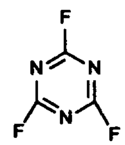 | 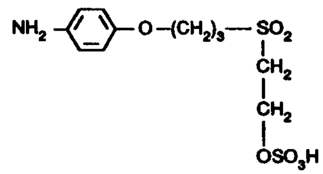 | blausti-chig rot | |

| Nr. | Diazokomponente | 1-Amino-8-hydroxy-naphthalin-disulfos. | Trihalogen-triazin | 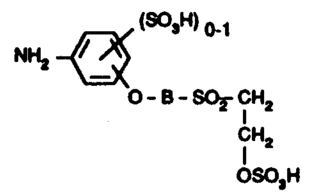 | Farbton | $\lambda_{max}(H_2O)$ |
|---|---|---|---|---|---|---|
| 23 | 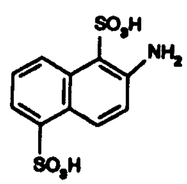 | 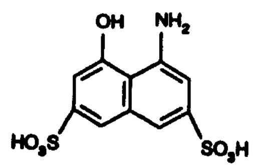 | 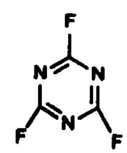 | 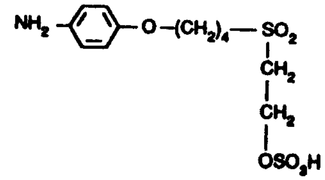 | blaustichig rot | 544 nm |

Beispiel 24

24,5 g Azoverbindung der Formel

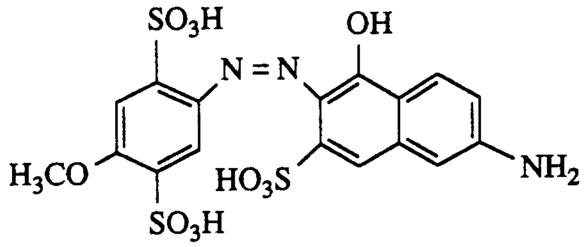

werden in 340 ml Wasser bei pH 7 gelöst. Nach Abkühlung auf 0 bis 2 °C stellt man den pH-Wert mit verdünnter Salzsäure auf 4,5 und läßt dann sofort 4,3 ml Cyanurfluorid in 4 Minuten zutropfen. Der pH-Wert wird mit 2 n Sodalösung weiter auf 4,5 gehalten. 15 Minuten später ist die Umsetzung beendet.
Man gibt eine auf pH 5 gestellte Lösung von 18,5 g Komponente der Formel

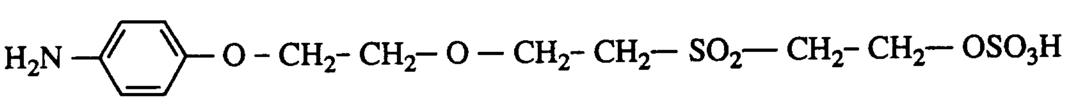

in 50 ml Wasser hinzu und hält den pH-Wert im Reaktionsgemisch auf 5,0 bis 5,5. Nach 2 Stunden läßt man die Temperatur auf 20 °C ansteigen.
Man setzt 1 g primäres Natriumphosphat hinzu, stellt den pH-Wert mit verdünnter Natronlauge auf 5,5 und dampft anschließend die Lösung im Rotationsverdampfer bei 35 bis 40 °C im Vakuum ein. Man erhält ein orangefarbenes Pulver, das Baumwolle aus langer Flotte mit einer optimalen Färbetemperatur von 40 bis 60 °C und ausgezeichneter Fixierausbeute in rotstichigen Orangetönen färbt.

Der erhaltene Farbstoff hat die Formel

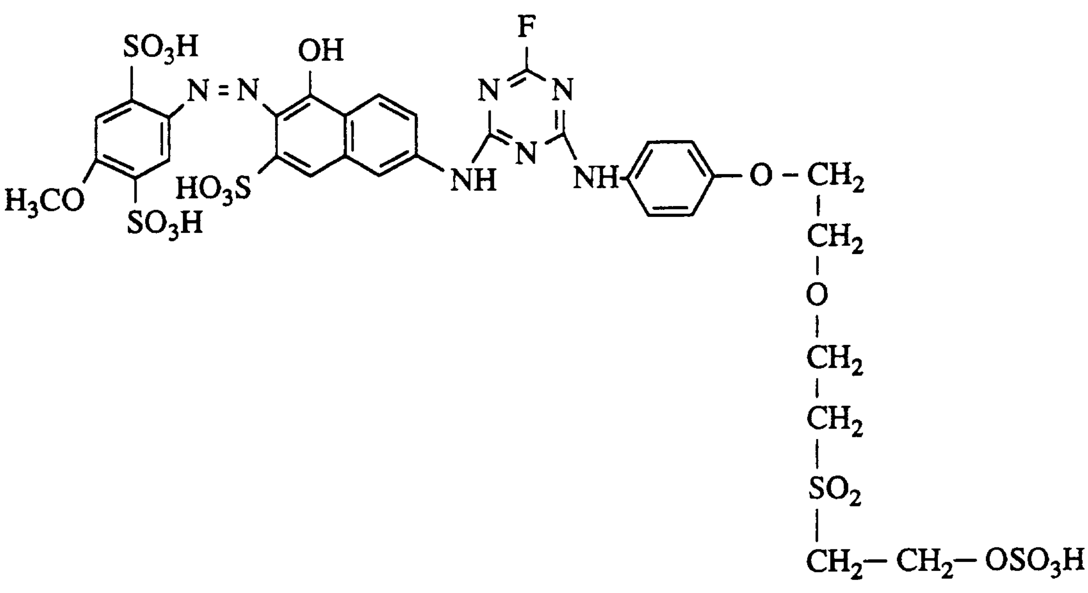

$\lambda_{max}$ = 498 nm in Wasser.

Weitere orangefärbende Farbstoffe erhält man, wenn man analog folgende Azokomponenten mit Cyanurfluorid und Aminophenoxyalkyl-$\beta$-sulfatoethylsulfonen kondensiert.

| Nr. | Azokomponente | 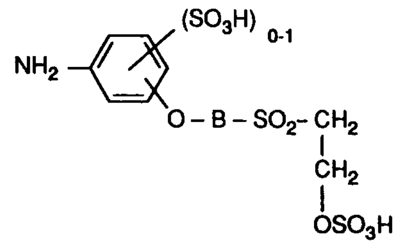 | Farbton | $\lambda_{max}$ ($H_2O$) |
|---|---|---|---|---|
| 25 | 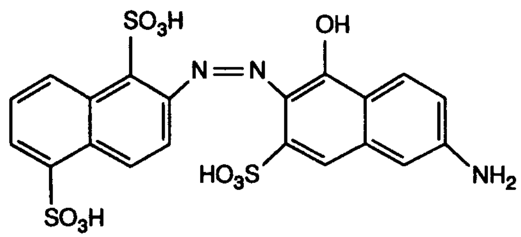 | 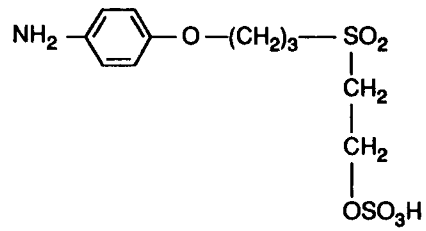 | orange | |
| 26 | 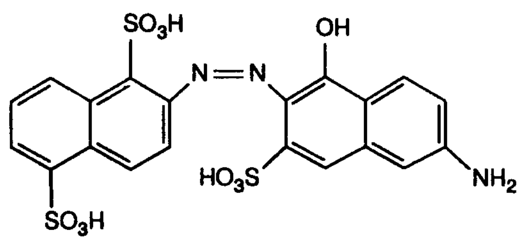 | 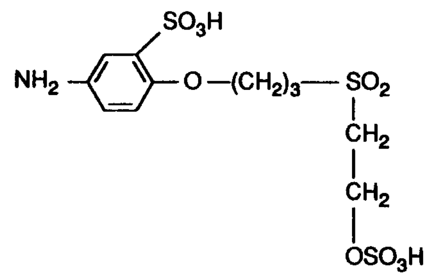 | orange | 485 nm |
| 27 | 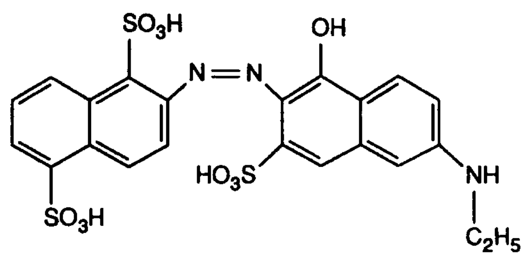 | 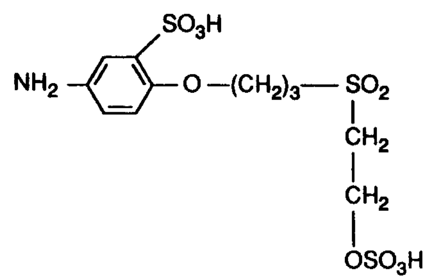 | orange | |

| Nr. | Azokomponente | 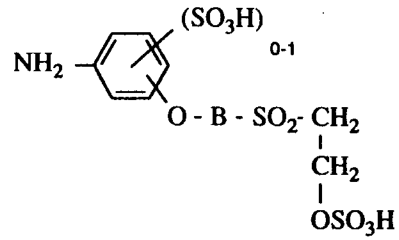 | Farbton | $\lambda_{max}$ ($H_2O$) |
| --- | --- | --- | --- | --- |
| 28 | 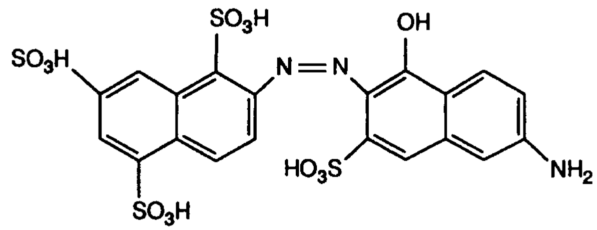 | 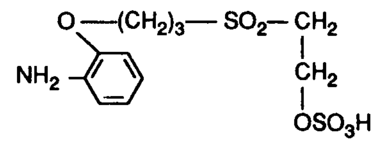 | orange | 482 nm |
| 29 | 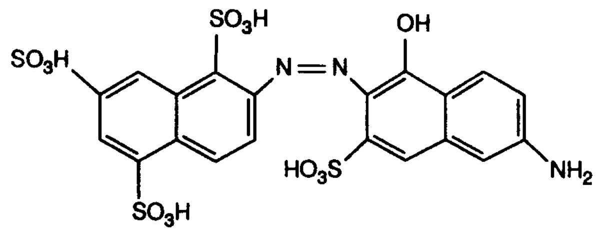 | 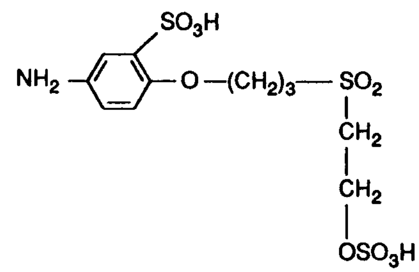 | orange | 481 nm |
| 30 | 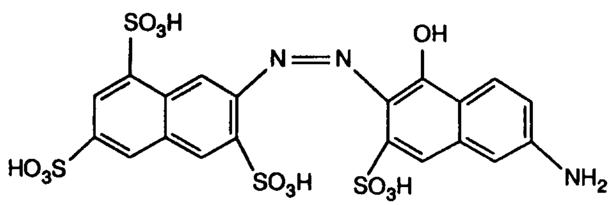 | 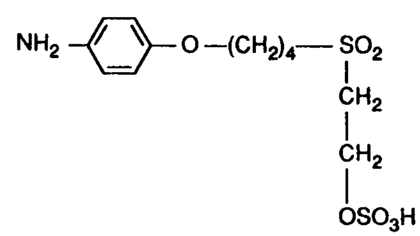 | orange | |

| Nr. | Azokomponente | 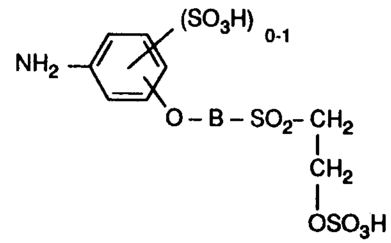 | Farbton |
|---|---|---|---|
| 31 | 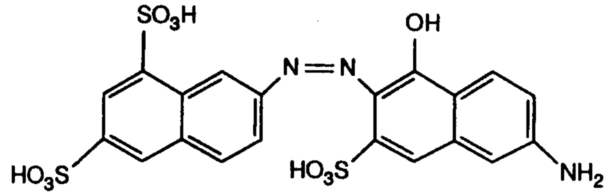 | 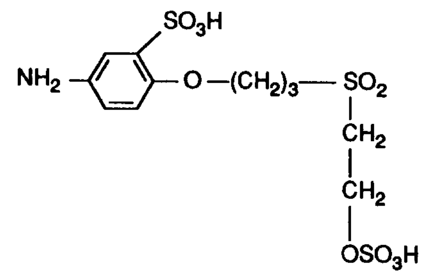 | orange |
| 32 | 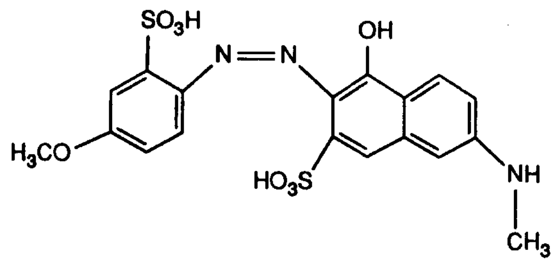 | 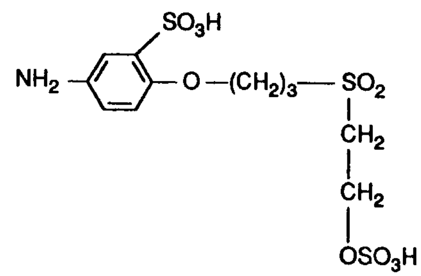 | scharlach |
| 33 | 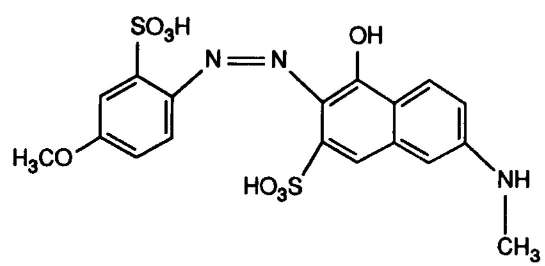 | 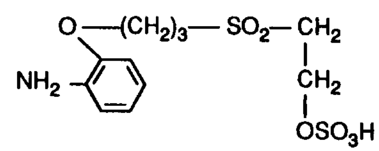 | scharlach |

| Nr. | Azokomponente | 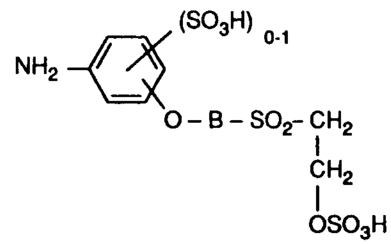 | Farbton | $\lambda_{max.}(H_2O)$ |
|---|---|---|---|---|
| 35a | 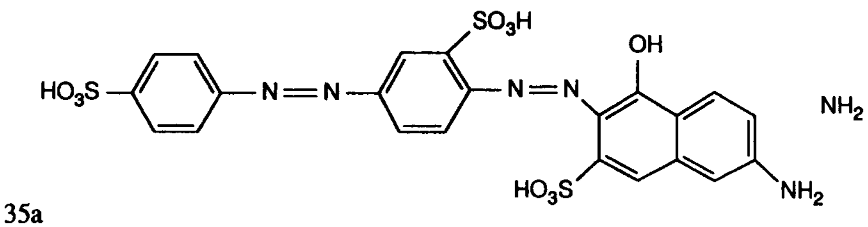 | 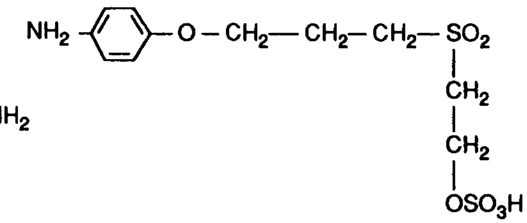 | gelbsti-chig rot | |
| 35b | 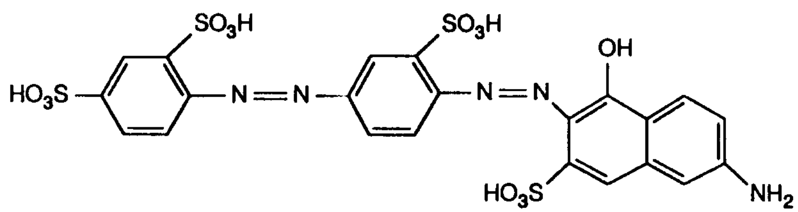 | 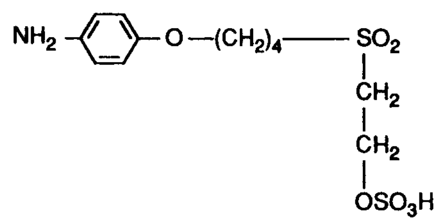 | gelbsti-chig rot | |
| 35c | 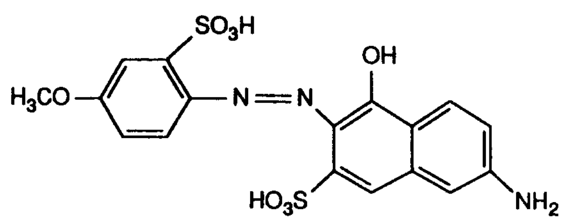 | 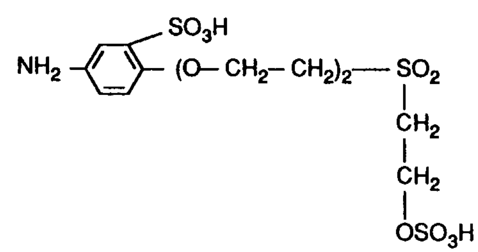 | gelbsti-chig rot | 501 nm |

| Nr. | Azokomponente | 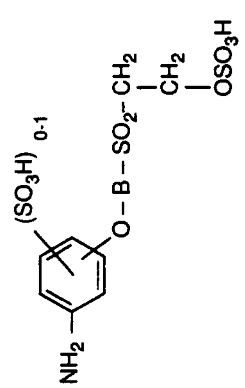 | Farbton | $\lambda_{max.}(H_2O)$ |
|---|---|---|---|---|
| 35d | 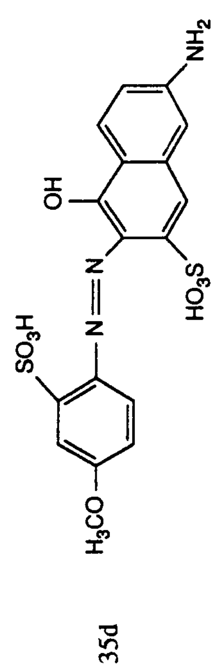 | 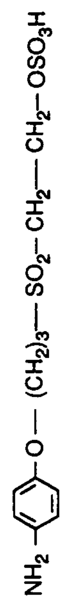 | scharlach | 501 nm |

Beispiel 36

35,0 g des Kupplungsproduktes von 2-Aminonaphthalin-6,8-disulfonsäure auf 3-Aminoacetanilid werden in 600 ml Wasser bei pH 5,5 unter Erwärmen auf 50 °C gelöst. Man kühlt auf 0 °C ab und läßt 7,7 ml

Cyanurfluorid in 5 bis 10 Minuten zutropfen. Dabei wird der pH-Wert mit verdünnter Sodalösung auf 5,2 bis 5,5 gehalten.
Wenn die Umsetzung nach etwa 10 bis 15 Minuten beendet ist, läßt man eine auf pH 5,5 gestellte Lösung von 30,5 g Verbindung

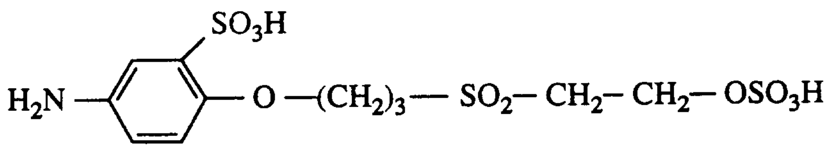

in 80 ml Wasser zutropfen und hält den pH-Wert mit verdünnter Sodalösung auf 5,5 bis 5,7, die Temperatur auf 0 bis 5 °C, später ansteigend auf 15 bis 20 °C.
Die erhaltene Lösung wird nach Zusatz von 1,5 g Phosphat- Puffer von pH 6 im Vakuum bei 35 bis 40 °C eingedampft oder sprühgetrocknet.
Der erhaltene Farbstoff der Formel

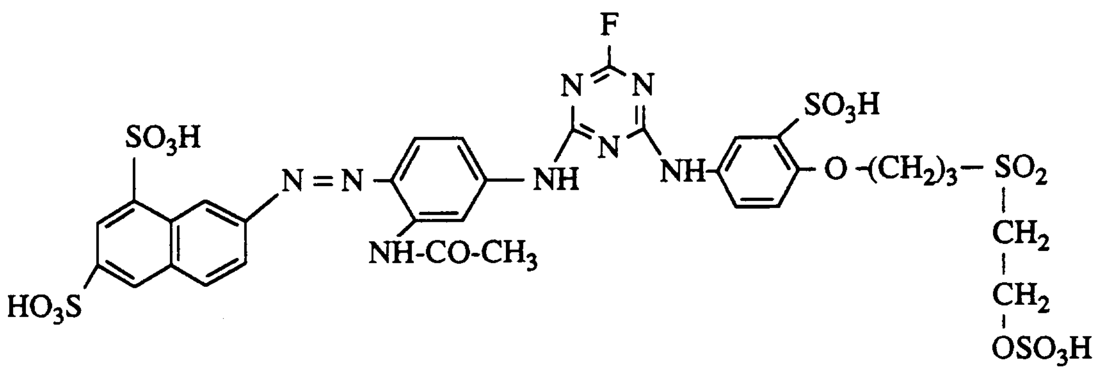

färbt Baumwolle aus langer Flotte mit einer optimalen Färbetemperatur von 50 °C in goldgelben Tönen.
$\lambda_{max.}$ = 389 nm in Wasser.

Weitere rotstichig gelb färbende Farbstoffe erhält man durch Kondensation folgender p-Aminoazoverbindungen mit Cyanurfluorid oder Cyanurchlorid und Aminophenoxyalkyl-β-sulfatoethylsulfonen.

| Nr. | Azokomponente | Trihalogen-triazin | 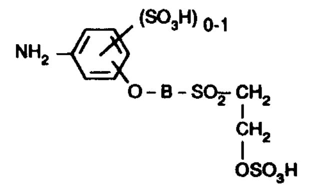 | Farbton | $\lambda_{max}(H_2O)$ |
|---|---|---|---|---|---|
| 37 | 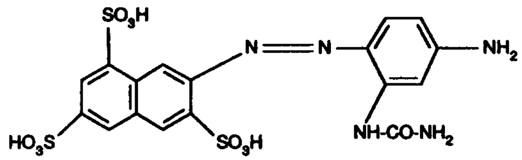 | 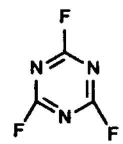 | 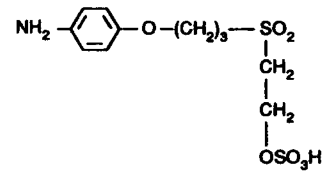 | rotstichig gelb | |
| 38 | 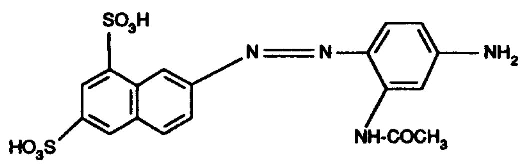 | 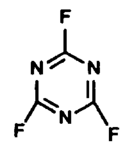 | 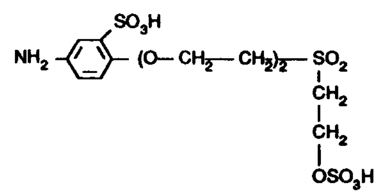 | rotstichig gelb | 389 nm |
| 39 | 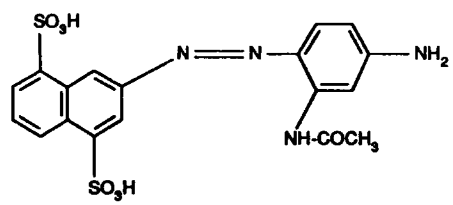 | 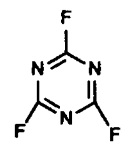 | 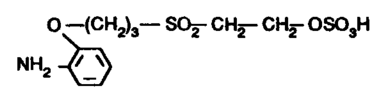 | rotstichig gelb | 389 nm |
| 40 | 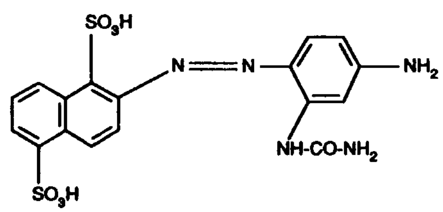 | 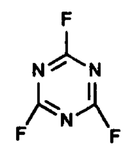 | 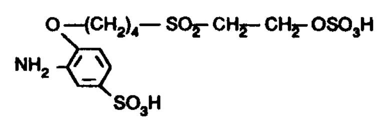 | rotstichig gelb | |

| Nr. | Azokomponente | Trihalogen-triazin | 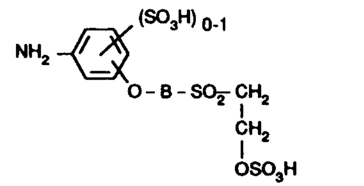 | Farbton | $\lambda_{max}(H_2O)$ |
|---|---|---|---|---|---|
| 41 | 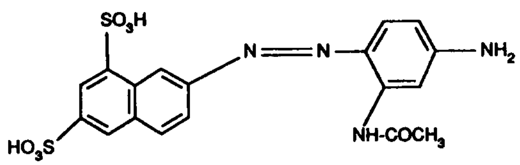 | 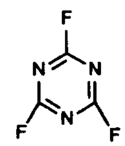 | 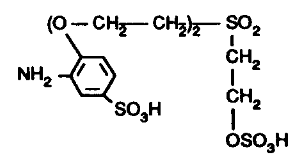 | rotstichig gelb | |
| 42 | 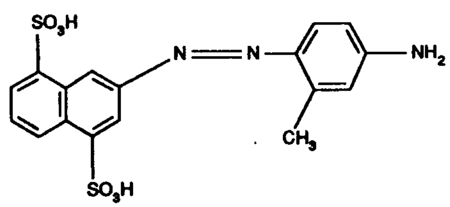 | 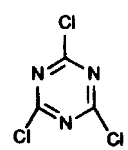 | 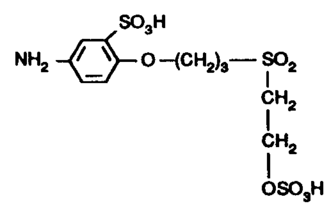 | rotstichig gelb | |
| 43 | 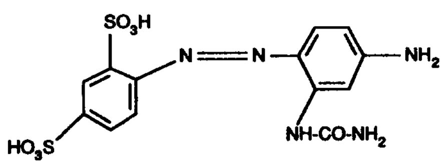 | 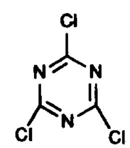 | 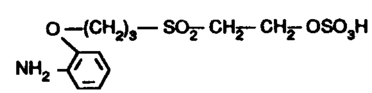 | rotstichig gelb | |

| Nr. | Azokomponente | Trihalogen-triazin | 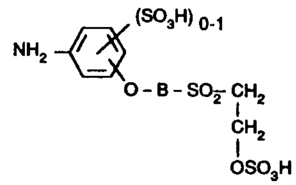 | Farbton | $\lambda_{max}(H_2O)$ |
|---|---|---|---|---|---|
| 45 | 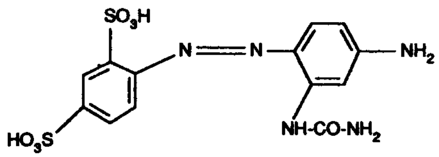 | 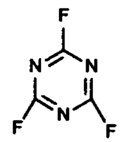 | 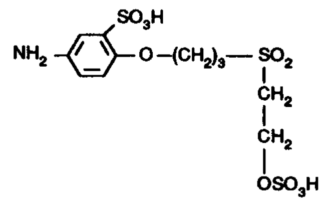 | rotstichig gelb | 386 nm |
| 46 | 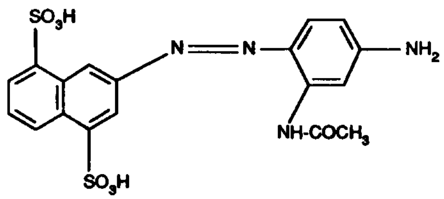 | 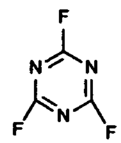 | 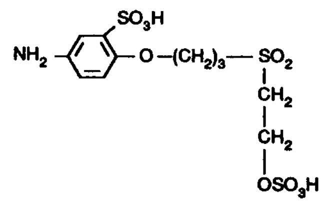 | rotstichig gelb | |
| 47 | 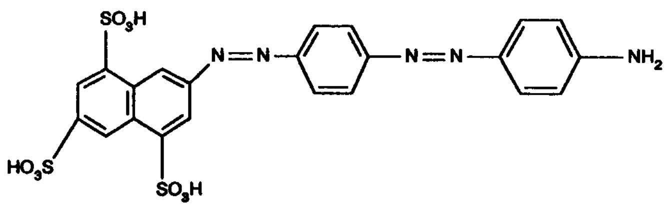 | 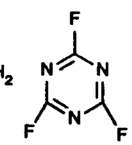 | 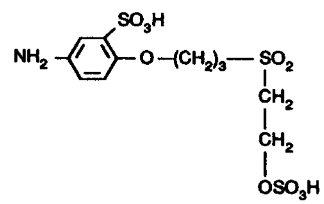 | orange | |

Beispiel 48

24,2 g Aminoazopyrazolon der Formel

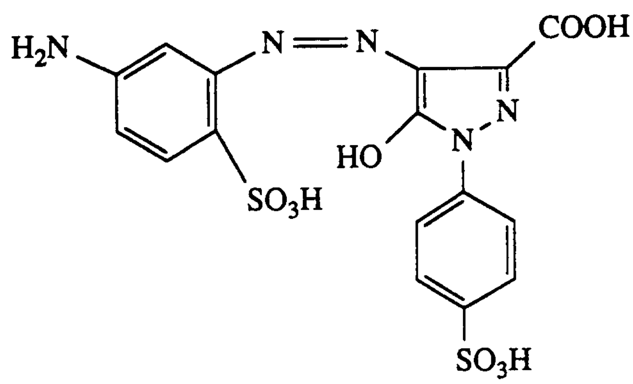

(hergestellt durch Kupplung von diazotierter 2-Amino-4-formylamino-benzolsulfonsäure auf 1-(4'-Sulfophenyl)-3-carboxy-5-pyrazolon und Verseifung mit verdünnter Natronlauge) werden in Form des Natriumsalzes in 600 ml Wasser gelöst. Man kühlt auf 0 bis 2°C ab, stellt den pH-Wert mit verdünnter Salzsäure auf 5,0 und läßt sofort innerhalb von etwa 5 Minuten 4,0 ml Cyanurfluorid zutropfen. Der pH-Wert wird mittels 2 n Sodalösung dabei beständig zwischen 4,3 und 4,6 gehalten. Ist die Umsetzung nach 15 Minuten beendet, wird eine neutrale Lösung von 18,6 g Verbindung der Formel

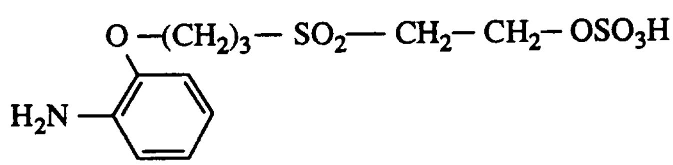

in 100 ml Wasser bei 0 bis 5°C zugegeben. Man hält den pH-Wert dabei mit 2 n Sodalösung auf 5,5 bis 6 und läßt nach 2 Stunden die Temperatur auf 20°C steigen.

Der erhaltene Farbstoff der Formel

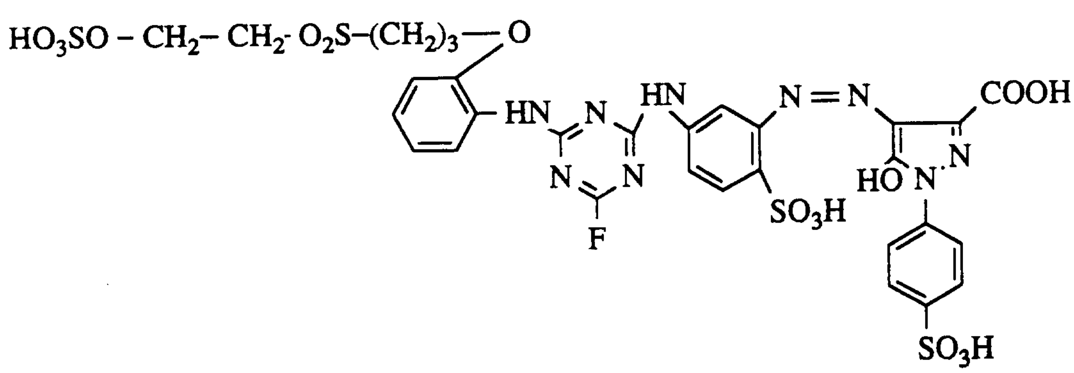

färbt Baumwolle aus langer Flotte in grünstichig gelben Tönen mit guter Fixierausbeute.

Beispiel 49

Ersetzt man im Beispiel 48 die 5-Amino-2-sulfophenylazopyrazolon-Komponente durch eine äquivalente Menge des entsprechenden 4-Amino-2-sulfophenylazopyrazolons, so erhält man einen Farbstoff der Formel

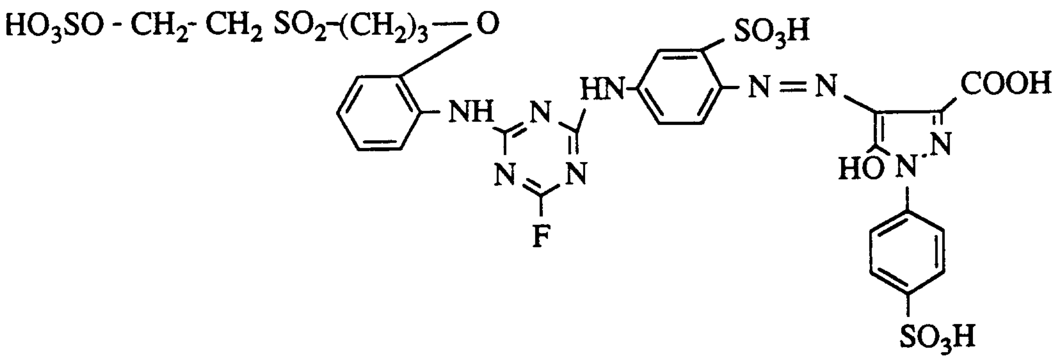

der Baumwolle in rotstichiger gelben Tönen färbt als der des Beispiels 48.

Weitere gelbe Farbstoffe mit ähnlichen Eigenschaften erhält man, wenn man die folgenden Aminophenylazopyrazolone mit Cyanurfluorid und den angegebenen Aminophenoxyalkyl-β-sulfatoethylsulfonen kondensiert.

| Nr. | Aminophenylazopyrazolon | 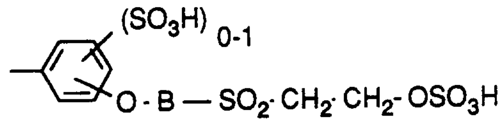 |
|---|---|---|
| 50 | 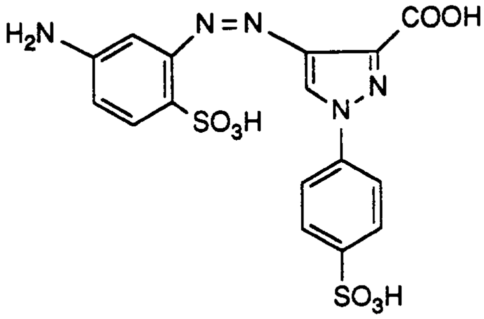 | 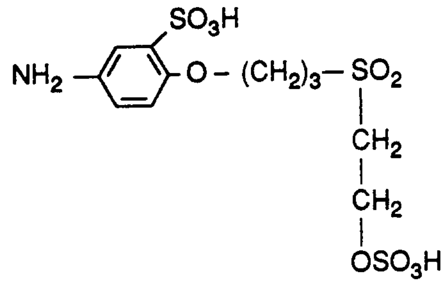 |
| 51 | 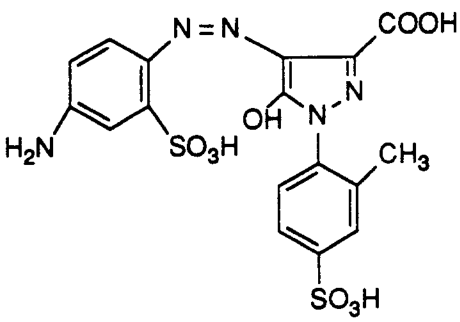 | 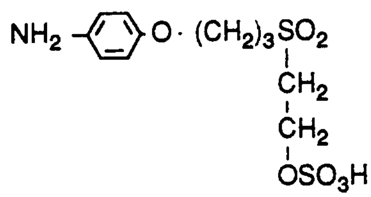 |
| 52 | 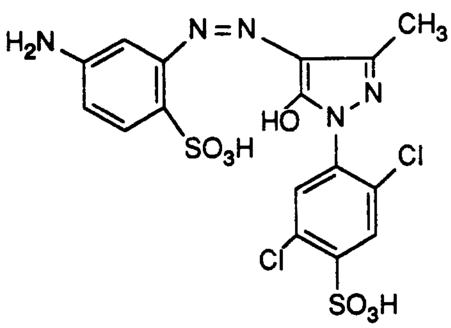 | 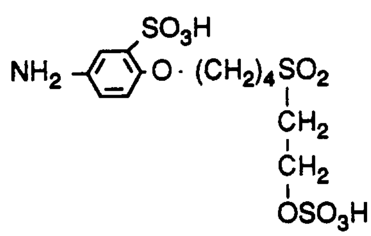 |

| Nr. | Aminophenylazopyrazolon | 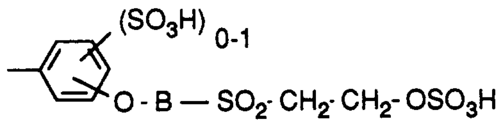 |
|---|---|---|
| 53 | 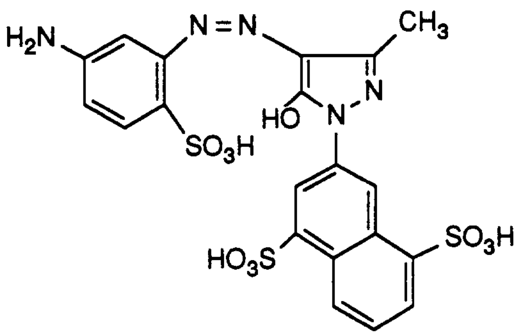 | 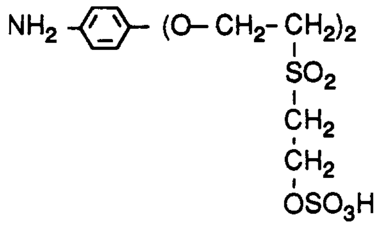 |
| 54 | 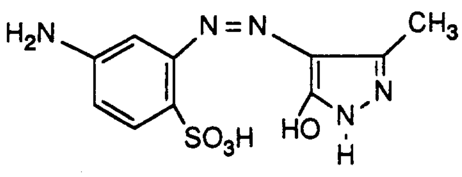 | 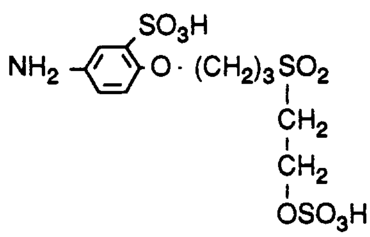 |
| 55 | 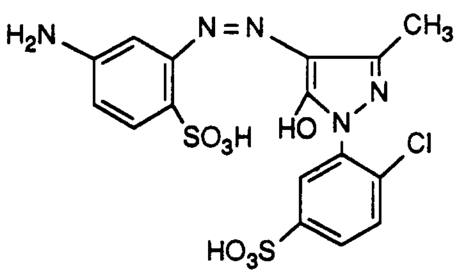 | 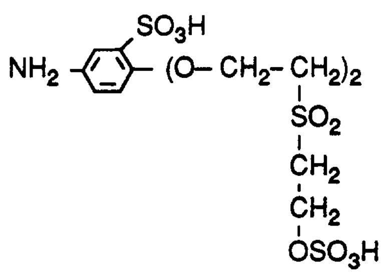 |

Beispiel 57

19,9 g Azoverbindung der Formel

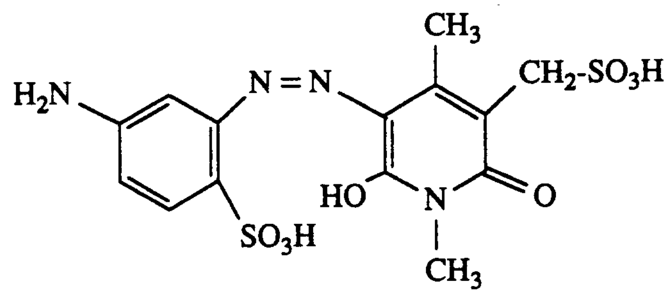

hergestellt durch Kupplung von diazotierter 4-Acetylamino-2-aminobenzolsulfonsäure auf 1,4-Dimethyl-6-hydroxy-5-aminocarbonyl-3-sulfomethyl-pyridon-2 und Verseifung der Acetylaminogruppe in verdünnter Natronlauge, werden in 400 ml Wasser bei pH 5,0 gelöst.
Nach Abkühlung auf 0 °C läßt man 4,1 ml Cyanurfluorid zulaufen und hält den pH-Wert mit 2 n Sodalösung auf 4,5. Man rührt noch 15 Minuten unter den gleichen Bedingungen nach und setzt dann eine neutrale Lösung von 21,3 g Komponente der Formel

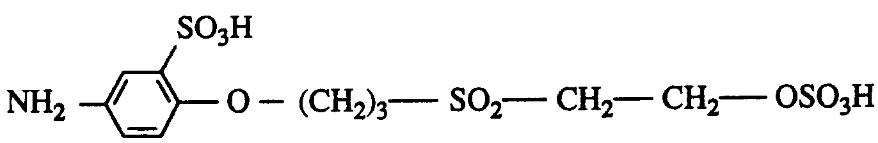

in 55 ml Wasser zu. Man hält den pH-Wert mit Sodalösung auf 5,2 bis 5,3, die Temperatur weiterhin auf 0 bis 3 °C und führt die Kondensation durch Rühren über Nacht zu Ende. Der Farbstoff wird mit Kaliumchlorid ausgesalzen, abgesaugt und mit 15 %iger Kaliumchloridlösung gewaschen.

Er entspricht der Formel

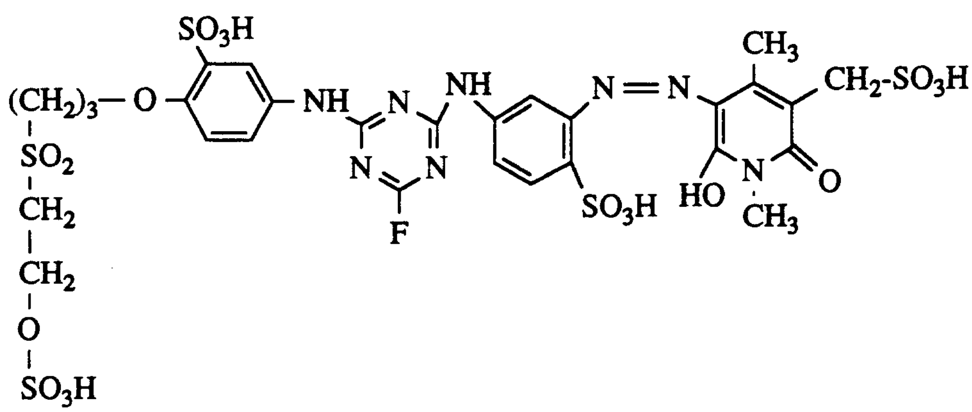

$\lambda_{max.}$ = 421 nm in Wasser
und färbt Baumwolle aus langer Flotte mit einer optimalen Färbetemperatur von 40 bis 50 °C in brillanten grünstichigen Gelbtönen mit guter Fixierausbeute.

Einen Farbstoff mit hoher Fixierausbeute erhält man, wenn man anstelle der oben eingesetzten 21,3 g 5-Amino-2-[3-($\beta$-sulfatoethylsulfonyl)-propoxy]-benzolsulfonsäure 17,3 g Komponente der Formel

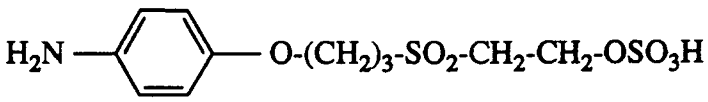

gelöst in 110 ml Wasser bei pH 6 mit 10 %iger Lithiumhydroxid-Lösung mit dem Difluortriazinylpyridonfarbstoff kondensiert. $\lambda_{max}$ = 421 nm in Wasser.

Ähnliche Farbstoffe erhält man, wenn man nach den Angaben des Beispiels 57 die Komponenten der Beispiele 58 bis 69 miteinander umsetzt.

| Nr. | Azokomponente | Trihalogen-triazin | 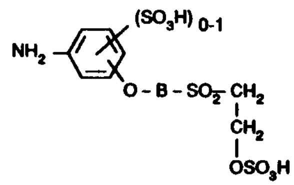 | Farbton | $\lambda_{max}(H_2O)$ |
|---|---|---|---|---|---|
| 58 | 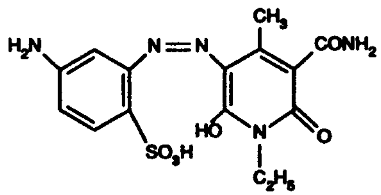 | 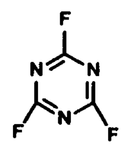 | 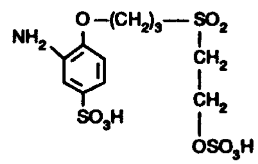 | grünstichig gelb | |
| 59 | 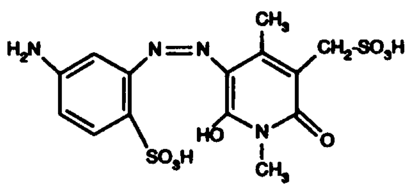 | 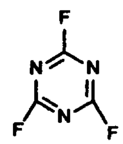 | 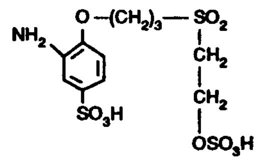 | grünstichig gelb | 420 nm |
| 60 | 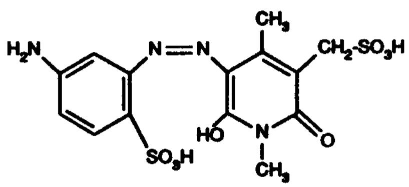 | 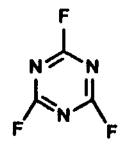 | 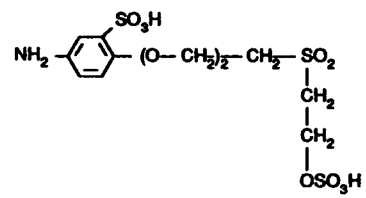 | grünstichig gelb | 421 nm |
| 61 | 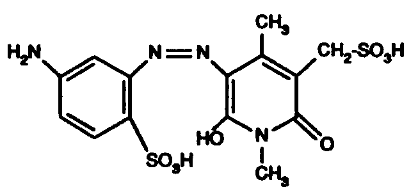 | 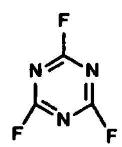 | 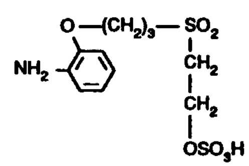 | grünstichig gelb | 421 nm |

| Nr. | Azokomponente | Trihalogen-triazin | 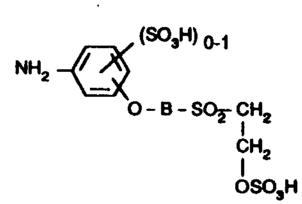 | Farbton | $\lambda_{max}(H_2O)$ |
|---|---|---|---|---|---|
| 62 | 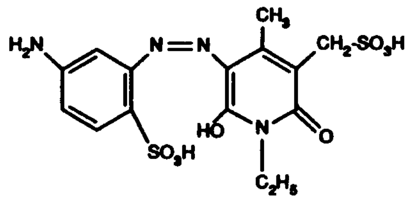 | 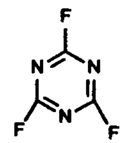 | 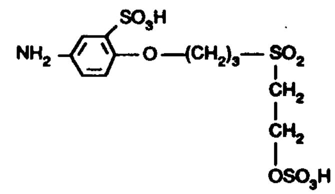 | grünstichig gelb | 423 nm |
| 63 | 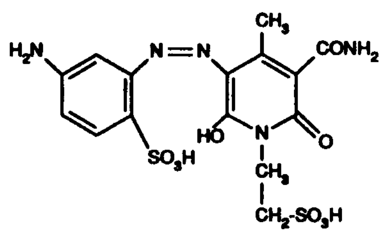 | 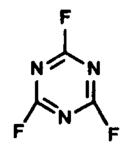 | 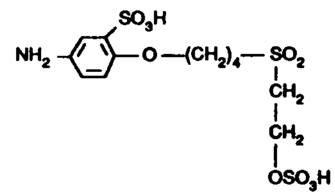 | grünstichig gelb | |
| 64 | 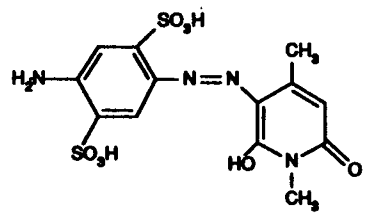 | 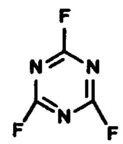 | 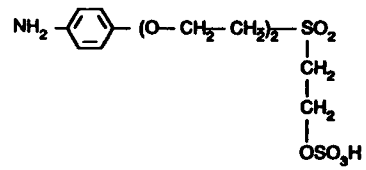 | gelb | |
| 65 | 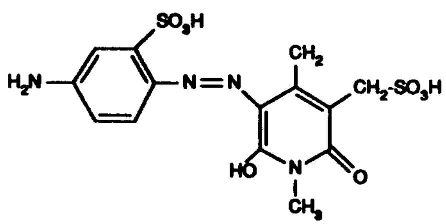 | 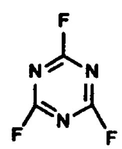 | 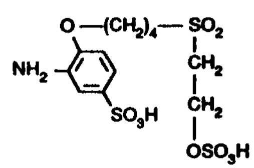 | gelb | |

| Nr. | Azokomponente | Trihalogen-triazin | 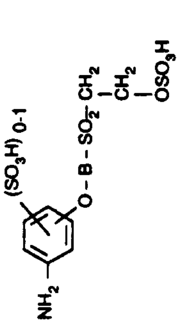 | Farbton | $\lambda_{max}(H_2O)$ |
|---|---|---|---|---|---|
| 66 | 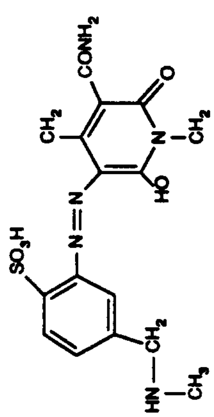 | 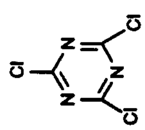 | 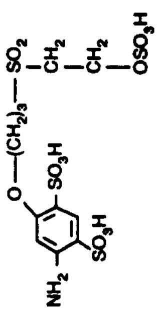 | grünstichig gelb | |
| 67 | 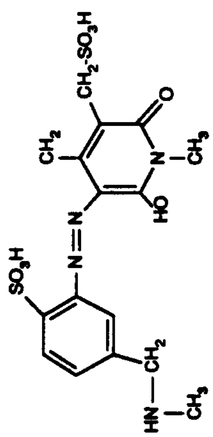 | 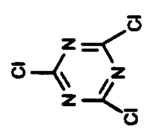 | 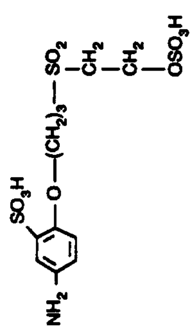 | grünstichig gelb | |
| 68 | 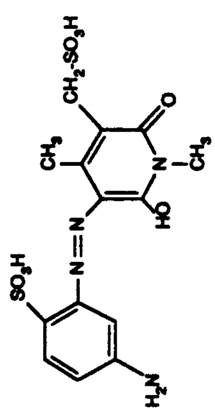 | 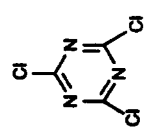 | 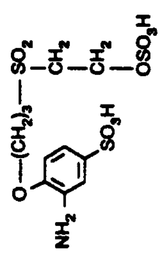 | grünstichig gelb | 421 nm |
| 69 | 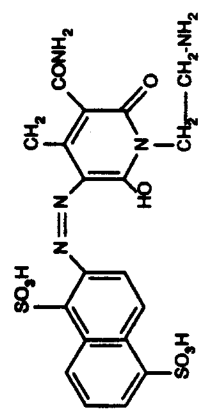 | 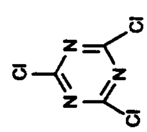 | 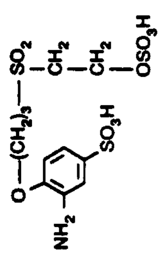 | gelb | |

Beispiel 70

40 g 1-Amino-4-(2'-aminomethyl-4'-methyl-6'-sulfophenylamino)-anthrachinon-2-sulfonsäure werden in 800 ml Wasser und 100 ml Aceton durch Neutralisation mit ca. 45 ml 2 n Natronlauge bei pH 7 gelöst.

Man kühlt auf 10 °C ab und tropft eine Lösung von 17,5 g Cyanurchlorid in 100 ml Aceton in 15 bis 20 Minuten ein. Während des Eintropfens hält man den pH-Wert im Reaktionsgemisch mit 2 n Sodalösung auf 6,0 bis 7,0. Wenn der Sodaverbrauch nach etwa 1 Stunde nach der Cyanurchlorid-Zugabe zum Stillstand gekommen ist, läßt man eine neutralisierte Lösung von 39,7 g Verbindung der Formel

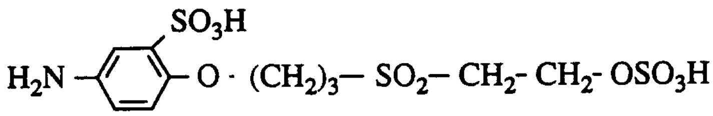

in 100 ml Wasser bei 20 °C zulaufen und hält den pH-Wert mit Sodalösung auf 6,5. Nach beendeter Kondensation wird der Farbstoff entweder ausgesalzen oder durch Eindampfen der Lösung im Vakuum bei 35 bis 40 °C isoliert, wobei man ein salzhaltiges Produkt erhält. Der Farbstoff der Formel

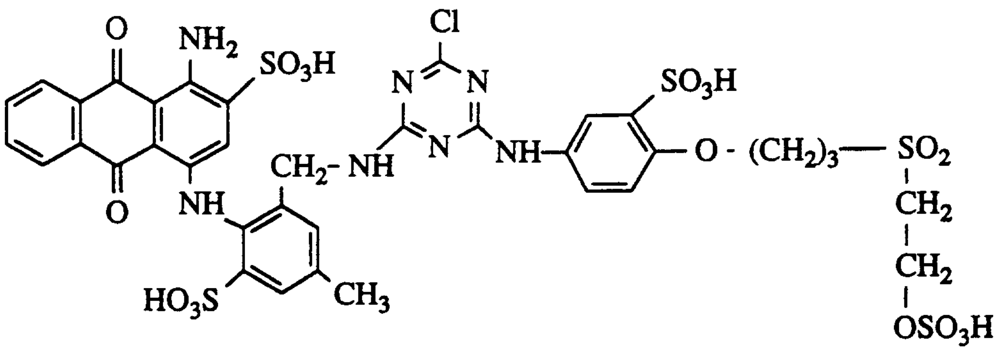

kann zum Drucken oder Färben nach Kontinue-Verfahren für Cellulosegewebe eingesetzt werden und liefert klare rotstichig blaue Farbtöne. Dabei werden sehr gute Fixierausbeuten erzielt ($\lambda_{max}$ = 624 und 587 nm, in $H_2O$).

Beispiel 71

53,1 g 1-Amino-4-(3'-amino-5'-sulfo-2',4',6'-trimethylphenylamino)-anthractinon-2-sulfonsäure werden in 530 Teilen Wasser bei pH 6 gelöst.

19,4 g Cyanurchlorid werden in 100 ml Methylethylketon gelöst und die Lösung auf 100 g Eis ausgetragen. Man läßt nun die Farbstofflösung zu der Cyanurchloridsuspension bei 0 bis 10 °C zutropfen und hält im Reaktionsgemisch mit 10 %iger Sodalösung den pH-Wert auf 4,5. Nach beendeter Umsetzung wird eine neutralisierte Lösung von 47 g Verbindung der Formel

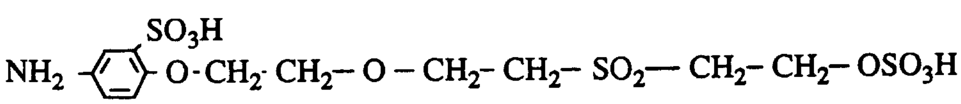

in 130 ml Wasser bei 20 bis 25 °C zugeben und der pH-Wert mit Sodalösung auf 5,8 bis 6,0 gehalten, bis die Kondensation beendet ist. Der erhaltene Farbstoff der Formel

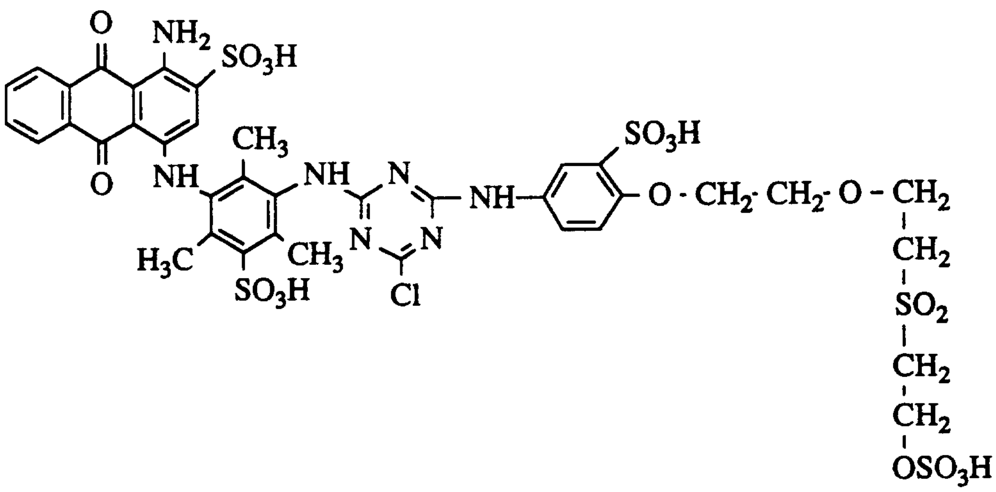

ergibt auf Baumwolle im Druck und Kontinue-Färbeverfahren klare, rotstichig blaue Farbtöne mit sehr guter Fixierausbeute.

Beispiel 72

14,7 g 1-Amino-4-(3'-amino-phenylamino)-anthrachinon-2,4'-disulfonsäure werden in 250 ml Wasser bei pH 5 und 0 bis 5 °C gelöst. Man läßt 2,8 ml Cyanurfluorid innerhalb von 5 bis 10 Minuten zu der Lösung der Farbkomponente tropfen und hält den pH-Wert mit 2 n Sodalösung auf 4,2 bis 4,7. Nach kurzem Nachrühren ist die Kondensation zum Difluortriazinylfarbstoff beendet.

Eine neutralisierte Lösung von 13,2 g Verbindung der Formel

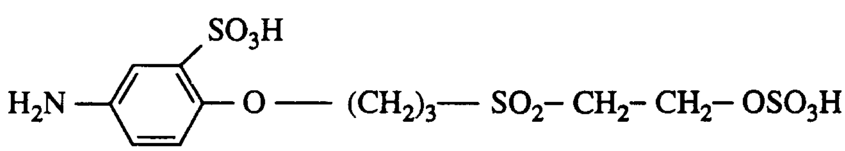

in 50 ml Wasser wird nun zu der Lösung der reaktiven Farbstoffkomponente langsam zugegeben und dabei der pH-Wert auf 5,0 bis 5,6 gehalten. Danach hält man den pH auf 6,0 bis 6,5 und läßt im Verlaufe von 15 Stunden die Temperatur allmählich auf 20 °C ansteigen, wonach die Kondensation beendet ist. Die Farbstofflösung wird nun im Laufe von 2 Stunden ausgesalzen. Man saugt den ausgefällten Farbstoff der Formel

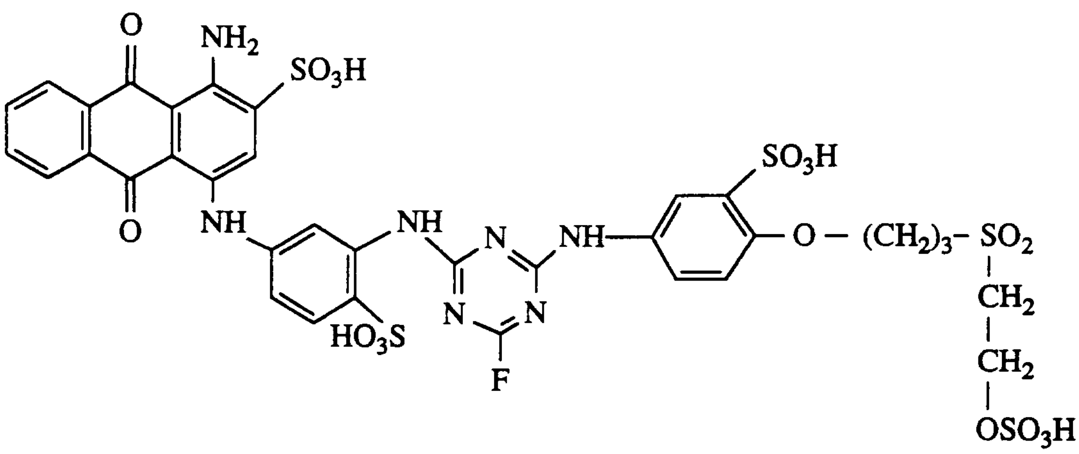

$\lambda_{max}$ = 602 nm ($H_2O$)

ab und wäscht ihn mit Salzlösung bis zum hellen Ablauf. Nach Trocknung im Vakuum bei 45 °C erhält man ein Produkt, mit dem Cellulosegewebe in blauen Tönen und mit guter Fixierausbeute gefärbt und bedruckt werden kann.

Beispiel 73

18,0 g Komponente der Formel

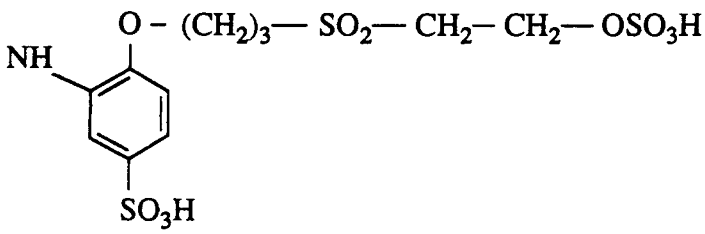

werden in 80 ml Wasser auf einen pH-Wert von 4,0 gestellt. Man setzt 1,9 g Natriumfluorid zu der Lösung und kühlt auf 0 bis 2 °C ab. Sodann läßt man 4,2 ml Cyanurfluorid unter weiterer Kühlung zulaufen und hält den pH-Wert mit Sodalösung zwischen 4,0 und 4,5. Etwa 15 Minuten nach Cyanurfluorid-Zugabe ist die Umsetzung völlig beendet. Man stellt nun die Lösung auf pH 4,5 bis 5,0. Der erhaltenen Reaktivkomponente wird im Laufe von 30 Minuten eine neutralisierte Lösung von 19,0 g 1-Amino-4-(3'-amino-2'-methylphenylamino)-anthrachinon-2,5'-disulfonsäure in 350 ml Wasser zugetropft. Dabei hält man in der Reaktionslösung die Temperatur weiter auf 0 bis 5 °C und den pH-Wert mit Sodalösung auf 6,0 bis 6,5. Nach 2 Stunden läßt man die Temperatur im Laufe von 15 Stunden allmählich auf 10 °C ansteigen. Nach Beendigung der Kondensation wird der Farbstoff der Formel

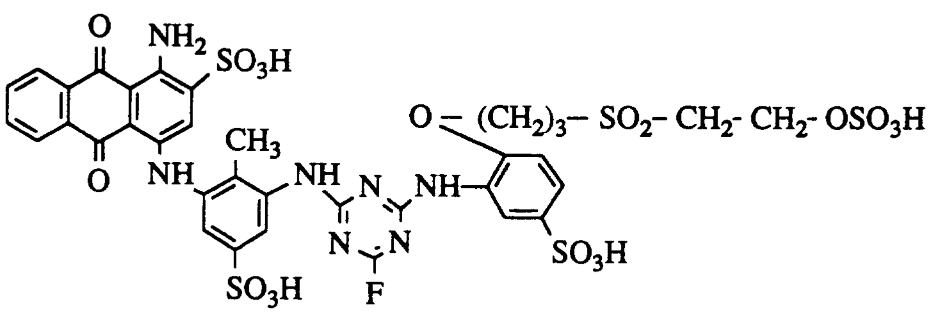

mit Natriumchlorid aus der Lösung ausgesalzen, abgesaugt, mit 20 %iger Natriumchloridlösung gewaschen und bei 45 °C im Vakuum getrocknet.

Der Farbstoff gibt auf Baumwolle blaue Färbungen und Drucke mit guter Fixierausbeute.

Weitere blaue Anthrachinonfarbstoffe mit ähnlichen Eigenschaften werden erhalten, wenn man die nachfolgend aufgeführten Anthrachinonkomponenten der allgemeinen Formel

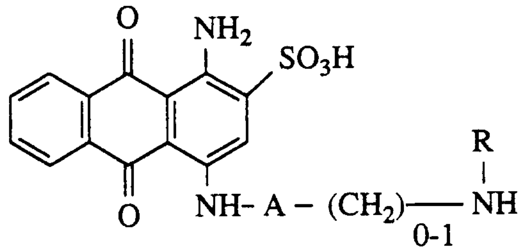

BAS = 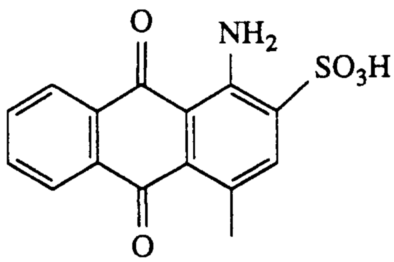

mit den Trihalogentriazinen und den Sulfatoethylsulfonylalkoxy-anilinen nach einer der oben dargelegten Methoden kondensiert.

| Nr. | 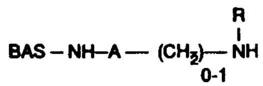 | Trihalogen-triazin | 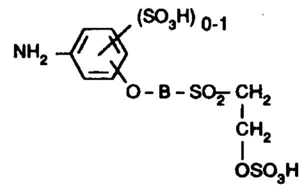 | Farbton | $\lambda_{max}(H_2O)$ |
|---|---|---|---|---|---|
| 74 | 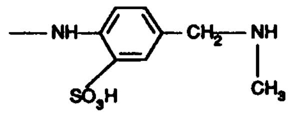 | 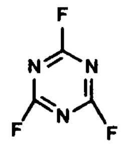 | 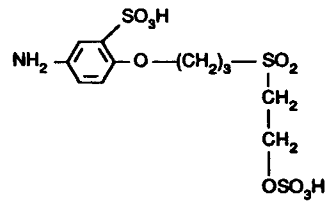 | blau | 599 nm |
| 75 | 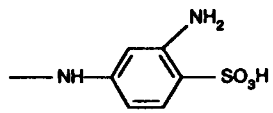 | 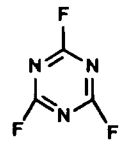 | 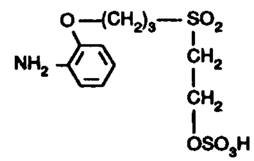 | blau | 597 nm |
| 76 | 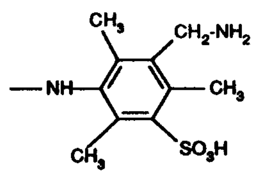 | 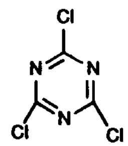 | 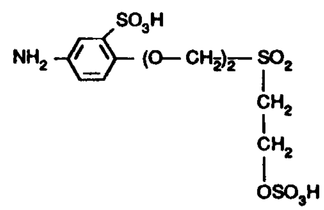 | rotstichig blau | |
| 77 | 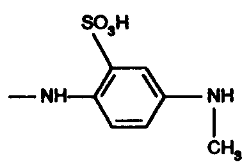 | 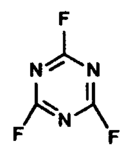 | 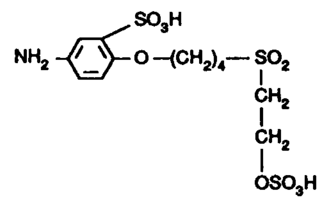 | blau | |

| Nr. | 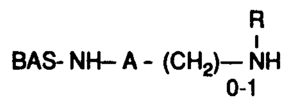 | Trihalogen-triazin | 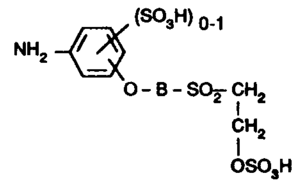 | Farbton | $\lambda_{max}(H_2O)$ |
|---|---|---|---|---|---|
| 78 | 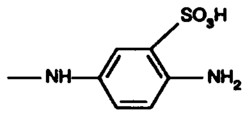 | 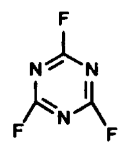 | 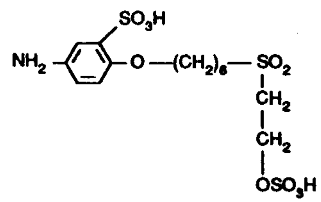 | grünstichig blau | |
| 79 | 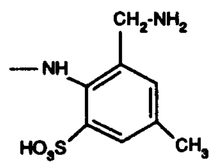 | 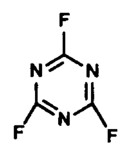 | 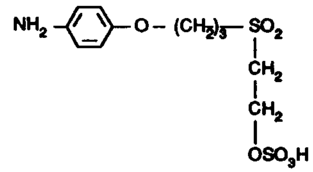 | rotstichig blau | |
| 80 | 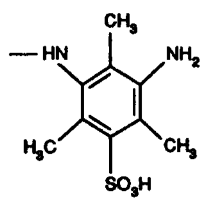 | 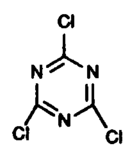 | 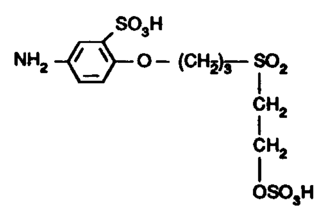 | rotstichig blau | |

| Nr. | 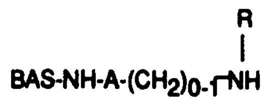 | Trihalogen-triazin | 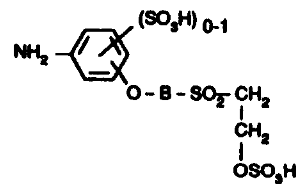 | Farbton | $\lambda_{max}(H_2O)$ |
|---|---|---|---|---|---|
| 81 | 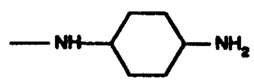 | 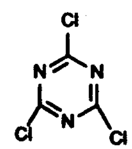 | 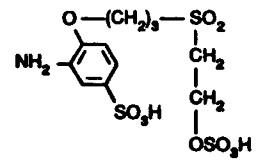 | klar blau | 634 nm, 593 nm |
| 82a | 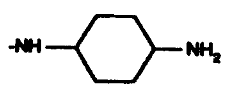 | 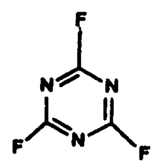 | 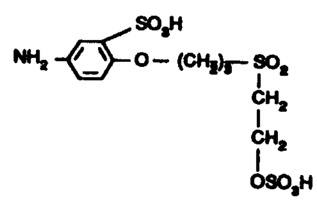 | klar blau | 635 nm, 593 nm |

Beispiel 83

23,6 g Komponente der Formel

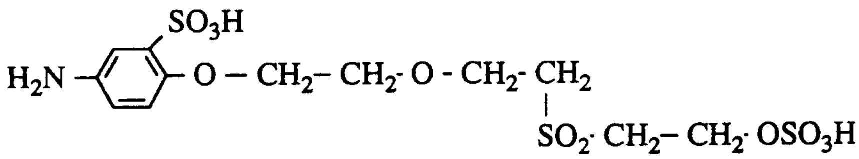

werden in 90 ml Wasser auf einen pH-Wert von 4,0 gestellt. Man setzt 2,2 g Natriumfluorid zu der Lösung und kühlt auf 0 °C ab.
Anschließend läßt man 4,9 ml Cyanurfluorid zulaufen und hält den pH-Wert mit 2 n Sodalösung auf 3,5 bis 4,0. Nach kurzem Nachrühren bei 0 °C ist die Umsetzung beendet. Man stellt die Lösung auf pH 4,5 bis 5,0.

0,05 Mole des Kupferkomplexes von N-(2-Carboxy-5-sulfophenyl)-N'-(2'-hydroxy-3'-amino-5'-sulfophenyl)-ms-phenyl-formazan-di-natriumsalz werden in 300 ml Wasser gelöst. Nach Abkühlung auf 0 bis 5 °C läßt man die Lösung der oben hergestellten Komponente zulaufen und hält den pH-Wert durch Zugabe von Sodalösung auf 5,5 bis 6,0. Nach 2 Stunden läßt man die Temperatur allmählich auf 20 °C ansteigen und salzt nach beendeter Kondensation den Farbstoff aus, saugt ab und trocknet ihn nach Pufferung bei pH 6 bei 45 °C im Vakuum.

Der erhaltene Farbstoff der Formel

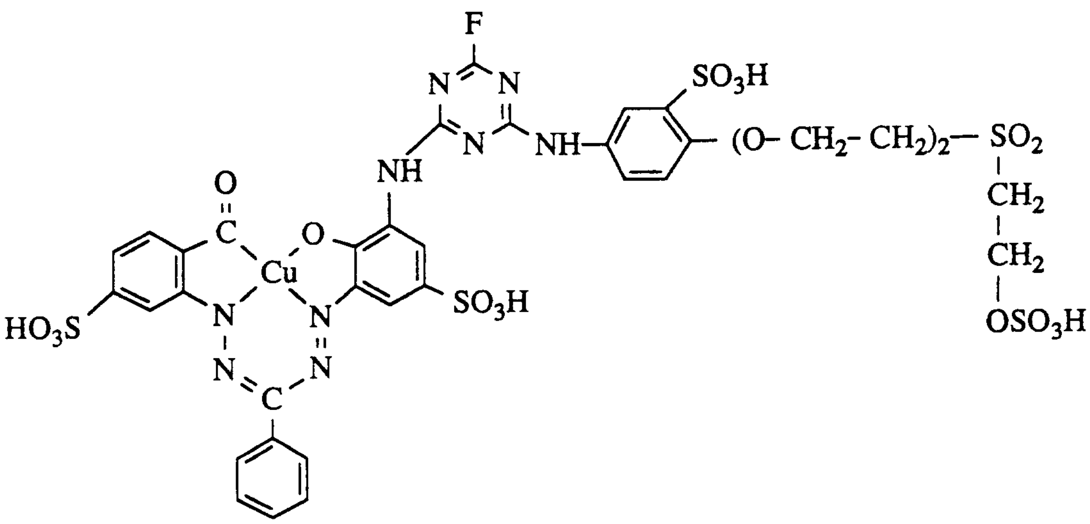

färbt Baumwolle aus langer Flotte mit sehr guten Fixierausbeuten in blauen Tönen. $\lambda_{max}$ = 618 nm in Wasser.

Beispiel 84

0,05 Mole des Kupferkomplexes von N-(2-Carboxy-5-sulfophenyl)-N'-(2'-hydroxy-3'-amino-5'-sulfophenyl)-ms-phenylformazan-di-natriumsalz werden in 250 ml Wasser gelöst. Nach Abkühlung auf 0 bis 3 °C läßt man 4,9 ml Cyanurfluorid in wenigen Minuten zutropfen und hält den pH-Wert mit 10 %iger Sodalösung auf 5,5 bis 6,0. Ist die Kondensation nach kurzem Nachrühren beendet, gibt man eine auf pH 5 bis 6 gestellte Lösung von 23 g der Komponente

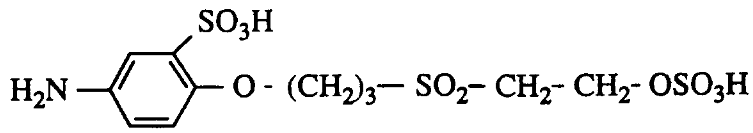

in 60 ml Wasser hinzu und hält den pH-Wert mit Sodalösung auf 5,5 bis 6,0. Nach beendeter Kondensation wird der Farbstoff mit Natriumchlorid ausgesalzen, abgesaugt und nach Pufferung auf pH 6,0 bei 45 °C im Vakuum getrocknet. Er entspricht der Formel

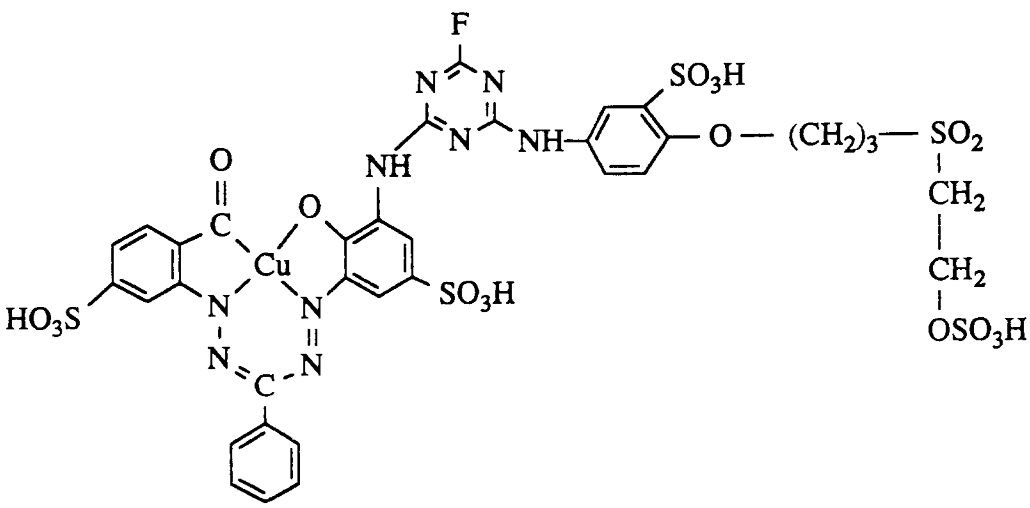

und färbt Baumwolle aus langer Flotte mit sehr guten Fixierausbeuten in blauen Tönen. $\lambda_{max}$ = 614 nm in Wasser.

| Nr. | Aminoformazan | Trihalogen-triazin | β-Sulfatoethylsulfonyl-alkoxy-anilin | Farbton |
|---|---|---|---|---|
| 85 | N-(2-Hydroxy-3-amino-5-sulfophenyl)-N'-(2'-carboxy-4'-sulfophenyl)-ms-(2"-chlor-5"-sulfophenyl)-Formazan, Cu-Komplex | 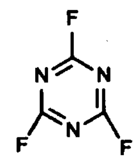 | 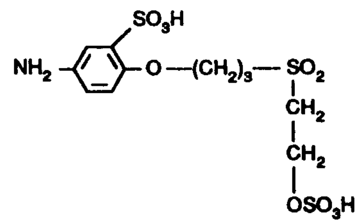 | blau |
| 86 | N-(2-Hydroxy-5-amino-3-sulfophenyl)-N'-(2',5'-disulfophenyl)-ms-phenyl-formazan, Cu-Komplex | 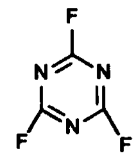 | 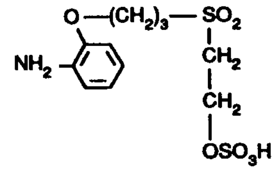 | blau |
| 87 | 2-(2-Carboxy-4-aminophenyl)-N'-(2'-hydroxy-5'-methylsulfonyl-3'-sulfophenyl)-ms-(2"-sulfophenyl)-formazan, Cu-Komplex | 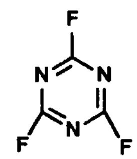 | 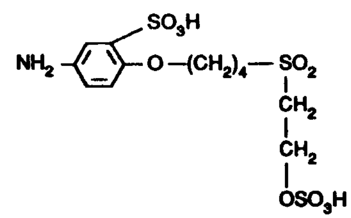 | blau |
| 88 | N-(2-Carboxy-5-sulfophenyl)-N'-(2'-hydroxy-3',5'-disulfophenyl)-ms-(3"-amino-phenyl)-formazan, Cu-Komplex | 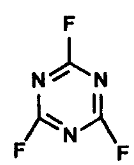 | 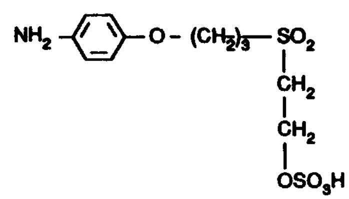 | grünstichig blau |

| Nr. | Aminoformazan | Trihalogen-triazin | β-Sulfatoethylsulfonyl-alkoxy-anilin | Farbton |
|---|---|---|---|---|
| 89 | N-(4-Amino-2-sulfophenyl)-N'-(2'-hydroxy-4'-sulfophenyl)-ms-(4"-chlor-3"-sulfophenyl)-formazan, Cu-Komplex | 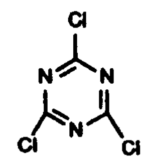 | 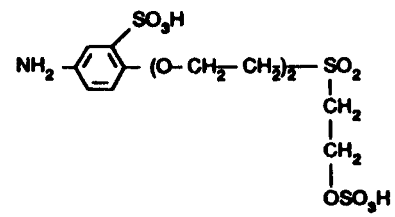 | blau |
| 90 | N-(2-Hydroxy-3-amino-5-sulfophenyl)-N'-(2'-hydroxy-4'sulfophenyl)-ms-(2'-sulfophenyl), Cu-Komplex | 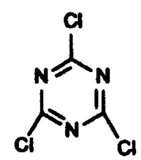 | 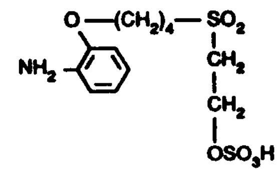 | marineblau |
| 92 | N-(2-Carboxy-5-sulfophenyl)-N'-(2'-hydroxy-3'-amino-5'-sulfophenyl)-ms-phenylformazan, Cu-Komplex | 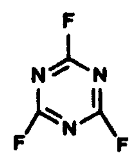 | 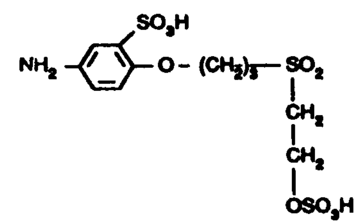 | blau |

| Nr. | Aminoformazan | Trihalogen-triazin | β-Sulfatoethylsulfonyl-alkoxy-anilin | Farbton |
|---|---|---|---|---|
| 93 | N-(2-Carboxy-4-sulfophenyl)-N'-(2'-hydroxy-3'-amino-5'-sulfophenyl)-ms-phenylformazan, Cu-Komplex | 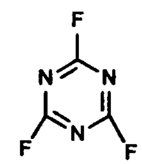 | 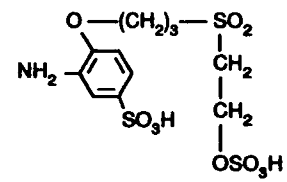 | blau |
| 94 | N-(2,4-Disulfophenyl)-N'-(2'-hydroxy-4,6-disulfophenyl)-ms-(3"-aminophenyl)-formazan, Cu-Komplex | 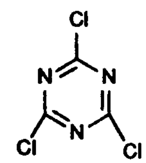 | 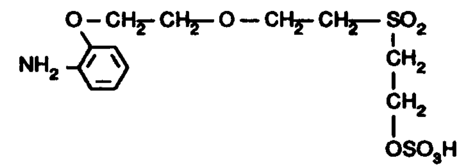 | blau |
| 95 | N-(2-Carboxy-5-sulfophenyl)-N'-(2'-hydroxy-4'-methylsulfonyl-6'-sulfophenyl)-ms-(3"-aminophenyl)-formazan, Cu-Komplex | 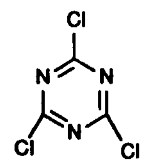 | 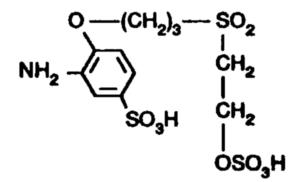 | blau |
| 96 | N-(2-Hydroxy-5-sulfophenyl)-N'-(2'-hydroxy-3',5'-disulfophenyl)-ms-(4"amino-phenyl)-formazan, Cu-Komplex | 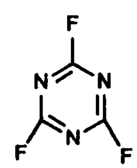 | 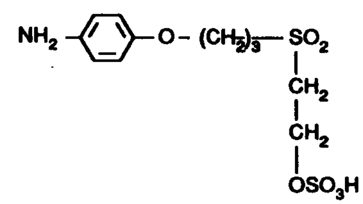 | blau |

| Nr. | Aminoformazan | Trihalogen-triazin | β-Sulfatoethylsulfonyl-alkoxy-anilin | Farbton | $\lambda_{max}$ ($H_2O$) |
|---|---|---|---|---|---|
| 97 | N-(2-Carboxy-5-sulfophenyl)-N'-(2'-hydroxy-3'-amino-5'-sulfophenyl)-ms-(4"-methyl-3"-bromphenyl)-formazan, Cu-Komplex | 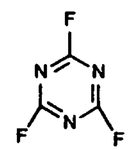 | 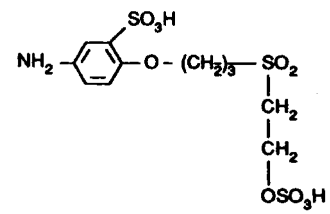 | blau | |
| 98 | N-(2-Carboxy-4-aminophenyl)-N'-(2'-hydroxy-4'sulfonaphth-1'-yl)-ms-(2"-sulfophenyl)-formazan, Cu-Komplex | 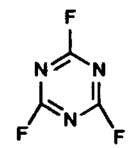 | 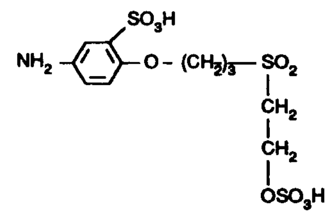 | blau | |
| 98a | N-(2-Carboxy-4-sulfophenyl)-N'-(2'-hydroxy-3'-amino-5'-sulfophenyl)-ms-phenylformazan, Cu-Komplex | 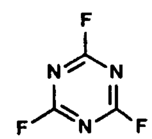 | 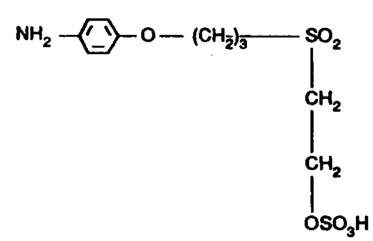 | blau | |
| 98b | N-(2-Carboxy-5-sulfophenyl)-N'-(2'-hydroxy-3'-amino-5'-sulfophenyl)-ms-phenylformazan, Cu-Komplex | 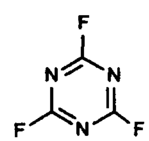 | 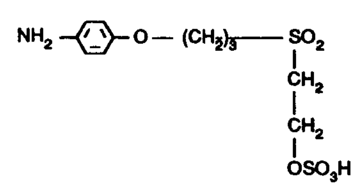 | blau | 618 nm |

| Nr. | Aminoformazan | Trihalogen-triazin | β-Sulfatoethylsulfonyl-alkoxy-anilin | Farbton | $\lambda_{max}$ ($H_2O$ |
|---|---|---|---|---|---|
| 98c | N-(2-Carboxy-5-sulfophenyl)-N'-(2'-hydroxy-3'-amino-5'-sulfophenyl)-ms-(2"-sulfophenyl)-formazan, Cu-Komplex, | 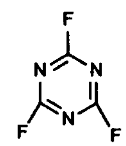 | 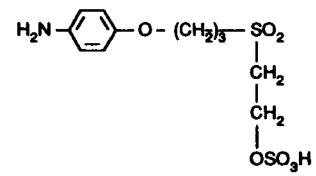 | blau | |
| 98d | N-(2-Carboxy-5-sulfophenyl)-N'-(2'-hydroxy-5'-amino-3'-sulfophenyl-ms-phenylformazan, Cu-Komplex, | 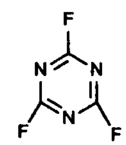 | 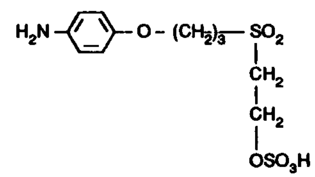 | blau | $\lambda_{max}$ = 618 nm |

Beispiel 99

Eine neutralisierte Lösung von 15,5 g Komponente der Formel

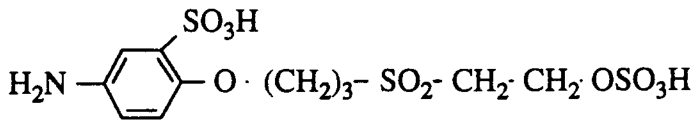

und 1,6 g Natriumfluorid in 60 ml Wasser wird auf 0 bis 2 °C abgekühlt. Man läßt 5,5 g Cyanurfluorid zulaufen und hält den pH-Wert mit 2 n Sodalösung zwischen 3,5 bis 4,0. Nach Beendigung der Kondensation stellt man den pH-Wert auf 5,0.

32 g Kupferphthalocyaninkomponente der Formel

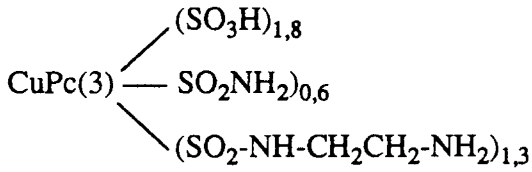

hergestellt nach den Angaben der Europäischen Patentschrift 0 073 267, werden in 300 ml Wasser bei pH 7,0 bis 7,5 gelöst. Man läßt nun die Lösung des obigen Kondensationsproduktes zu der Farbstoffkomponente bei 0 bis 5 °C zulaufen und hält den pH-Wert in der Reaktionsmischung auf 7,0 bis 7,5. Nach 3 Stunden läßt man die Temperatur allmählich auf 20 °C ansteigen und hält weiterhin den pH-Wert konstant. Nach beendeter Umsetzung wird das erhaltene Produkt aus der Lösung ausgesalzen, abgesaugt, mit etwas Phosphatlösung bei pH 6,0 gepuffert und im Vakuum bei 45 °C getrocknet. Der Farbstoff entspricht der Formel

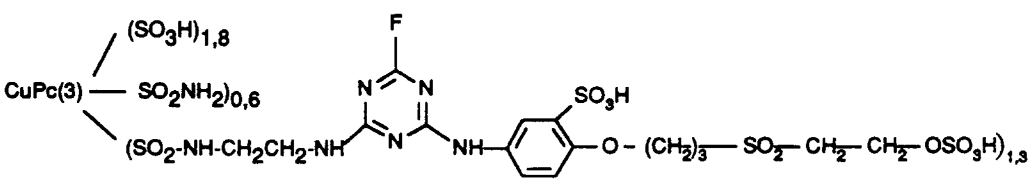

und färbt Baumwolle aus langer Flotte und nach den üblichen Kontinue-Verfahren in türkisblauen Tönen. $\lambda_{max}$ = 668 nm, 627 nm in Wasser.

Beispiel 100

28,3 g Kupferphthalocyaninverbindung der Formel

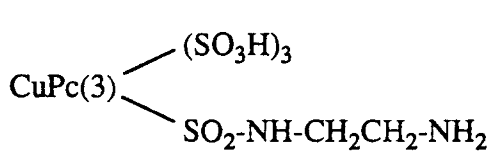

(hergestellt durch Kondensation von Kupferphthalocyanintetrasulfochlorid/Sulfonsäuremit Monoacetylethylendiamin und anschließende Verseifung gemäß den Angaben der Deutschen Offenlegungsschrift 1 644 681, Beispiel 2) werden in 380 ml Wasser bei pH 8,5 gelöst. Die Lösung wird in 30 Minuten zu einer Suspension getropft, die durch Eingießen einer Lösung von 5,6 g Cyanurchlorid in 45 ml Aceton auf 45 g Eis erhalten wird. Man halt im Reaktionsgemisch den pH-Wert durch Zugabe von 2 n Natronlauge auf 7,0

bis 7,5 und die Temperatur auf 0 bis 5 °C. Nach 1stündigem Nachrühren wird die Lösung geklärt und das Filtrat portionsweise mit 10,3 g 2-[3-(2-Sulfatoethylsulfonyl)-propoxy]-5-aminobenzolsulfonsäure versetzt. Während des Eintragens und später hält man den pH-Wert im Reaktionsgemisch auf 6,0 bis 6,5 und steigert nach dem Eintragen die Temperatur auf 20 bis 25 °C. Nach beendeter Kondensation wird der Farbstoff aus der Lösung mit Natriumchlorid ausgesalzen, abgesaugt und bei 40 bis 50 °C im Vakuum getrocknet. Der Farbstoff hat die Formel

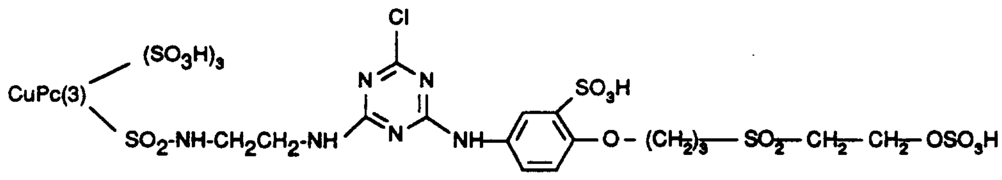

und gibt auf Cellulosegewebe türkisblaue Färbungen und Drucke mit guter Ergiebigkeit.
$\lambda_{max}$ = 668 nm, 629 nm in $H_2O$.

Beispiel 101

31,2 g Kupferphthalocyanin-Verbindung der Formel

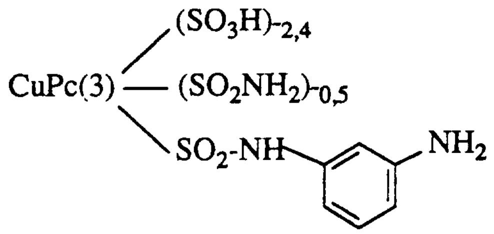

hergestellt durch Kondensation von Kupferphthalocyanin-tetrasulfochlorid/sulfonsäure mit 3-Aminoacetanilid und Ammoniak sowie nachfolgende Verseifung der Acetylaminogruppe in verdünnter Natronlauge bei 75 °C, werden in 420 ml Wasser bei pH 7 gelöst. Man tropft die Lösung in 30 Minuten zu einer Suspension, die man aus einer Lösung von 5,9 g Cyanurchlorid in 50 ml Aceton und 50 g Eis hergestellt hat, und hält im Reaktionsgemisch die Temperatur auf 0 bis 3 °C, den pH-Wert durch Zudosieren von 2 n Sodalösung auf 4,0 bis 4,5. Nach 30 Minuten seit Ende der Zugabe wird die entstandene Lösung geklärt und mit einer neutralen Lösung von 10,9 g 4-[3-(2-Sulfatoethylsulfonyl)-propoxy]-anilin in 200 ml Wasser versetzt. Durch weitere Sodazugabe wird die Kondensation bei pH 6,0 bis 6,5 durchgeführt, wobei die Temperatur auf 20 bis 25 °C eingestellt wird. Der erhaltene Farbstoff wird entweder durch Eindampfen im Vakuum oder durch Aussalzen und Absaugen mit anschließender Trocknung isoliert.

Er entspricht der Formel

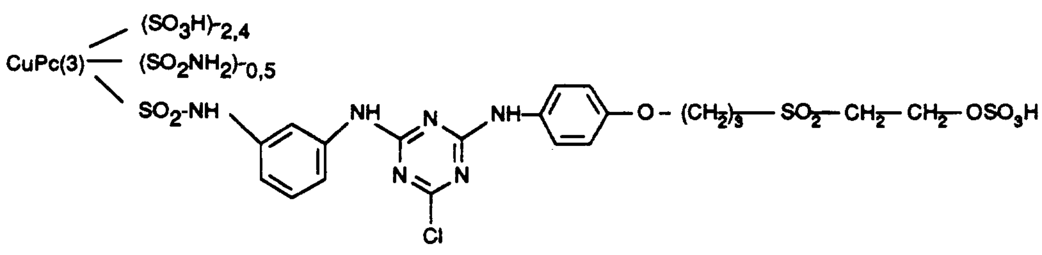

$\lambda_{max}$ = 668 nm, 629 nm in Wasser
und färbt und druckt Baumwolle nach den für Reaktivfarbstoffe bekannten Verfahren echt und ergiebig in türkisblauen Tönen.

Weitere Phthalocyanin-Reaktivfarbstoffe werden erhalten, wenn man die in nachfolgender Zusammenstellung angegebenen Phthalocyaninkomponenten, Trihalogentriazine und β-Sulfatoethylsulfonylalkoxyaniline nach einer der vorstehend beschriebenen Methoden miteinander kondensiert.

| Nr. | Phthalocyaninkomponente | Trihalogen-triazin | β-Sulfatoethylsulfonyl-alkoxy-anilin | Farbton |
|---|---|---|---|---|
| 102 | 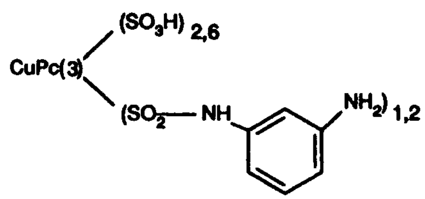 | 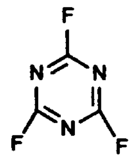 | 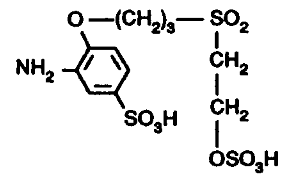 | türkis |
| 103 | 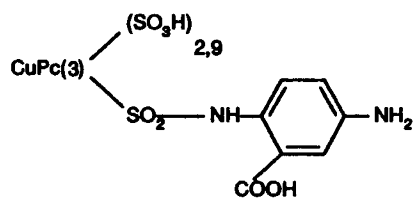 | 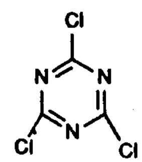 | 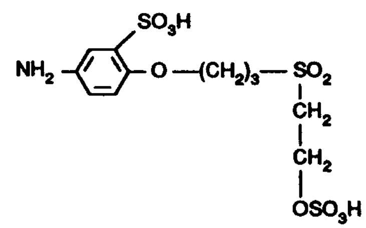 | türkis |
| 104 | 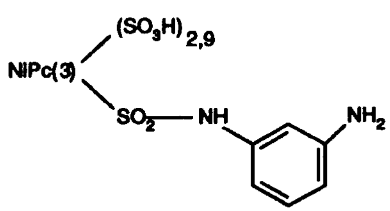 | 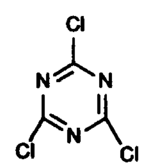 | 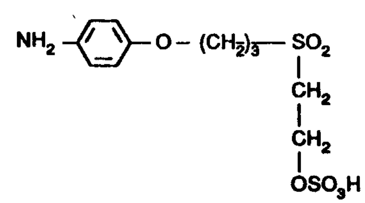 | blaustichig grün |
| 105 | 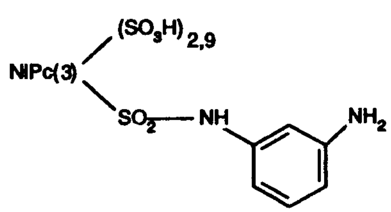 | 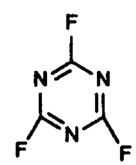 | 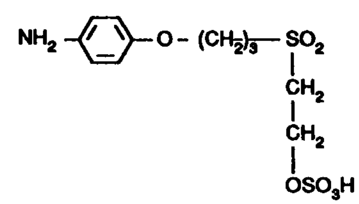 | blaustichig grün |

| Nr. | Phthalocyaninkomponente | Trihalogen-triazin | β-Sulfatoethylsulfonyl-alkoxy-anilin | Farbton |
|---|---|---|---|---|
| 106 | 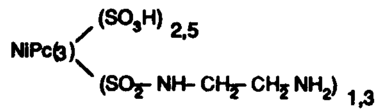 | 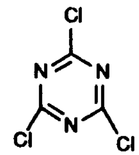 | 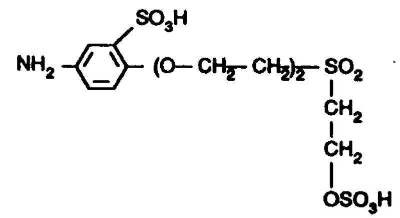 | blaustichig grün |
| 107 | 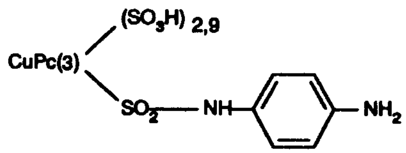 | 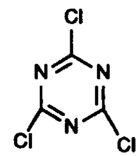 | 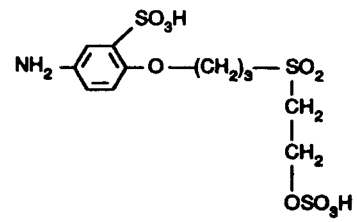 | türkis |
| 108 | 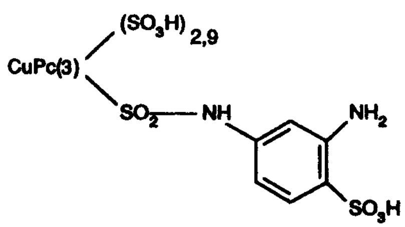 | 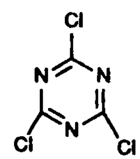 | 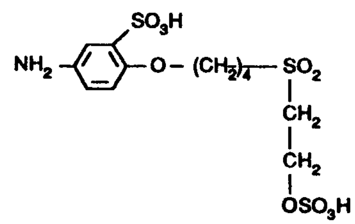 | türkis |
| 109 | 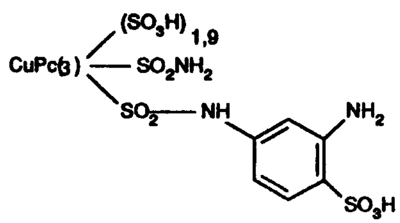 | 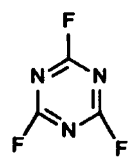 | 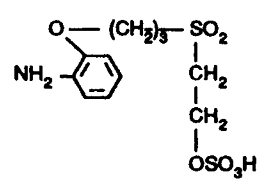 | türkis |

| Nr. | Phthalocyaninkomponente | Trihalogen-triazin | β-Sulfatoethylsulfonyl-alkoxy-anilin | Farbton |
|---|---|---|---|---|
| 110 | 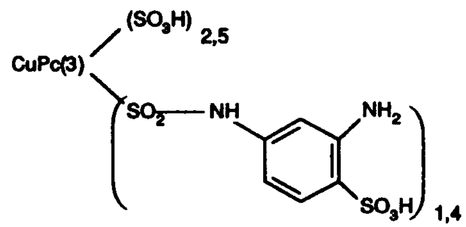 | 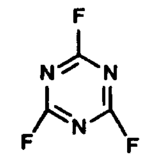 | 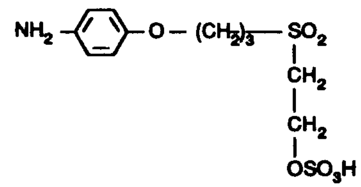 | türkis |
| 111 | 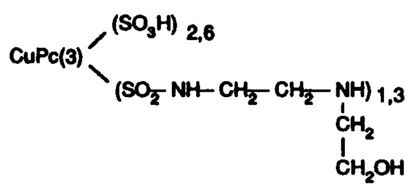 | 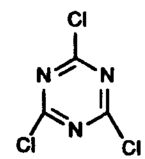 | 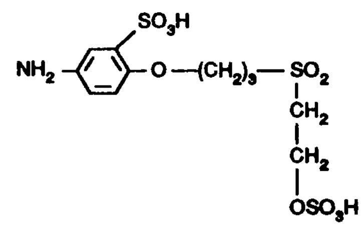 | türkis |
| 112 | 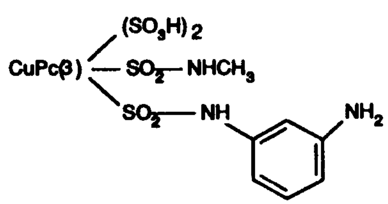 | 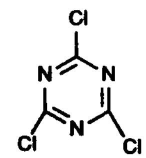 | 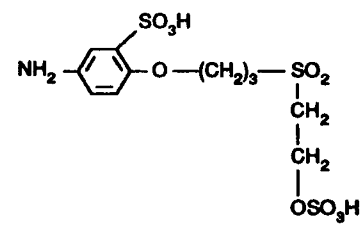 | türkis |
| 113 | 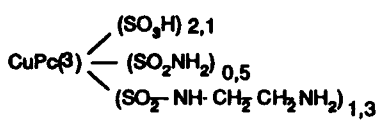 | 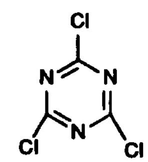 | 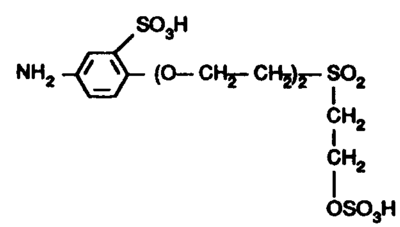 | türkis |

| Nr. | Phthalocyaninkomponente | Trihalogen-triazin | β-Sulfatoethylsulfonyl-alkoxy-anilin | Farbton | $\lambda_{max}$ ($H_2O$) |
|---|---|---|---|---|---|
| 113a | 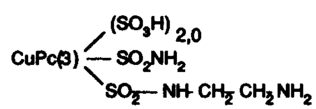 | 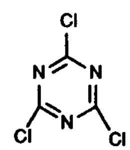 | 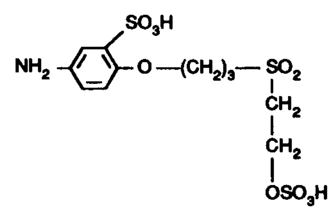 | türkis | 668 nm, 627 nm |

Beispiel 114

36,7 g der auf bekanntem Weg hergestellten Amino-disazoverbindung der Formel

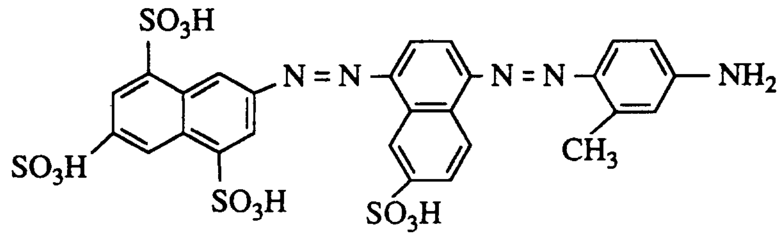

werden in 400 ml Wasser bei einem pH-Wert von 6,0 gelöst. Nach Abkühlung der Lösung auf 0 °C läßt man zügig 5,0 ml Cyanurfluorid zutropfen und hält den pH-Wert mit 2 n Sodalösung auf 4,5 bis 5,0.

Nach Beendigung dieser ersten Kondensationsstufe trägt man 19,1 g 4-[3-(2-Sulfatoethylsulfonyl)-propoxy]-anilin ein und hält den pH-Wert mit Sodalösung auf 5,5 bis 6,0. Man rührt 2 Stunden bei 0 bis 5 °C nach und läßt dann unter weiterer pH-Kontrolle die Temperatur auf 20 °C ansteigen. Der erhaltene Farbstoff der Formel

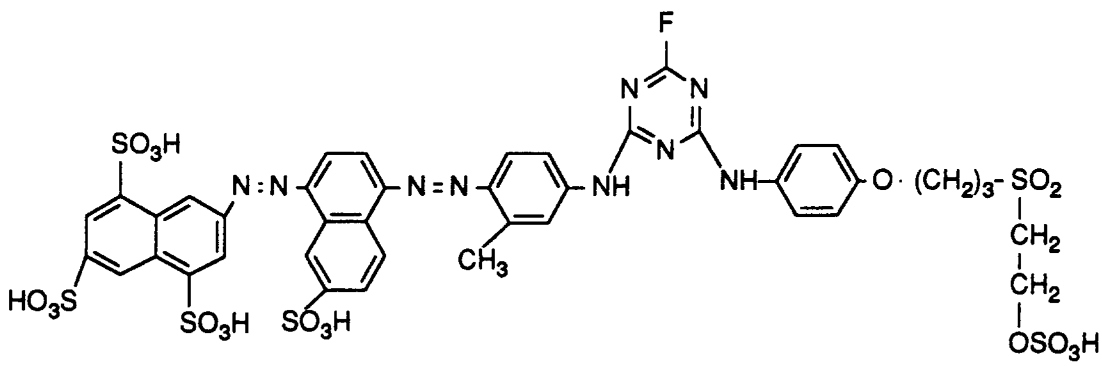

wird mit Natriumchlorid ausgesalzen, abgesaugt und nach Pufferung bei pH 6 im Vakuum bei 45 °C getrocknet. Er färbt Baumwolle nach den für Reaktivfarbstoffe bekannten Verfahren ergiebig in braunen Tönen.

Beispiel 115

Setzt man anstelle der Aminodisazoverbindung des Beispiels 114 die Verbindung der Formel

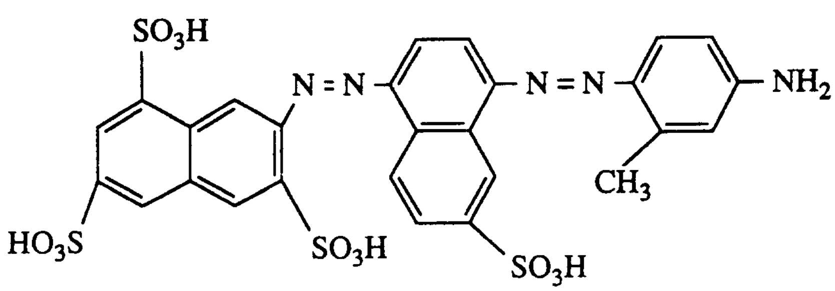

kondensiert mit Cyanurfluorid und anschließend mit der Verbindung der Formel

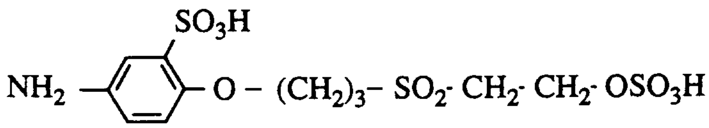

so erhält man einen Farbstoff der Formel

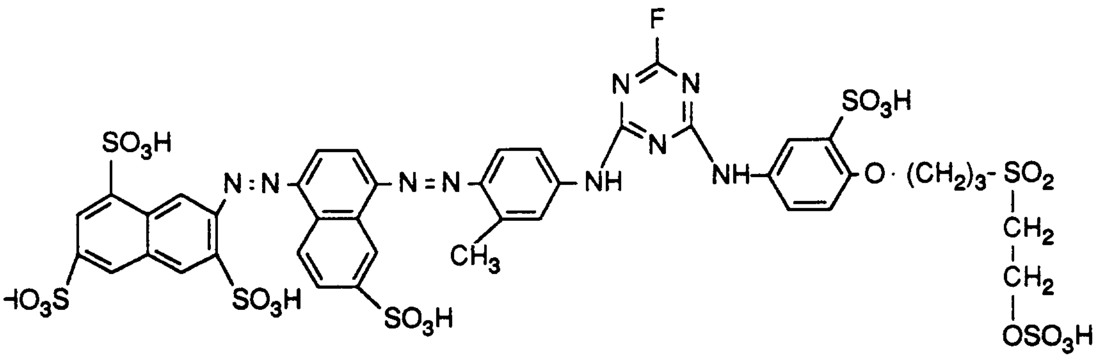

der Baumwolle ebenfalls ergiebig in braunen Tönen färbt.

Weitere braune Reaktivfarbstoffe erhält man durch Kondensation der folgenden Komponenten.

| Nr. | Aminodisazoverbindung | Trihalogen-triazin | β-Sulfatoethylsulfonyl-alkoxy-anilin | Farbton |
|---|---|---|---|---|
| 116 | 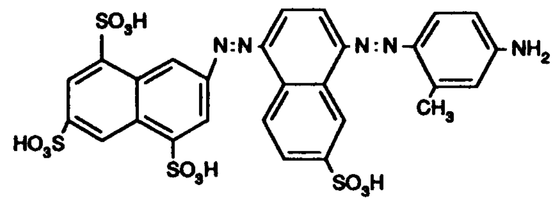 | 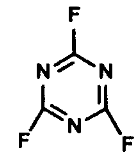 | 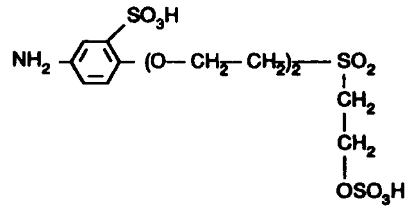 | braun |
| 117 | 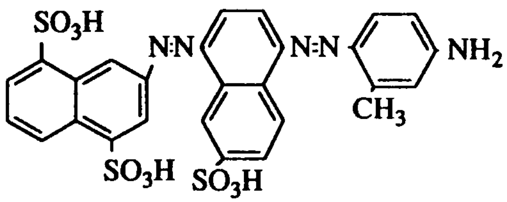 | 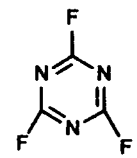 | 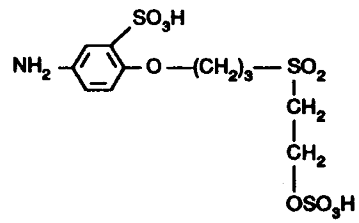 | braun |
| 118 | 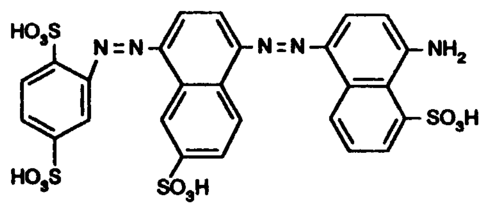 | 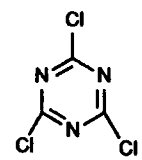 | 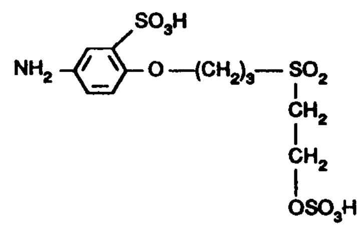 | braun |
| 119 | 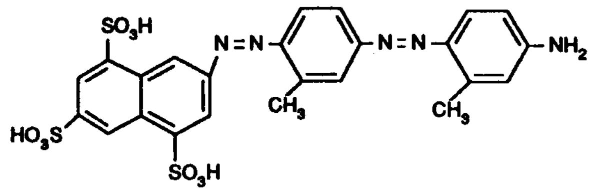 | 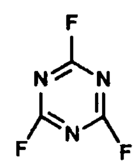 | 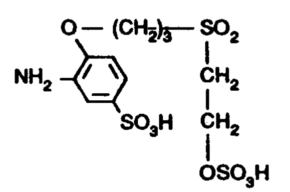 | orangebraun |

Beispiel 120

50,3 g Aminoazoverbindung der Formel

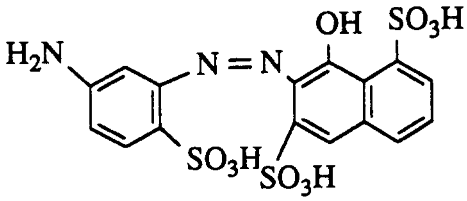

werden in 400 ml Wasser bei pH 6 gelöst. Man kühlt die Lösung auf 0 bis 2 °C ab und läßt 9,3 ml Cyanurfluorid in einigen Minuten zutropfen. Während dieser Operation hält man den pH-Wert mit 2 n Sodalösung auf 4,5 und rührt dann unter den gleichen Bedingungen noch kurze Zeit nach. Ist der Sodaverbrauch zum Stillstand gekommen, laßt man eine mit 10 %iger Lithiumhydroxid-Lösung auf pH 6 gestellte Lösung von 35,4 g 4-[3-(2-Sulfatoethylsulfonyl)-propoxy]-anilin in 180 ml Wasser zulaufen und hält den pH-Wert im Reaktionsgemisch auf 5,5 bis 6,0. Nach 3 Stunden läßt man die Temperatur allmählich auf 20 °C ansteigen und isoliert den erhaltenen Farbstoff der Formel

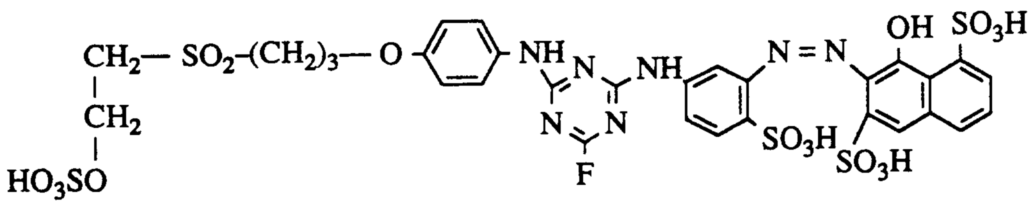

durch Aussalzen und Absaugen. Nach schonender Trocknung erhält man ein Pulver, das Baumwolle nach den üblichen Methoden ergiebig in Scharlachtönen färbt.

Beispiel 121

Ersetzt man in Beispiel 120 die Aminoazoverbindung durch eine äquivalente Menge der isomeren Verbindung

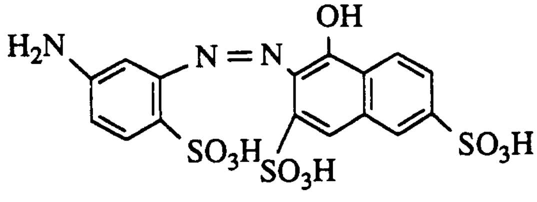

kondensiert mit Cyanurfluorid und in zweiter Stufe mit der Verbindung der Formel

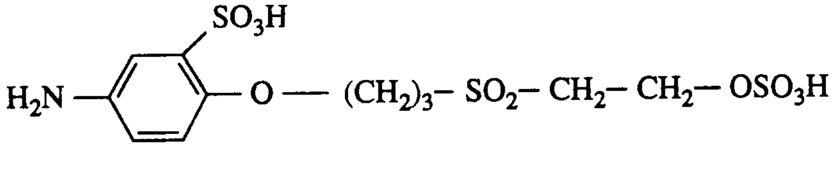

so erhält man den Farbstoff der Formel

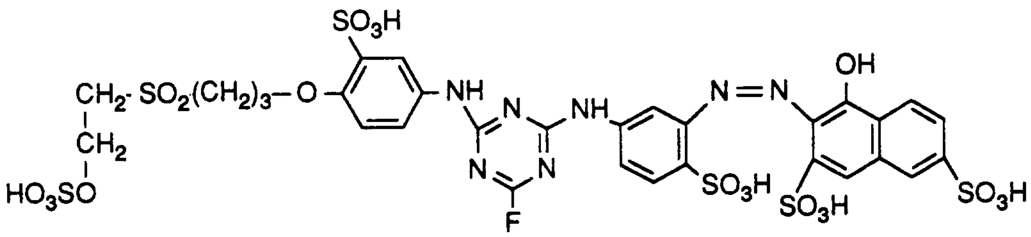

der Baumwolle in rotstichigen Orangetönen mit guten Fixierausbeuten färbt.

Weitere Reaktivfarbstoffe auf der Basis von Aminoazonaphtholverbindungen erhält man durch Kondensation nachstehender Komponenten.

| Nr. | Aminoazonaphtholkomponente | Trihalogen-triazin | β-Sulfatoethylsulfonyl-alkoxy-anilin | Farbton |
|---|---|---|---|---|
| 122 | 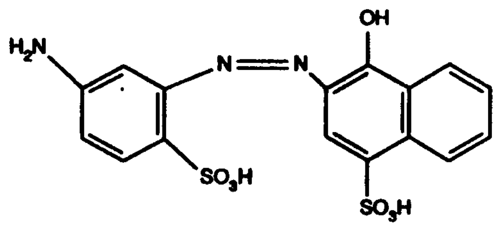 | 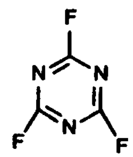 | 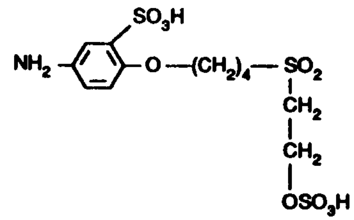 | orange |
| 123 | 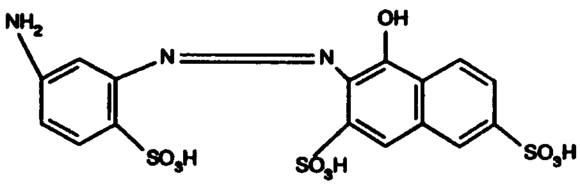 | 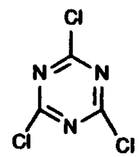 | 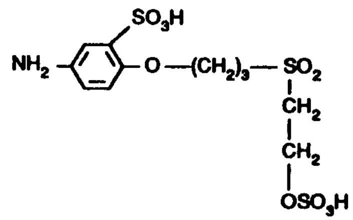 | orange |
| 124 | 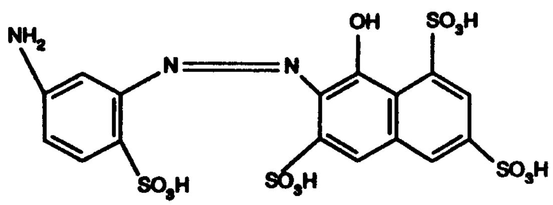 | 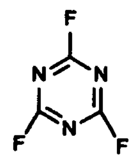 | 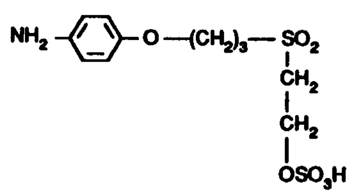 | gelbstichig rot |
| 125 | 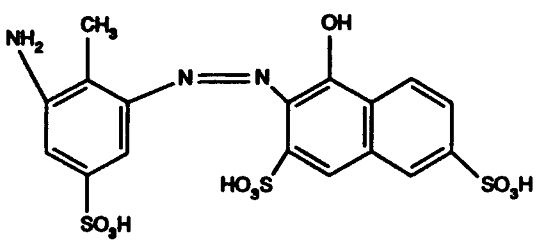 | 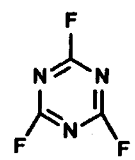 | 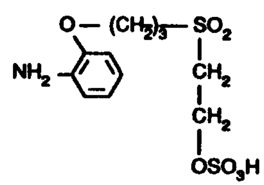 | orange |

| Nr. | Aminoazonaphtholkomponente | Trihalogentriazin | β-Sulfatoethylsulfonyl-alkoxy-anilin | Farbton |
|---|---|---|---|---|
| 126 | 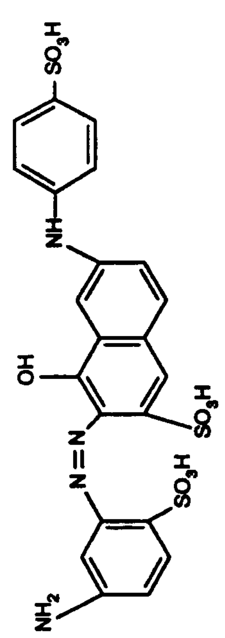 | 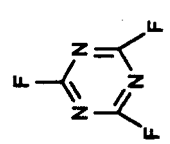 | 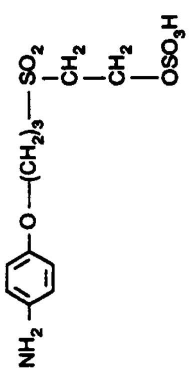 | braun |
| 127 | 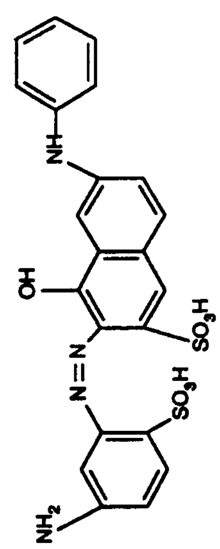 | 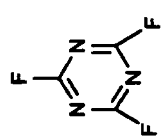 | 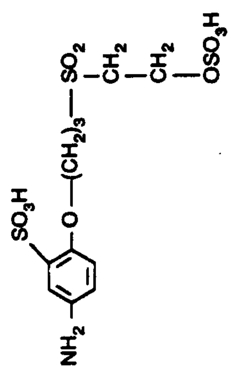 | braun |

Beispiel 126

18,8 g 2,4-Diaminobenzolsulfonsäure werden in 100 ml Wasser bei 0 bis 3 °C und pH 4,5 mit 18,5 g Cyanurchlorid kondensiert. Man versetzt mit 105 ml 10 %iger Salzsäure, gibt dann 6,9 g $NaNO_2$ in 60 ml

Wasser hinzu und rührt bis zur Beendigung der Diazotierung.
Man läßt zu der Diazosuspension eine neutrale wäßrige Lösung von 36,1 g 1-Acetylamino-8-hydroxynaphthalin-4,6-disulfonsäure zulaufen und stellt zwecks Kupplung den pH-Wert mit Sodalösung auf 6,5 bis 7,0. Man läßt die Temperatur in 2 Stunden auf 10 °C und in weiteren 2 Stunden auf 20 °C ansteigen.
Nach beendeter Kupplung trägt man in den Ansatz 34 g 4-[3-(2-Sulfatoethylsulfonyl)-propoxy]-anilin portionsweise ein und hält den pH-Wert weiter auf 6,5. Ist die Kondensation beendet, wird der erhaltene Farbstoff der Formel

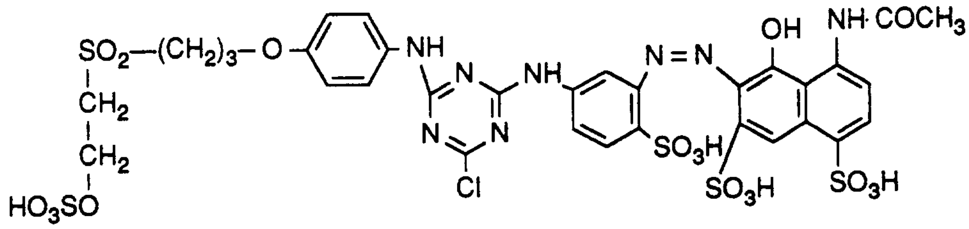

ausgesalzen, abgesaugt, im Vakuum bei 45 °C getrocknet.
Er färbt Baumwolle mit guter Fixierausbeute in roten Tönen.

Ähnliche Farbstoffe erhält man, wenn man die in nachfolgender Zusammenstellung angegebenen Komponenten miteinander kondensiert.

| Nr. | Diaminobenzol-sulfonsäure | Trihalogen-triazin | Kupplungskomponente | β-Sulfatoethylsulfonyl-alkoxy-anilin | Farbton |
|---|---|---|---|---|---|
| 129 | 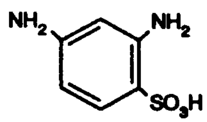 | 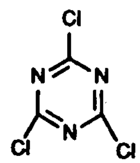 | 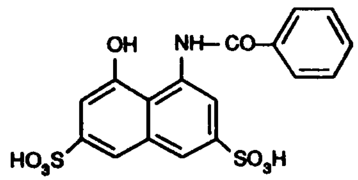 | 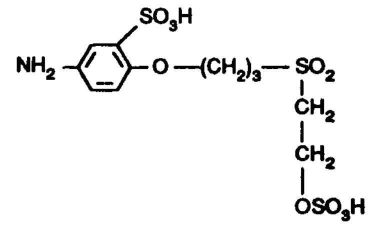 | rot |
| 130 | 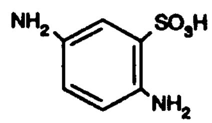 | 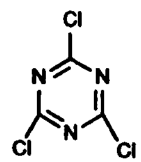 | 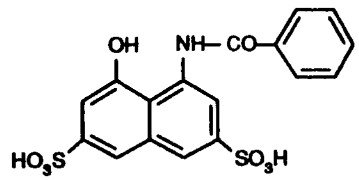 | 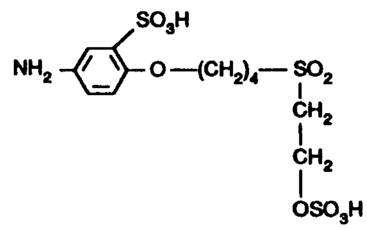 | rot |
| 131 | 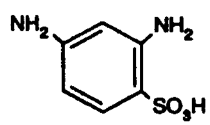 | 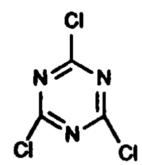 | 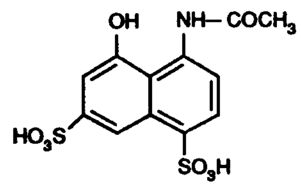 | 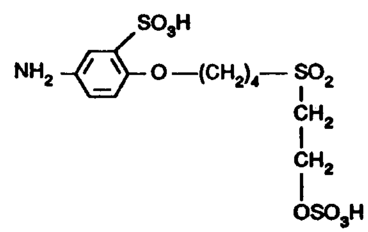 | rot |
| 132 | 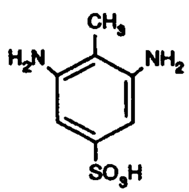 | 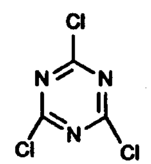 | 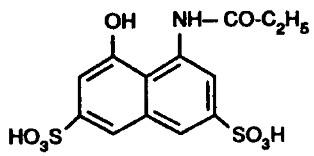 | 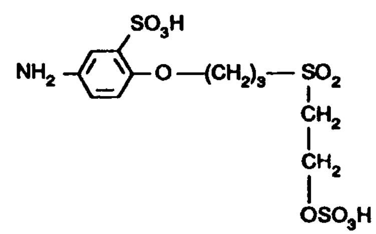 | rot |

| Nr. | Diaminobenzol-sulfonsäure | Trihalogen-triazin | Kupplungskomponente | β-Sulfatoethylsulfonyl-alkoxy-anilin | Farbton |
|---|---|---|---|---|---|
| 133 | 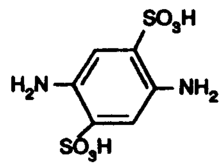 | 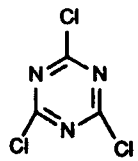 | 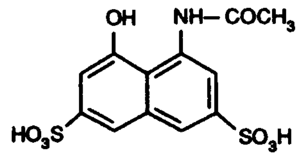 | 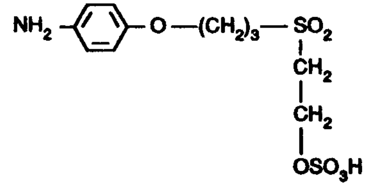 | rot |
| 134 | 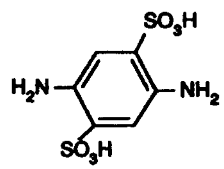 | 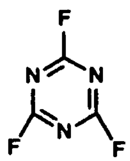 | 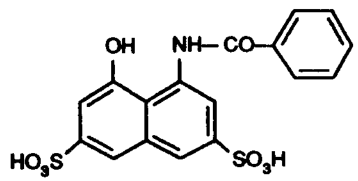 | 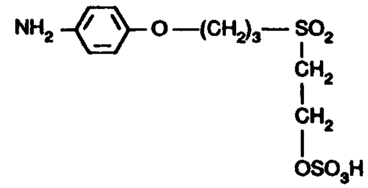 | rot |
| 135 | 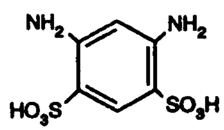 | 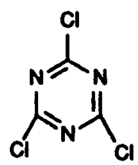 | 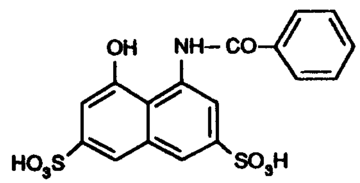 | 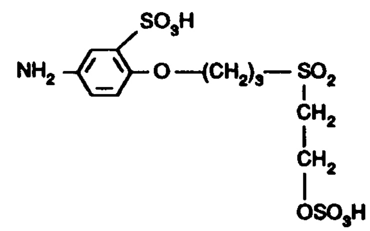 | rot |

Beispiel 136

Gemäß Beispiel 99 kondensiert man 21,0 g Komponente der Formel

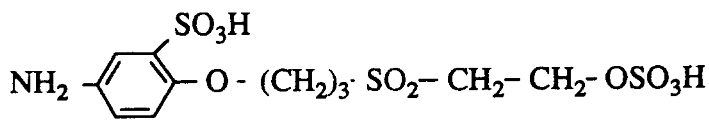

mit 7,4 g Cyanurfluorid in 80 ml Wasser in Gegenwart von 2,1 g Natriumfluorid. Die erhaltene Lösung des Kondensationsproduktes läßt man in eine auf pH 7 gestellte, 0 bis 5 °C gekühlte Lösung von 31 g Azoverbindung der Formel

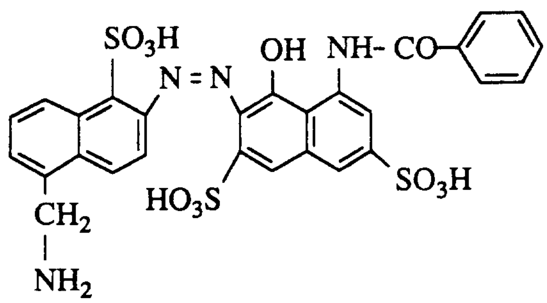

in 300 ml Wasser einlaufen und halt dabei den pH-Wert in der Mischung mit verdünnter Sodalösung auf 6,5. Nach 3 Stunden wird die Temperatur allmählich auf 20 °C gesteigert. Nach beendeter Kondensation wird der Farbstoff durch Aussalzen und Absaugen isoliert und nach Pufferung auf einen pH-Wert von 6,5 im Vakuum bei 45 °C getrocknet. Er entspricht der Formel

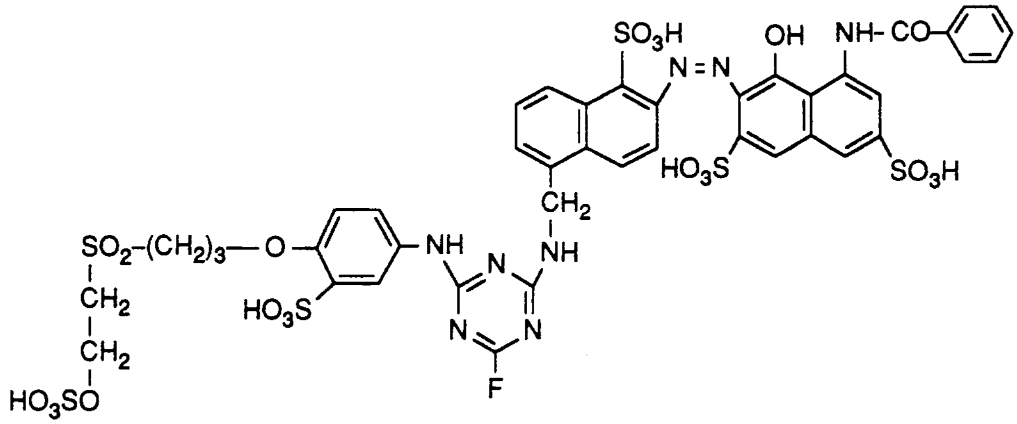

und färbt Baumwolle aus langer Flotte in blaustichig roten Tönen mit guter Fixierausbeute.

Ähnliche rote Farbstoffe erhält man durch Umsetzung folgender Komponenten.

| Nr. | Azokomponente | Trihalogen-triazin | 2-Sulfatoethylsulfonyl-alkoxy-anilin |
|---|---|---|---|
| 137 | 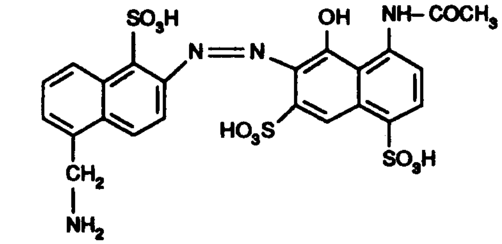 | 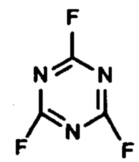 | 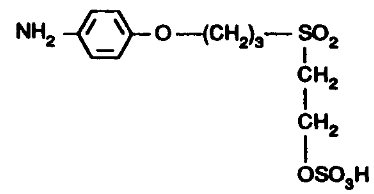 |
| 138 | 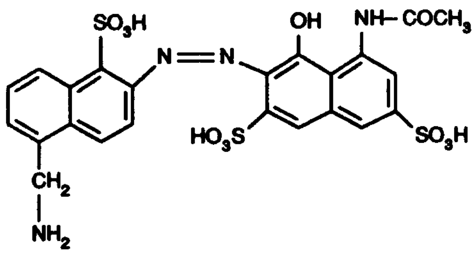 | 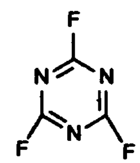 | 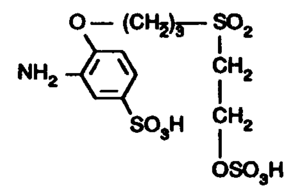 |
| 139 | 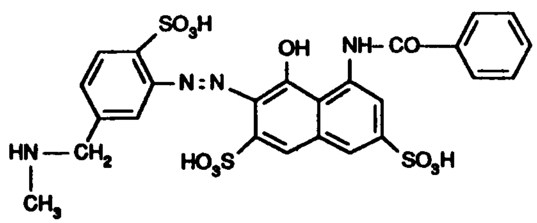 | 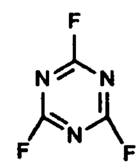 | 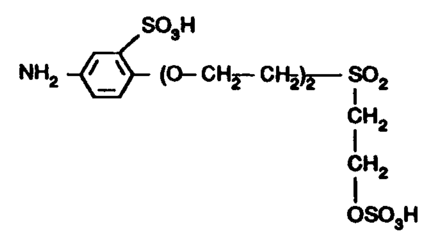 |
| 140 | 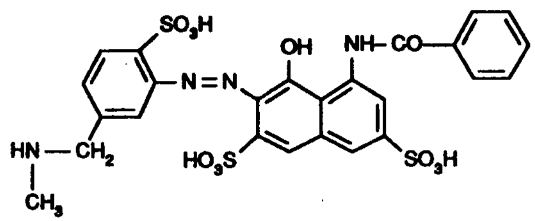 | 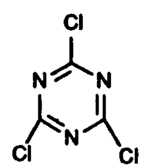 | 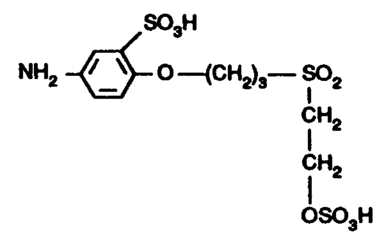 |

Beispiel 141

Gemäß Beispiel 99 werden 21 g 5-Amino-2-[3-(2-sulfatoethylsulfonyl)-propoxy]-benzolsulfonsäure in 80 ml Wasser und 2,1 g Natriumfluorid mit 7,5 g Cyanurfluorid kondensiert.

22,1 g Triphendioxazinverbindung der Formel

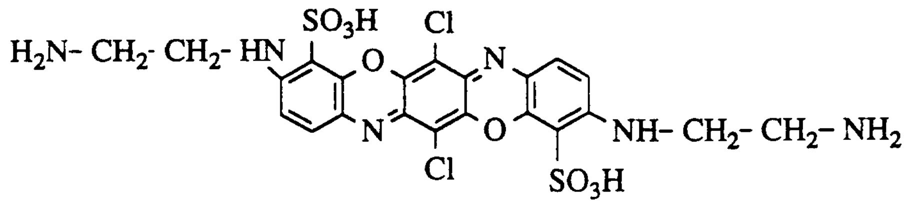

werden in 300 ml Wasser durch Zugabe von Natronlauge bei pH 11,5-12 gelöst.

Man läßt nun diese Lösung und die der oben hergestellten Reaktivkomponenten gleichzeitig in 80 ml vorgelegtes Eis-Wasser eintropfen und hält in dem Reaktionsgemisch den pH-Wert mit 2n Natronlauge auf 8-8,5, die Temperatur weiter auf 0-2 ° C. Nach mehreren Stunden ist die Umsetzung beendet. Man läßt die Temperatur über Nacht auf 20 ° C ansteigen. Der Farbstoff wird ausgesalzen, abgesaugt und nach Pufferung auf pH 6,7 bei 45 ° C im Vakuum getrocknet. Er entspricht der Formel

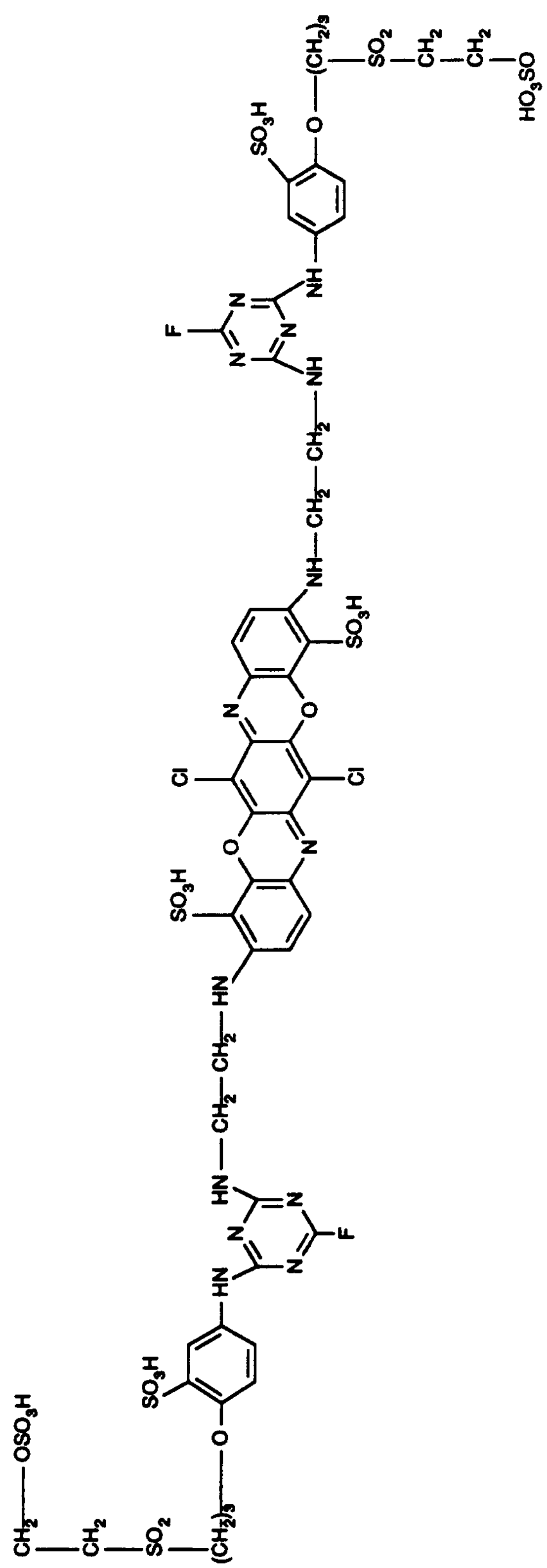

und färbt Baumwolle nach den üblichen Methoden mit guten Fixierausbeuten in kräftigen Blautönen.

Beispiel 142

27 g Triphendioxazinverbindung der Formel

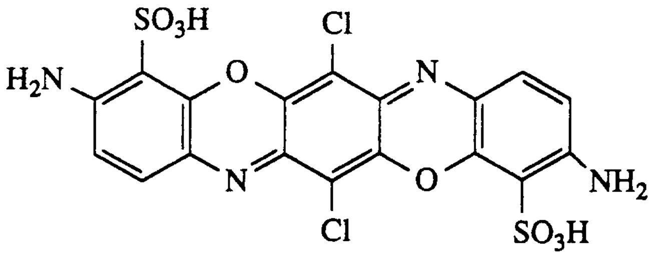

werden in 1.000 ml Wasser mit 10 %iger Lithiumhydroxid durch Einstellen des pH-Wertes auf 7,0 gelöst. Man kühlt auf 0 bis 5 ° C ab und tropft eine Lösung von 9,2 g Cyanurchlorid in 50 ml Aceton dazu.
Der pH-Wert im Reaktionsgemisch wird durch Zutropfen von Lithiumhydroxid-Lösung auf 6,0 bis 6,5 gehalten. Zur Beendigung der Umsetzung steigert man die Temperatur innerhalb von 2 Stunden auf 20 ° C und hält den pH-Wert weiter in den obigen Grenzen, bis der Verbrauch an Neutralisationsmittel zum Stillstand kommt. Nun wird eine neutralisierte Lösung von 20,8 g 5-Amino-2-[3-(β-sulfatoethylsulfonyl)-propoxy]-benzolsulfonsäure in 80 ml Wasser zu dem Primär-Kondensationsprodukt gegeben und der pH-Wert weiter mit Lithiumhydroxid auf 6,0 bis 6,5 gehalten.

Der erhaltene Farbstoff der Formel

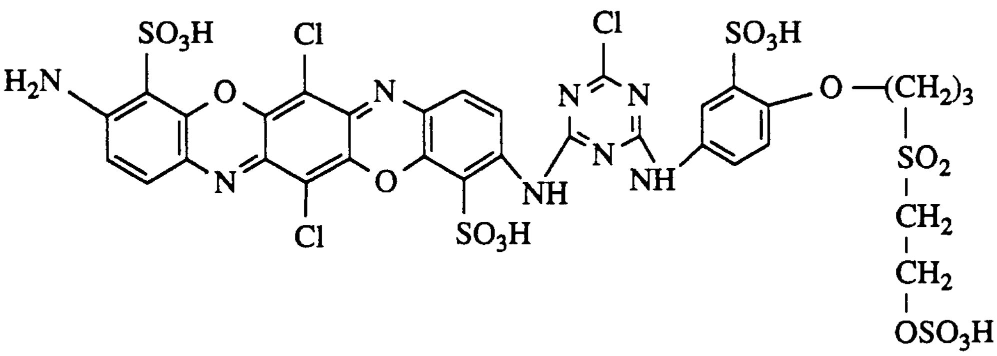

färbt Baumwolle aus langer Flotte mit einer optimalen Färbetemperatur von 70 bis 80 ° C in stark rotstichig blauen Tönen.

Weitere Triphendioxazin-Reaktivfarbstoffe werden in analoger Verfahrensweise zu den Beispielen 141 und 143 durch Kondensation folgender Komponenten hergestellt:

| Nr. | Triphendioxazin | Trihalogen-triazin | β-Sulfatoethylsulfonyl-alkoxy-anilin | Farbton |
|---|---|---|---|---|
| 143 | 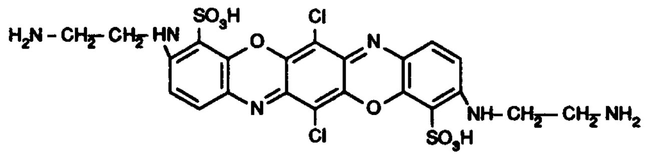 | 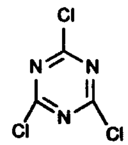 | 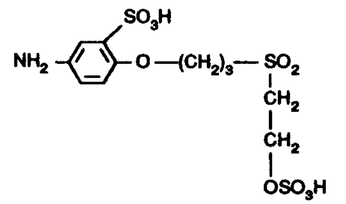 | blau |
| 144 | 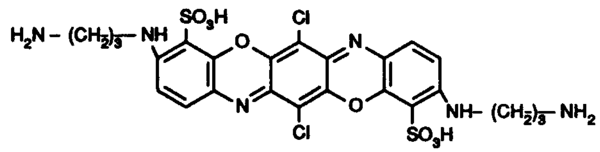 | 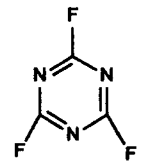 | 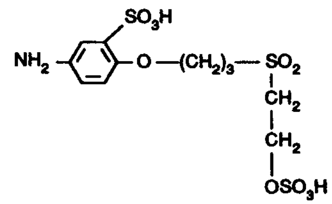 | blau |
| 145 | 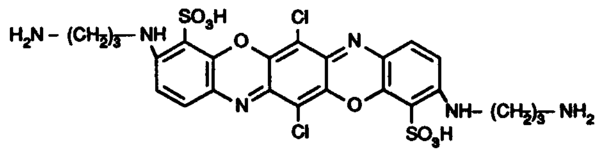 | 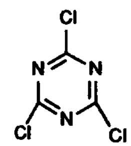 | 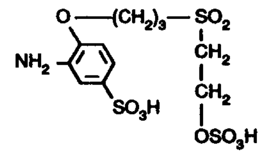 | blau |
| 145a | 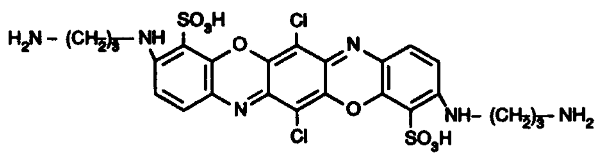 | 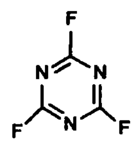 | 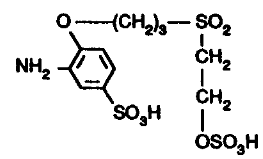 | blau |
| 146 | 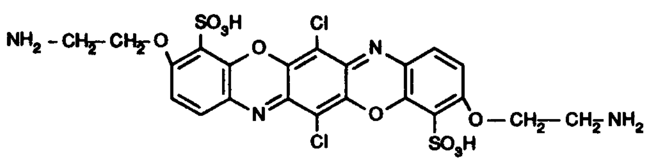 | 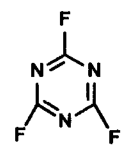 | 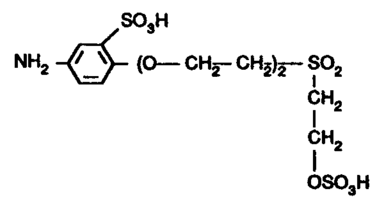 | blaustichig rot |

| Nr. | Triphendioxazin | Trihalogen-triazin | β-Sulfatoethylsulfonyl-alkoxy-anilin | Farbton |
|---|---|---|---|---|
| 147 | 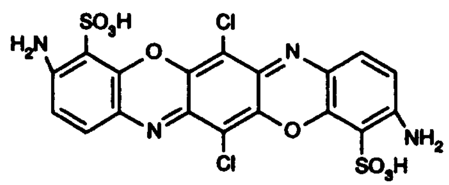 | 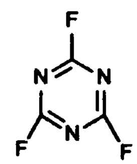 | 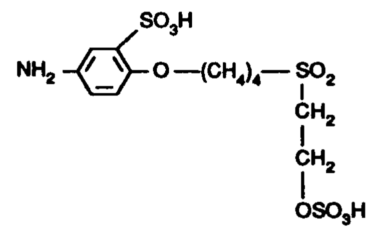 | rotstichig blau |
| 148 | 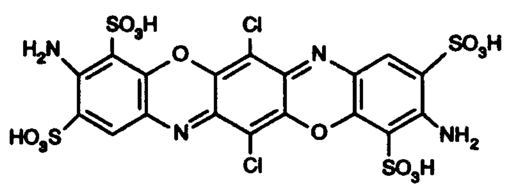 | 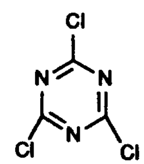 | 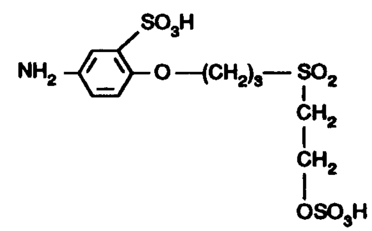 | rotstichig blau |

Beispiel 149

35,2 g der bekannten Verbindung

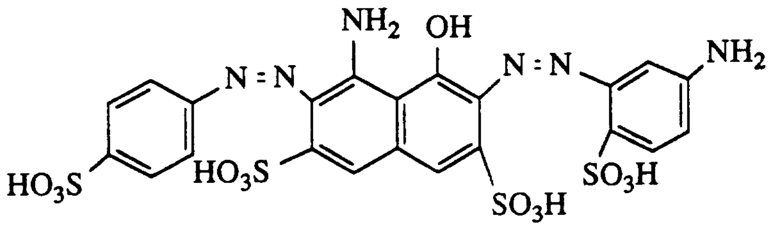

werden in 350 ml Wasser gelöst und der pH-Wert der Lösung auf 5,0 gestellt. Man kühlt die Lösung auf 0 ° C ab, laßt 7,4 g Cyanurfluorid zutropfen und hält den pH-Wert mit 2 n Sodalösung auf 4,5.
Nach beendeter Umsetzung gibt man eine neutralisierte Lösung von 23,0 g 5-Amino-2-[3-(2-sulfatoethylsulfonyl)-propoxy]-benzolsulfonsäure in 70 ml Wasser hinzu und hält den pH-Wert mit 2 n Sodalösung auf 6,0, wobei die Temperatur zunächst 4 Stunden 0 bis 5 ° C gehalten und dann allmählich auf 20 ° C gesteigert wird.
Nach abgeschlossener Kondensation wird der Farbstoff nach Pufferung auf pH 6 entweder direkt durch Sprühtrocknung oder durch Aussalzen, Absaugen und Vakuumtrocknung bei 40 ° C isoliert. Der Farbstoff hat die Formel

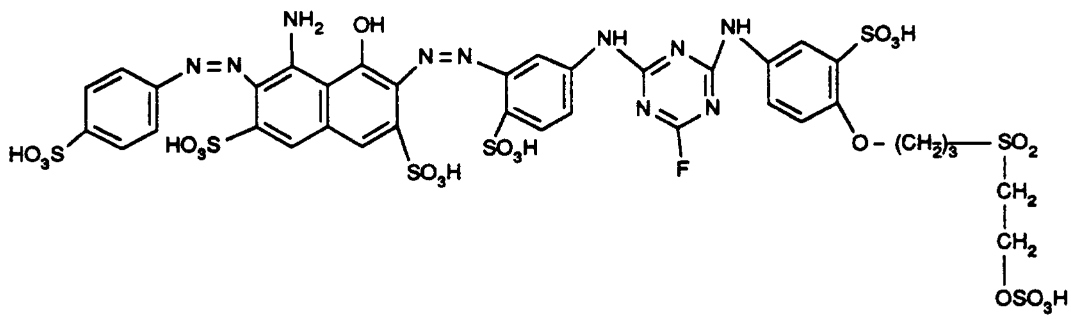

und färbt Baumwolle nach den für Reaktivfarbstoffe üblichen Färbetechniken sehr ergiebig in marineblauen Tönen.

Weitere ähnliche Cellulosefasern marineblau bis schwarz färbende Reaktivfarbstoffe werden erhalten, wenn man die in nachfolgender Zusammenstellung angegebenen Aminodisazokomponenten der allgemeinen Formel

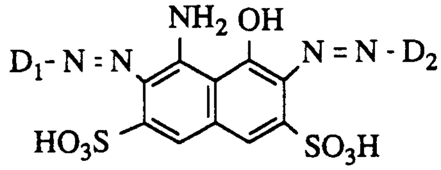

mit den Trihalogentriazinen und $\beta$-Sulfatoethylsulfonylalkoxyanilinen kondensiert.

| Nr. | Aminodisazokomponente D1 | Aminodisazokomponente D2 | Trihalogen-triazin | β-Sulfatoethylsulfonyl-alkoxy-anilin | Farbton |
|---|---|---|---|---|---|
| 150 | 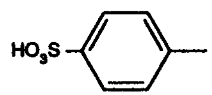 | 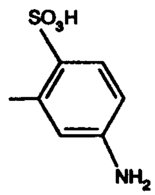 | 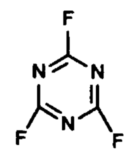 | 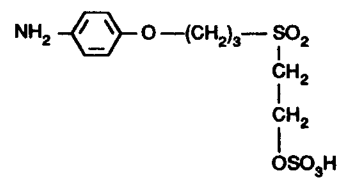 | marine |
| 151 | 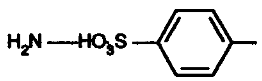 | 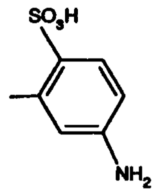 | 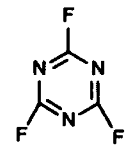 | 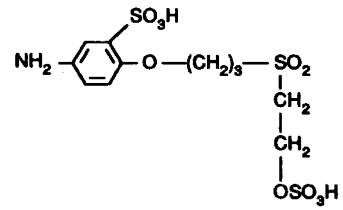 | marine |
| 152 | 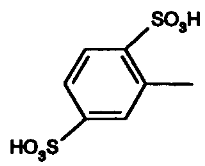 | 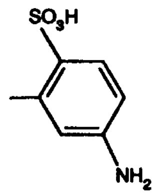 | 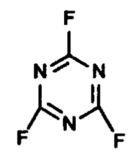 | 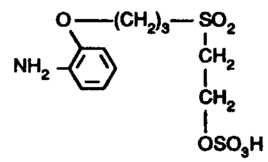 | marine |
| 152a | 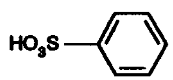 | 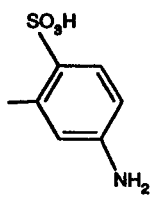 | 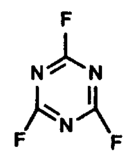 | 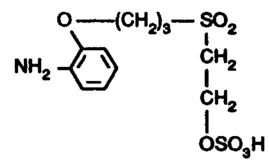 | marine |
| 153 | 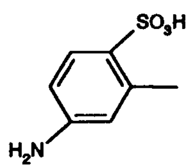 | 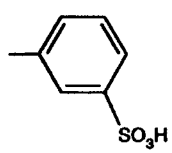 | 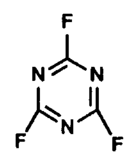 | 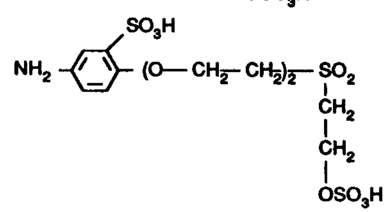 | marine |

| Nr. | Aminodisazokomponente D1 | Aminodisazokomponente D2 | Trihalogen-triazin | β-Sulfatoethylsulfonyl-alkoxy-anilin | Farbton |
|---|---|---|---|---|---|
| 154 | 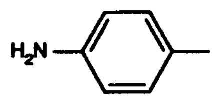 | 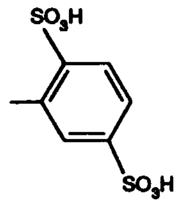 | 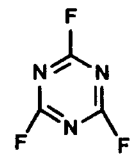 | 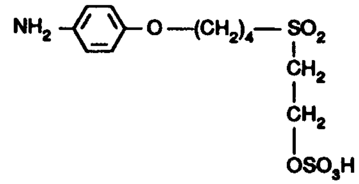 | grünstichig schwarz |
| 155 | 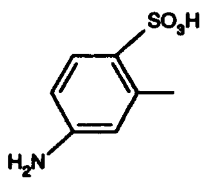 | 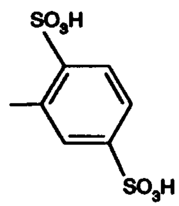 | 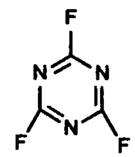 | 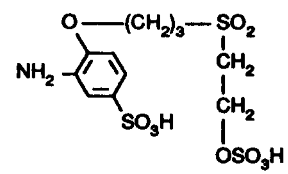 | marine |
| 156 | 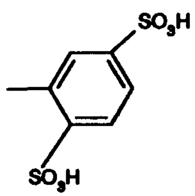 | 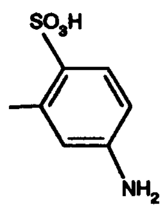 | 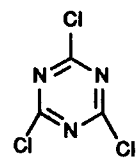 | 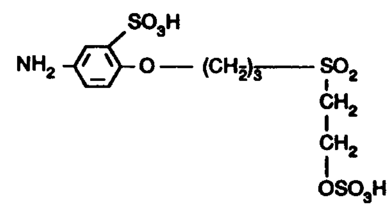 | marine |
| 157 | 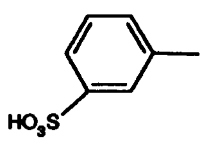 | 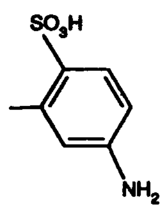 | 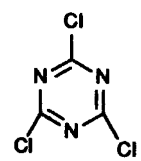 | 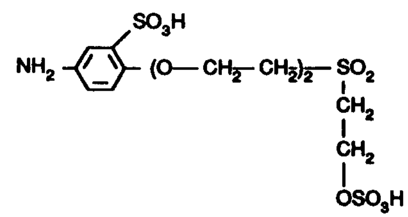 | marine |

| Nr. | Aminodisazokomponente D1 | D2 | Trihalogen-triazin | β-Sulfatoethylsulfonyl-alkoxy-anilin | Farbton |
|---|---|---|---|---|---|
| 158 | 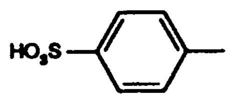 | 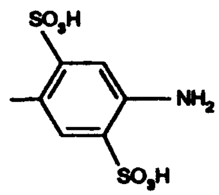 | 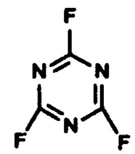 | 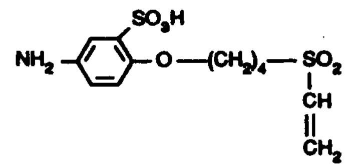 | schwarz |
| 160 | 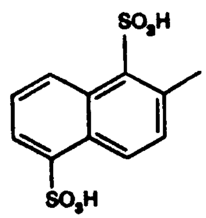 | 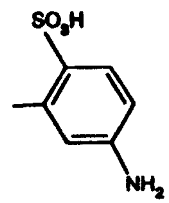 | 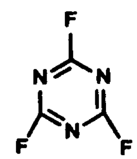 | 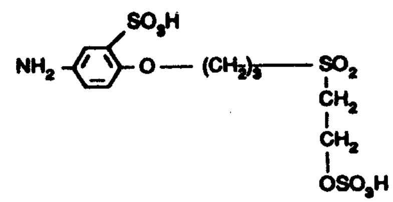 | schwarz |

Beispiel 161

50 mMol der bekannten Kupferkomplexverbindung der Formel

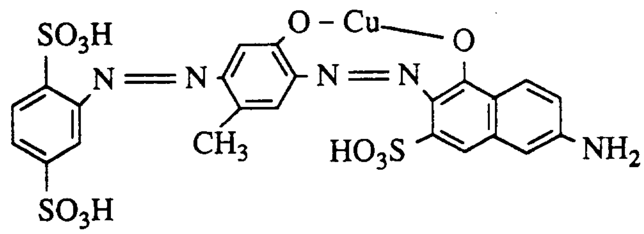

werden in 600 ml Wasser bei pH 6,5 gelöst. Man kühlt auf 0-3 °C ab und läßt zu der Lösung 7,4 g Cyanurfluorid in wenigen Minuten zutropfen. Während des Eintropfens hält man den pH-Wert mit 2n Sodalösung auf 4,5-5,0. Nach etwa viertelstündigem Nachrühren setzt man zu dem Primärkondensat eine neutralisierte Lösung von 23,0 g Verbindung der Formel

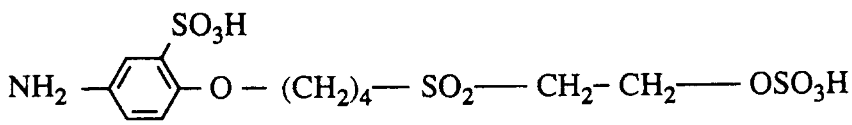

in 100 ml Wasser und hält den pH-Wert im Reaktionsgemisch mit Sodalösung auf 5,0-6,0. Wenn der Sodaverbrauch allmählich zum Stillstand kommt, läßt man die Temperatur auf 20 °C ansteigen. Nach beendeter Umsetzung wird der Farbstoff der Formel

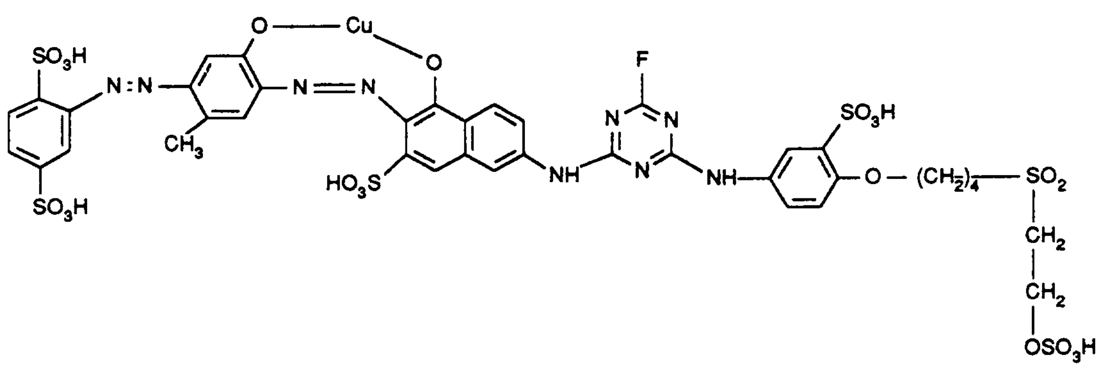

ausgesalzen, isoliert und nach Pufferung auf pH 6 im Vakuum bei 45 °C getrocknet.

Das Produkt färbt Cellulosefasern nach den für Reaktivfarbstoffe üblichen Farbtechniken mit sehr guten Fixierausbeute in marineblauen Tönen.

Beispiel 162

Eine neutralisierte Lösung von 24,1 g Komponente der Formel

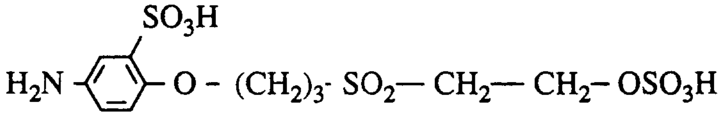

und 2,4 g Natriumfluorid in 100 ml Wasser wird analog Beispiel 99 mit 8,6 g Cyanurfluorid kondensiert.

Man läßt die erhaltene Lösung bei 0-2°C zu einer neutralen Lösung von 50 mMol der bekannten Kupferkomplexverbindung der Formel

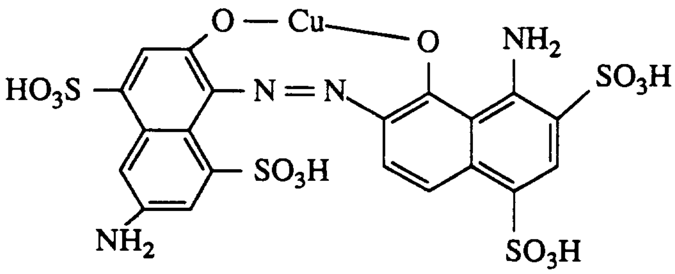

zulaufen und hält den pH-Wert im Reaktionsgemisch mit 2n Sodalösung auf 5-6. Wenn die Sodaufnahme nach einigen Stunden nachläßt, wird die Temperatur langsam auf 20°C gesteigert.

Nach Beendigung der Kondensation wird der Farbstoff der Formel

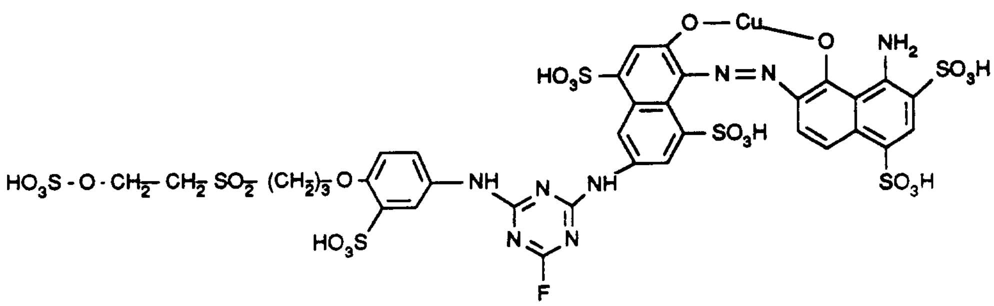

ausgesalzen, isoliert und bei 45°C im Vakuum getrocknet. Er färbt Cellulosefasern nach den für Reaktivfarbstoffe üblichen Farbtechniken in blauen Tönen.

Weitere Reaktivfarbstoffe, die Baumwolle nach den üblichen Färbetechniken sehr ergiebig färben, erhält man, wenn man die in nachfolgender Zusammenstellung angegebenen, bekannten Kupferkomplexverbindungen nach den in Beispielen 161 oder 162 dargelegten Verfahrensweisen mit den Trihalogentriazinen und den $\beta$-Sulfatoethylsulfonylalkoxyanilinen kondensiert.

| Nr. | Kupferkomplexverbindung | Trihalogen-triazin | β-Sulfatoethylsulfonyl-alkoxy-anilin | Farbton |
|---|---|---|---|---|
| 163 | 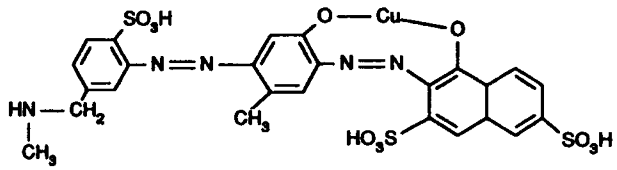 | 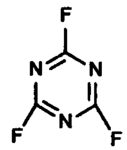 | 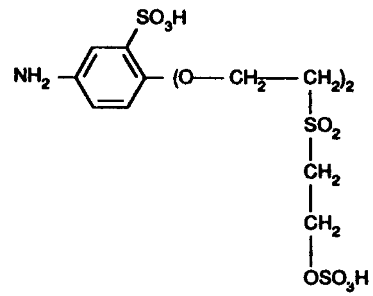 | marineblau |
| 164 | 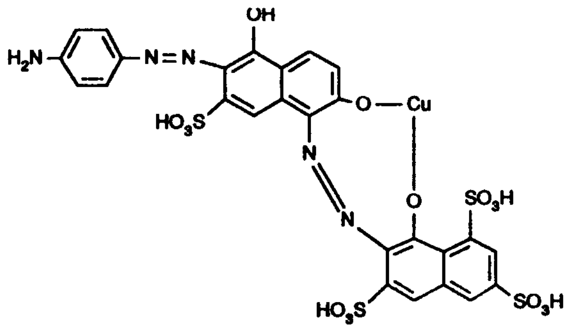 | 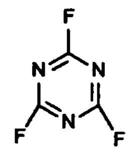 | 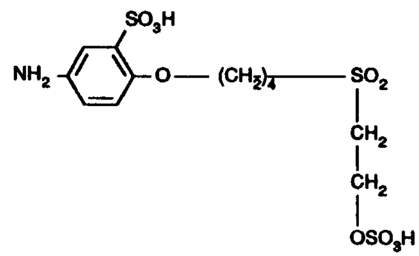 | marineblau |
| 165 | 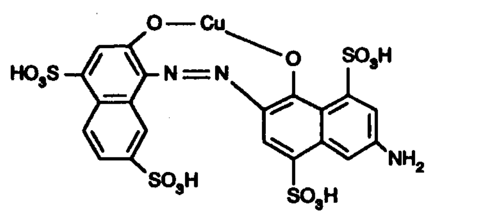 | 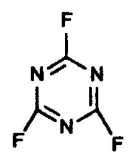 | 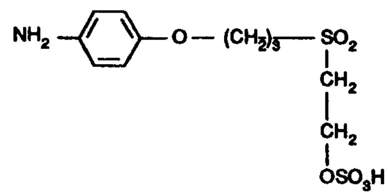 | rotstichig marineblau |
| 166 | 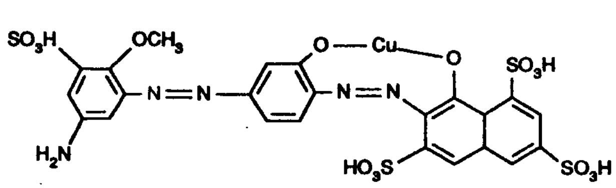 | 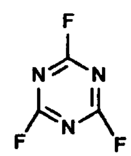 | 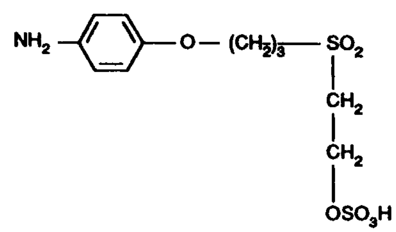 | marineblau |

| Nr. | Kupferkomplexverbindung | Trihalogen-triazin | β-Sulfatoethylsulfonyl-alkoxy-anilin | Farbton |
|---|---|---|---|---|
| 167 | 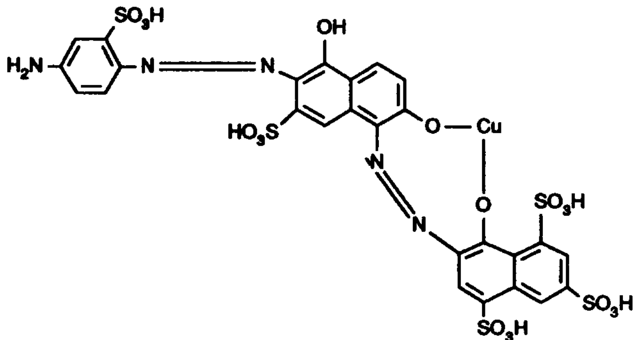 | 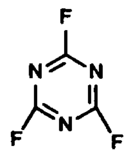 | 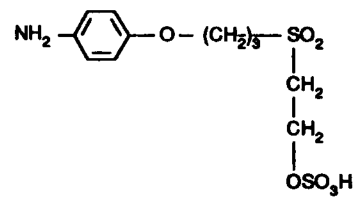 | marineblau |
| 168 | 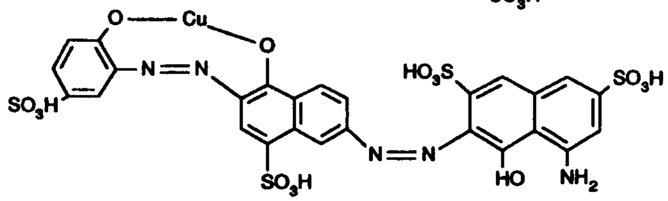 | 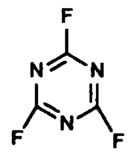 | 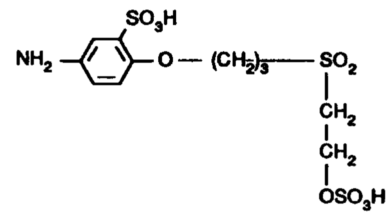 | dunkelblau |
| 169 | 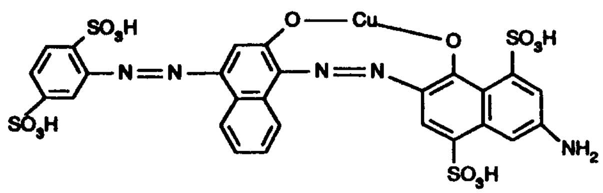 | 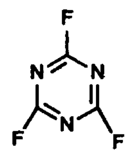 | 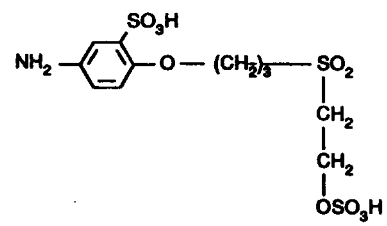 | grün |
| 170 | 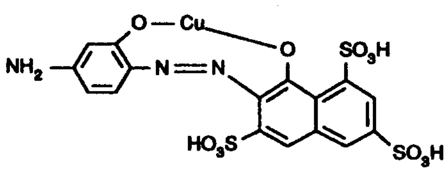 | 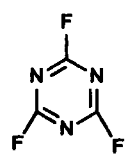 | 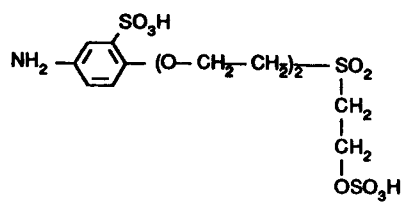 | rotviolett |

| Nr. | Kupferkomplexverbindung | Trihalogen-triazin | β-Sulfatoethylsulfonyl-alkoxy-anilin | Farbton |
|---|---|---|---|---|
| 171 | 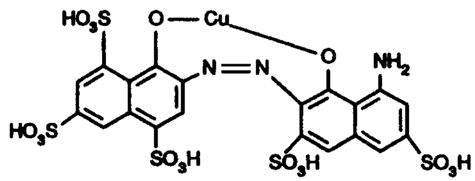 | 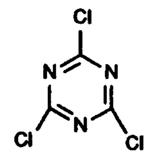 | 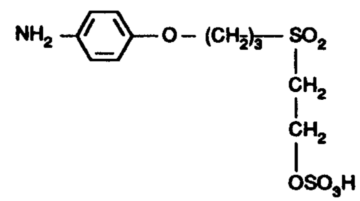 | marineblau |
| 172 | 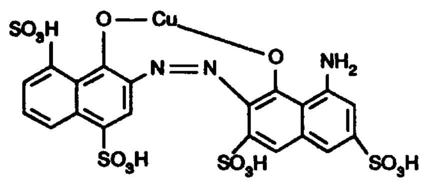 | 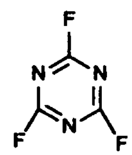 | 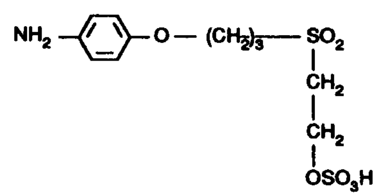 | marineblau |
| 173 | 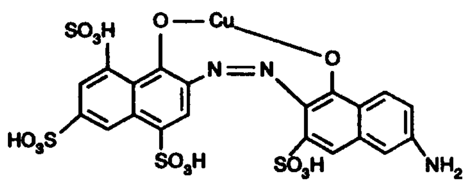 | 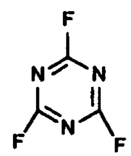 | 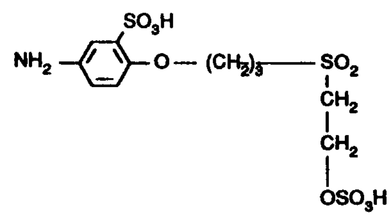 | blauviolett |

Beispiel 174

50 mMol des 1:2-Chromkomplexes der Formel

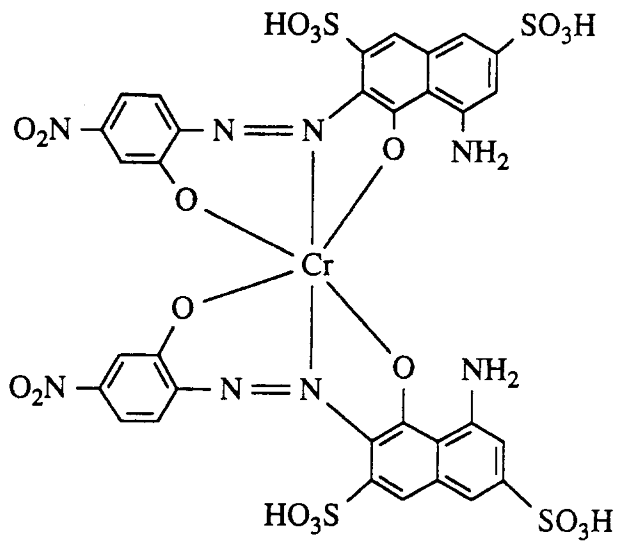

der durch Kupplung von diazotiertem 5-Nitro-2-aminophenol mit 1-Amino-8-hydroxynaphthalin-3,6-disulfonsäure und anschließender Umwandlung in den 1:2-Cr-Komplex erhalten werden kann, werden in 750 Teilen Wasser bei pH 7 gelöst und mit einer Lösung versetzt, die nach den Angaben des Beispiels 99 aus 48,2 g 5-Amino-2-[3-(2-sulfatoethylsulfonyl)-propoxy]-benzolsulfonsäure und 15,5 g Cyanurfluorid hergestellt wurde und die Verbindung

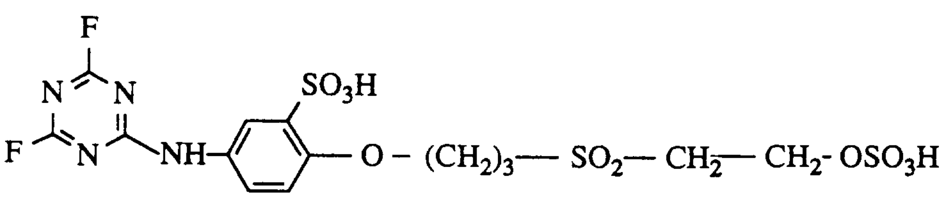

enthält. Man hält den pH-Wert auf 6-6,5 und die Temperatur auf 20-25 °C. Nach beendeter Kondensation wird der entstandene Reaktivfarbstoff ausgesalzen, abgesaugt und nach Pufferung auf pH 6,5 schonend im Vakuum getrocknet. Mit dem erhaltenen dunklen Pulver wird Baumwolle in grünstichig grauen Tönen gefärbt.

Setzt man an Stelle des oben erwähnten reinen Chrom-Komplexes eine 1:1-Mischung aus dem Chromkomplex- und den entsprechenden Kobaltkomplex ein, dann wird eine Farbstoffmischung isoliert, die Baumwolle in neutralen lichtechten Grau- bzw. Schwarztönen färbt.

Beispiel 175

50 mMol des Co-Komplexes der Formel

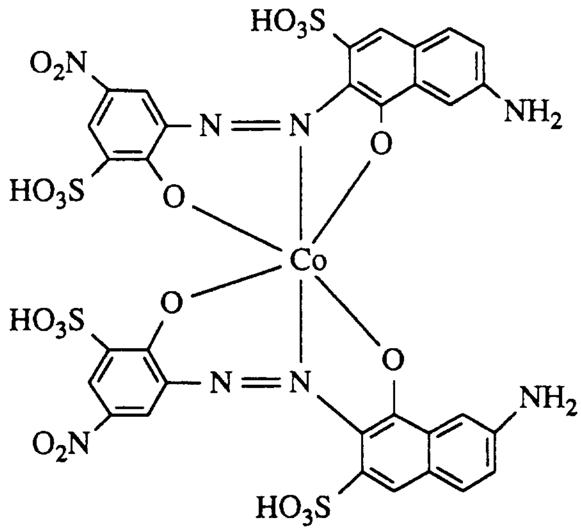

werden in 800 Volumenteilen Wasser bei pH 6 gelöst und die Lösung auf 0-5 ° C abgekühlt. Man läßt unter kräftigem Rühren 14,9 g Cyanurfluorid zutropfen und hält den pH-Wert mit 2n Sodalösung auf 4,5-5,0. Nach beendeter Primärkondensation setzt man eine neutrale Lösung hinzu, die in 150 ml Wasser 23,0 g der Komponente

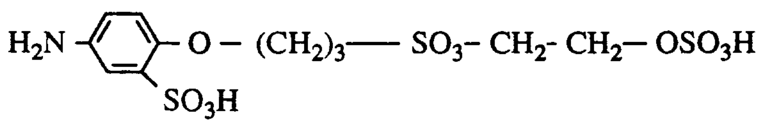

und 18,6 g Komponente der Formel

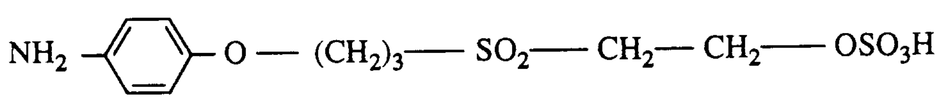

enthält. Man hält den pH-Wert auf 5,5-6,0 und läßt nach 2 Stunden die Temperatur auf 20 ° ansteigen. Ist die Kondensation beendet, wird der erhaltene Reaktivfarbstoff ausgesalzen, abgesaugt und im Vakuum bei 45 ° C getrocknet. Das erhaltene Pulver färbt Baumwolle nach den für Reaktivfarbstoffe üblichen Techniken ergiebig in lichtechten Brauntönen.

Beispiel 176

50 mMol Triphendioxazinverbindung der Formel

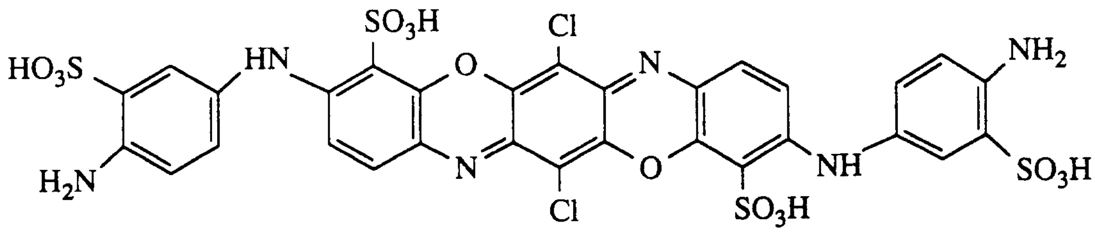

werden bei pH 6 in 900 ml Wasser gelöst. Man läßt zu der Lösung bei 0-3 °C 14,9 g Cyanurfluorid zutropfen und hält den pH-Wert mit 2n Sodalösung auf 4,5-5,0.

Nach kurzem Nachrühren setzt man eine neutrale Lösung von 46,1 g 5-Amino-2-[3-(β-sulfatoethylsulfonyl)-propoxy]-benzolsulfonsäure in 160 ml Wasser zu dem Primärkondensationsproudukt und hält den pH-Wert auf 6,0. Nachdem die Kondensation durch allmähliche Steigerung der Temperatur bis zu 20 °C beendet ist, wird der Farbstoff der Formel

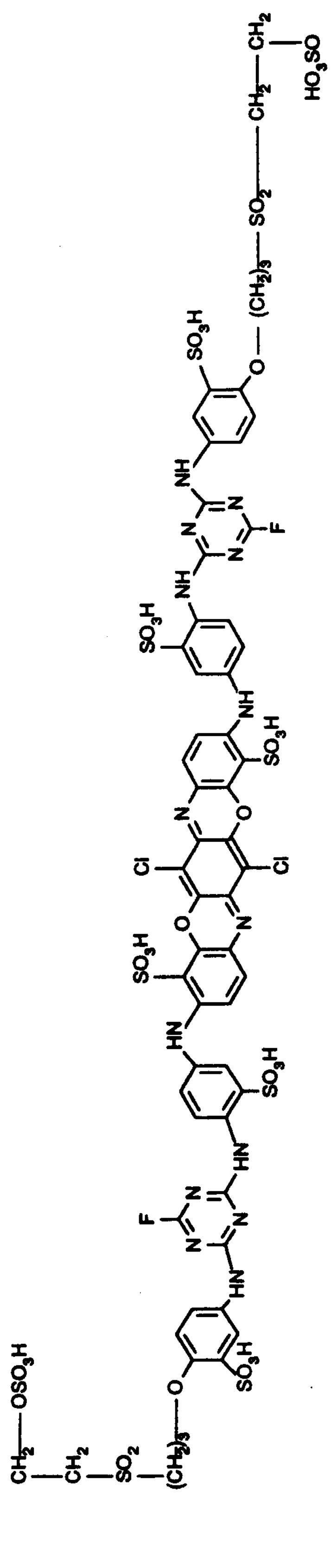

ausgesalzen, isoliert und getrocknet.

Er färbt Cellulosefasern in grünstichig blauen Tönen.

Beispiel 177

21,9 g 1-(4-Benzoylamino)-8-hydroxynaphthalin-3,6-disulfonsäure werden in 250 ml Wasser bei pH 5,5 gelöst. Nach Abkühlung der Lösung auf 0-3 °C werden 7,1 g Cyanurfluorid zügig zugetropft und der pH-Wert im Reaktionsgemisch mit verdünnter Sodalösung auf 4,5 gehalten. Nach kurzem Nachrühren setzt man eine auf 0 °C gekühlte neutrale Lösung von 22,0 g 5-Amino-2-[3-(β-sulfatoethylsulfonyl)-propopxy]-benzolsulfonsäure in 80 ml Wasser zu und hält den pH-Wert über Nacht auf 5,5-6,0. Nach beendeter Kondensation setzt man eine Diazoniumsalzsuspension zu, die man auf übliche Weise durch Diazotierung von 8,7 g 2-Aminobenzolsulfonsäure erhalten hat, und führt die Kupplung durch Sodazugabe bei pH 6,5-7 zunächst mehrere Stunden bei 0 °C später ansteigend auf 20 °C zu Ende. Der erhaltene Farbstoff der Formel

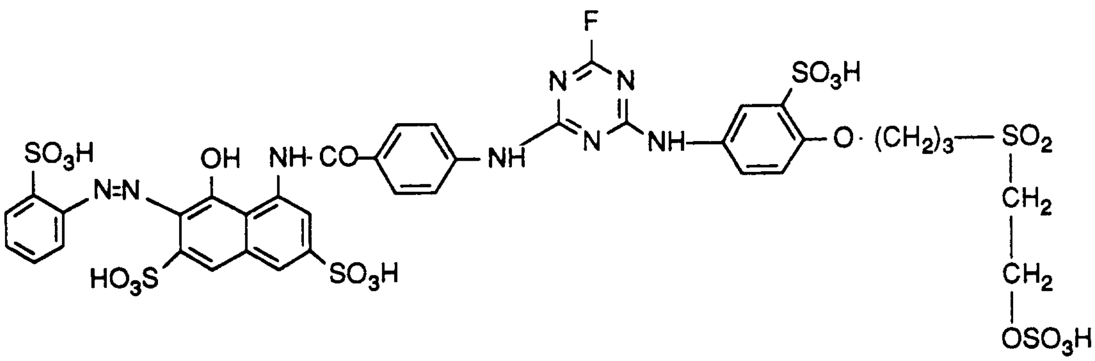

wird isoliert und getrocknet. Er gibt auf Baumwolle aus langer Flotte kräftige rote Färbungen von guter Licht- und Naßechtheit.

Beispiel 178

25,7 g Triazol der Formel

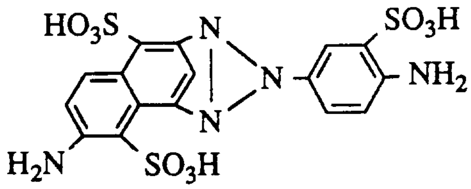

hergestellt nach den Angaben der Europäischen Patentschrift 0 013 879, werden bei pH 6,5 in 700 ml Wasser gelöst. Man kühlt auf 0 °C und tropft langsam 6,9 g Cyanurfluorid zu. Man hält den pH-Wert mit Natriumhydrogencarbonat-Lösung auf 6,0-6,5. Wenn die Reaktion nach wenigen Minuten beendet ist, setzt man eine neutrale, gekühlte Lösung von 21,8 g 5-Amino-2-[3-(β-sulfatoethylsulfonyl)-propoxy]-benzolsulfonsäure in 80 ml Wasser zu und hält den pH-Wert weiter mit Sodalösung auf 6,5.

Nach 2 Stunden läßt man die Temperatur auf 20° ansteigen. Man versetzt mit 3,7 g Natriumnitrit und läßt 20 ml 28 %ige Salzsäure einfließen. Nach einer Stunde des Nachreagierens wird eventuell überschüssige salpetrige Säure mit Amidosulfonsäure zerstört. Man streut nun 6,5 g Barbitursäure ein und kuppelt durch Zugabe von Natriumacetat zunächst bei pH 5, später mit Soda bei pH 5,5-6. Nach Beendigung der Kupplung wird der Farbstoff isoliert und bei 40 °C im Vakuum getrocknet. Er entspricht der Formel

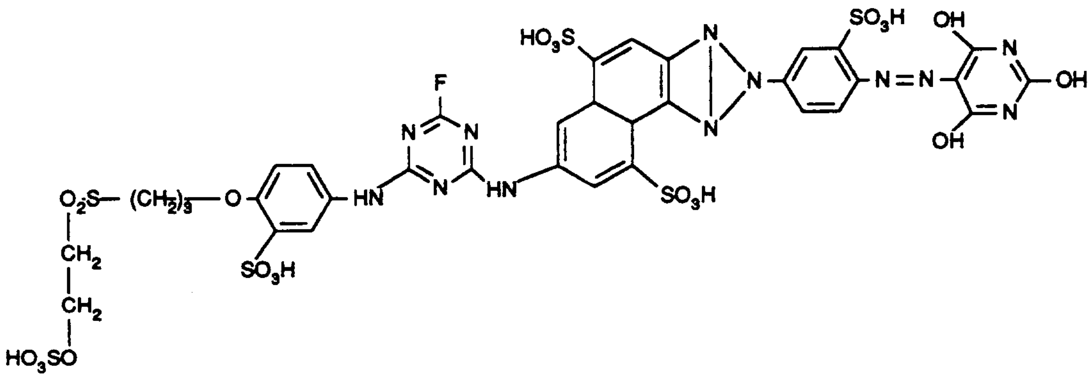

und färbt Baumwolle in brillanten Gelbtönen.

Ähnliche gelbe Farbstoffe erhält man, wenn man an Stelle der Barbitursäure folgende Kupplungskomponenten einsetzt:

2,6-Dihydroxypyridin-4-carbonsäure
1-(4-Sulfophenyl)-3-methyl-pyrazolon-(5)
1-(4-Sulfophenyl)-pyrazolon-(5)-3-carbonsäure
1,4-Dimethyl-2-hydroxy-pyridon-(6)-5-carbonamid
1,4-Dimethyl-2-hydroxy-3-sulfomethylpyridon-(6)-5-carbonamid
Acetessigsäure-N-(2'-methoxy-5'-methyl-4'-sulfophenylamid)
Acetessigsäure-N-(2',5'-dimethoxy-4'-sulfophenylamid)
1-Phenyl-3-methyl-5-aminopyrazol
1-(6,8-Disulfonaphthyl-(2))-3-methyl-pyrazolon-(5)
1,4-Dimethyl-2-hydroxy-5-cyan-pyridon-(6)

Beispiel 179

In 2000 ml 1,3-Propandiol werden 260 g pulverisiertes Kaliumhydroxid bei 70° gelöst. Man läßt bei 50°C zu der Lösung 500 g 1-Chlor-2-nitrobenzol zutropfen, erhitzt die Mischung 5 Stunden auf 50°C und dann solange auf 60°C, bis die Umsetzung beendet ist. Man gibt den Ansatz auf 6000 ml Eis-Wasser, trennt das abgeschiedene Öl ab, wäscht es mehrfach mit Wasser und trocknet es im Rotationsverdampfer.

457 g des erhaltenen Öls werden in 460 ml Pyridin gelöst. Dazu wird bei 5-15°C eine Lösung von 445 g p-Toluolsulfochlorid in 450 ml Pyridin in 1 Stunde zugetropft Nach 3 Stunden des Rührens bei 0-5°C saugt man die ausgefallenen Kristalle ab, wäscht sie mit 1,8 l 0-5°C kaltem Methanol, dann mit 2 l Wasser und trocknet sie bei 50°C im Vakuum.

475,0 g des erhaltenen Tosylesters der Formel

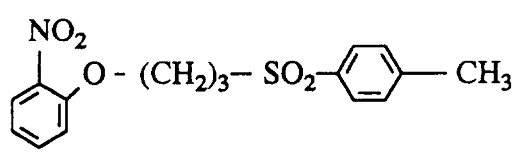

werden mit 115 g 2-Mercaptoethanol und 215 g Kaliumcarbonat in 1200 ml Acetonitril 4 Stunden am Rückfluß bei 83° erwärmt. Man nimmt anschließend die Mischung in 6 l Wasser auf, trennt das ausgeschiedene gelbe Öl ab und wäscht es mit Wasser.

355 g des erhaltenen 1-Nitro-2-[3-(2-hydroxyethylthio)-propoxy]-benzols werden in 2000 ml Wasser nach Zusatz von 4 g Natriumwolframat mit 250 ml 35 %igem $H_2O_2$ in bekannter Weise bei 55-60°C zum Sulfon oxidiert.

Das erhaltene Produkt wird abgesaugt, mit Eiswasser gewaschen und im Vakuum bei 55°C getrocknet.

373 g des erhaltenen 1-Nitro-2-[3-(2-hydroxyethylsulfonyl)-propoxy]-benzols werden in 1600 ml Methanol in Gegenwart von 7 g Raney-Nickel unter 30 bar Wasserstoffdruck bei 60°C katalytisch hydriert. Nach heißer Filtration vom Nickel erhält man aus dem Filtrat durch Eindampfen das Amin der Formel

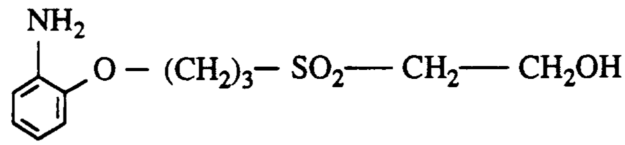

in Form von bräunlichen Kristallen

$^1$H-NMR ($D_6$-DMSO)
$\delta$ = 2,08-2,2 ppm (2H, m)
$\delta$ = 3,26 ppm (2H, t)
$\delta$ = 3,36 ppm (2H, t)
$\delta$ = 3,82 ppm (2H, q)
$\delta$ = 4,02 ppm (2H, t)
$\delta$ = 5,14 ppm (1H, t)
$\delta$ = 6,45-6,50 ppm (1H, m)
$\delta$ = 6,60-6,68 ppm (2H, m)
$\delta$ = 6,72 ppm (1H, m)

250 g obigen Amins werden als 60° warme Schmelze in eine auf 0-2° befindliche Mischung von 610 ml 96 %iger Schwefelsäure und 24 ml Wasser in 1 1/2 Stunden eingetropft. Man rührt 1 Stunde bei 0°C nach, gießt die Lösung in 3000 g Eis und 1500 ml Wasser ein, läßt die Suspension 1 Stunde nachrühren, saugt die Kristalle ab und wäscht sie mit 2 l Isopropanol frei von Schwefelsäure. Trocknung bei 45°C im Vakuum.

Das Produkt entspricht der Formel

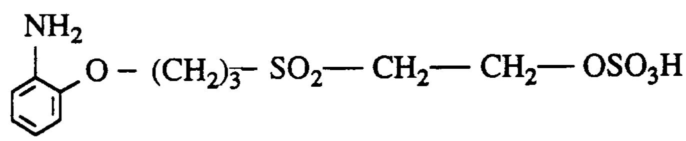

$^1$H-NMR ($D_6$-DMSO)
$\delta$ = 2,13-2,26 ppm (2H, m)
$\delta$ = 3,40-3,48 ppm (4H, m)
$\delta$ = 4,13-4,23 ppm (4H, m)
$\delta$ = 7,01-7,06 ppm (1H, m)
$\delta$ = 7,18 ppm (1H, m)
$\delta$ = 7,33-7,45 ppm (2H, m)
$\delta$ = ~ 9,6 ppm (unscharf)

Tropft man 100 g des obigen 1-Amino-2-[3-(2-hydroxyethylsulfonyl)-propoxy]-benzols als Schmelze in 300 ml 20 %iges Oleum bei 0-2°C ein, rührt einige Zeit nach, bis sich chromatographisch in der Lösung keine Änderung mehr zeigt, gibt auf 2,6 kg Eis, entfernt überschüssige Schwefelsäure durch Eintragen von 558 g Calciumcarbonat bis zum pH 4,5, saugt vom Gips ab, wäscht diesen mit 1 l Wasser und engt das Filtrat auf ca. 500 ml ein, so erhält man eine Lösung des Produktes der Formel

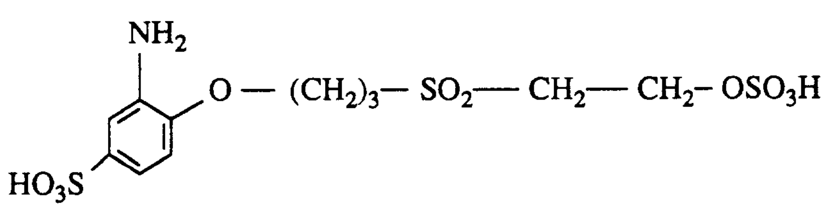

deren Gehalt durch Titration mit Natriumnitrit ermittelt wird.

Beispiel 180

313 g 1-[2-(2-hydroxyethoxy)-ethoxy]-4-nitrobenzol werden in 930 ml Thionylchlorid und 5 ml Dimethylformamid 3 Stunden am Rückfluß erwärmt. Man trägt die Lösung auf 3,5 kg Eis und 3,5 l Wasser aus, saugt den kristallinen weißen Niederschlag ab und befreit ihn durch Waschen mit kaltem Wasser von Säureresten. Das Produkt kann bei 55° im Vakuum getrocknet werden.

330 g 1-[2-(2-Chlorethoxy)-ethoxy]-4-nitrobenzol werden mit 130 g 2-Mercaptoethanol und 235 g Kaliumcarbonat durch Kochen in 900 ml Acetonitril am Rückfluß umgesetzt. Nach vollständiger Umsetzung gibt man auf 3 l Wasser, stellt den pH-Wert mit verdünnter Schwefelsäure auf 6-7, und oxyidert nach Zusatz von 4 g Natriumwolframat den Thioether in bekannter Weise bei 55-60°C durch 280 g 35%iges Wasserstoffperoxid. Das erhaltene Produkt der Formel

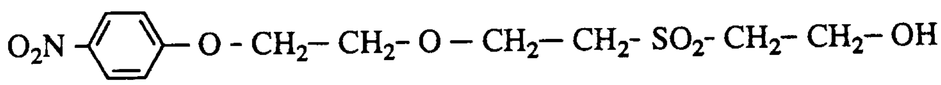

wird bei 50°C im Vakuum getrocknet. Fp. 58-59°C.
$^1$H-NMR ($D_6$-DMSO)
$\delta$ = 3,28 ppm (2H, t)
$\delta$ = 3,44 ppm (2H, t)
$\delta$ = 3,78-3,90 ppm (6H, m)
$\delta$ = 4,18 ppm (2H, m)
$\delta$ = 5,10 ppm (1H, t)
$\delta$ = 7,17 ppm (2H, d,d)
$\delta$ = 8,22 ppm (2H, d,d)
Katalytische Hydrierung von 360 g obiger Nitroverbindung in 1500 ml Methanol in Gegenwart von Raney-Nickel bei 65°C und 70 bar Wasserstoffdruck liefert eine Lösung, die nach Filtration des Nickels und Eindampfen des Filtrats zuletzt im Vakuum das Amin der Formel

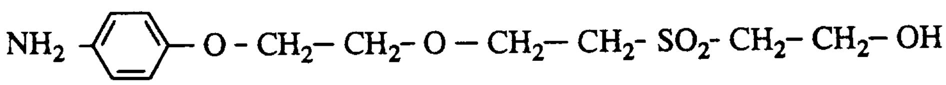

als braunes Öl hinterläßt.
$^1$H-NMR ($D_6$-DMSO)
$\delta$ = 3,26 ppm (2H, t)
$\delta$ = 3,41 ppm (2H, t)
$\delta$ = 3,70 ppm (2H, t)
$\delta$ = 3,82-3,88 ppm (4H, m)
$\delta$ = 3,95 ppm (2H, m)
$\delta$ = 5,07 ppm (1H, t)
$\delta$ = 6,50 ppm (2H, d,d)
$\delta$ = 6,66 ppm (2H, d,d)
Durch Einlaufenlassen von 100 g obigen Öles in 250 ml 96 %ige Schwefelsäure bei 0-3°C, einige Stunden Nachrühren bei 0°C, Einrühren in 1,8 kg Eis, Kalken der Lösung mit 410 g $CaCO_3$ bis pH 4,7, Filtration des Gipses und Einengen der Lösung im Vakuum auf 500 ml erhält man eine für Synthesezwecke geeignete Lösung der Substanz der Formel

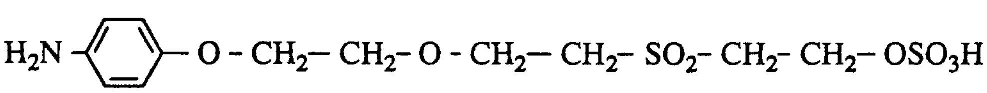

deren Gehalt man durch Titration mit Natriumnitrit bestimmt.

Läßt man obiges Amino-β-hydroxyethylsulfonyl-alkoxybenzol statt in 96 %ige Schwefelsäure in 20 %iges Oleum einlaufen, rührt bis zur vollständigen Sulfierung und Sulfatierung bei 20 °C nach, so erhält man nach entsprechender Aufarbeitung die Lösung einer Verbindung der Formel

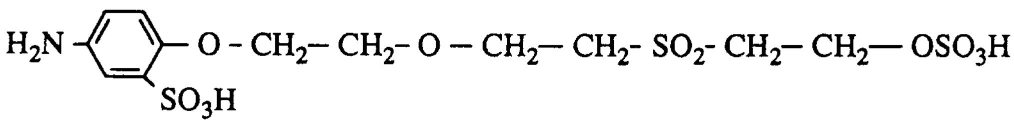

die man nach Gehaltsbestimmung ebenfalls für Synthesezwecke einsetzen kann.

Beispiel 181

80,0 g Verbindung der Formel

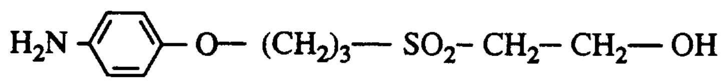

hergestellt nach den Angaben der Europäischen Patentschrift 0 355.492 werden in 160 ml 96 %ige Schwefelsäure bei 0 °C eingetragen. Man läßt in 1 Stunde auf 20 °C kommen, gießt die Lösung auf 800 g Eis und 320 ml Wasser, saugt die prismenförmigen Kristalle nach kurzem Nachrühren ab und verdrängt die anhaftende Schwefelsäure durch Waschen mit Isopropanol. Das Produkt kann bei 50 °C im Vakuum getrocknet werden. Es hat die Formel

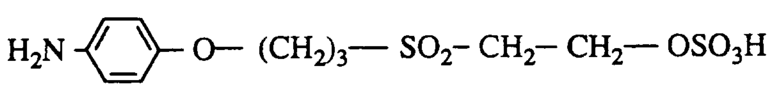

Trägt man obige Verbindung statt in 96 %ige Schwefelsäure in 20 %iges Oleum ein, arbeitet anschließend, wie im Beispiel 180 beschrieben durch Zusatz von $CaCO_3$ zu der wässrig-schwefelsauren Lösung auf, so erhält man die Lösung einer Verbindung der Formel

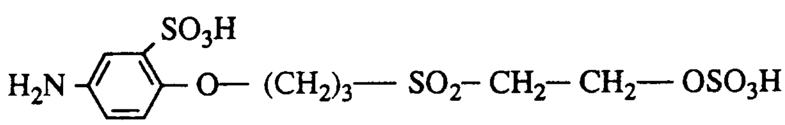

die nach Gehaltsbestimmung ebenfalls für Farbstoffsynthesen eingesetzt werden kann.

Beispiel 182

Zu einer Farbstofflösung, die gemäß Beispiel 1 synthetisiert wurde, setzt man nach der Kupplung 3,0 g Pyridin-3-carbonsäure. Man erwärmt die Lösung auf 75 bis 80 °C und hält den pH-Wert mit 2 n Sodalösung auf 7,0, bis der Austausch des Fluoratoms gegen den Nicotinsäurerest beendet ist. Nach Abkühlen kann der Farbstoff ausgesalzen oder die Lösung nach Entsalzen und Aufkonzentrieren als Flüssigfarbstoff verwendet werden.

Der Farbstoff entspricht der Formel

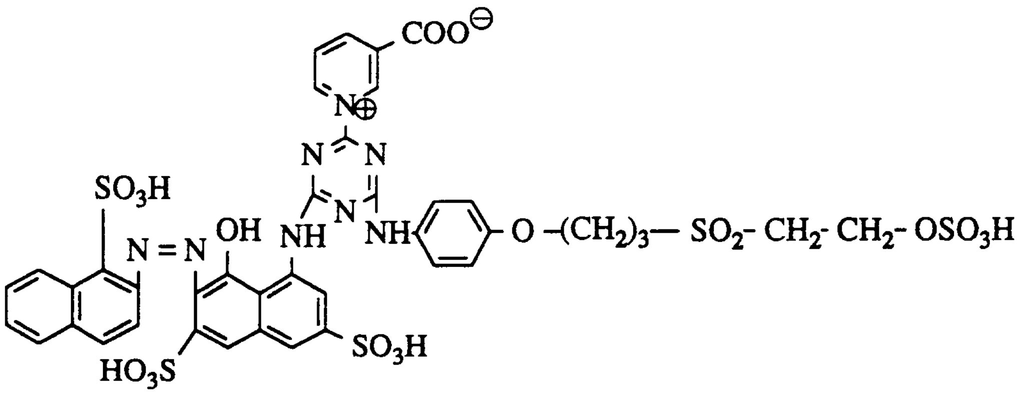

und färbt ähnlich dem Farbstoff des Beispiels 1 Baumwolle aus langer Flotte.

In ähnlicher Weise können auch die anderen in den vorangegangenen Beispielen beschriebenen Fluor- oder Chlortriazinfarbstoffe in die 3-Carboxypyridiniumtriazin-Farbstoffe umgewandelt werden.

Beispiel 183

Die im Beispiel 179 erhaltenen Produkte lassen sich auch auf folgende Weise herstellen: 209 g 2-Nitrophenol, 262 g 1,3-Bromchlorpropan und 228 g Kaliumcarbonat werden in 1000 ml Ethanol auf 60 ° C erwärmt und dann am Rückfluß erhitzt, bis das 2-Nitrophenol verschwunden ist. Aus der erhaltenen Mischung kann das Reaktionsprodukt der Formel

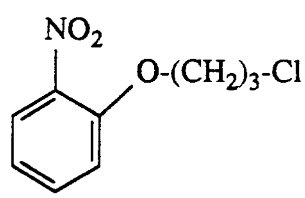

durch Verdünnen mit 5 l Wasser in Form eines gelbes Öles abgeschieden werden.

Man kann das Zwischenprodukt entweder ohne Zwischenisolierung direkt oder nach erneutem Lösen in 1000 ml Ethanol oder Acetonitril mit 156 g 2-Mercaptoethanol und 276 g Kaliumcarbonat bei 60-80 ° C zu dem Thioether

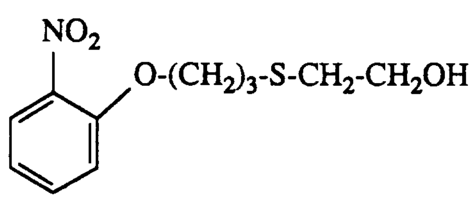

umsetzen und diesen nach Verdünnen der Lösung mit 3 l Wasser und Zusatz von 4,5 g Natriumwolframat bei 55-60 ° C und 35 %igem $H_2O_2$ in bekannter Weise oxidieren. Das erhaltene Nitrosulfon der Formel

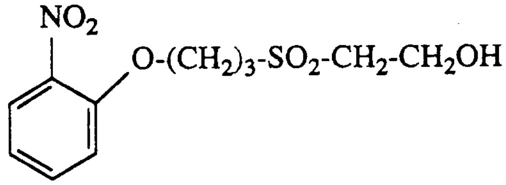

wird in der im Beispiel 179 beschriebenen Weise katalytisch zur Aminoverbindung reduziert, die dann entweder sulfatiert oder sulfatiert und sulfiert werden kann.

In analoger Weise lassen sich die entsprechenden m- und p-Verbindungen aus m- oder p-Nitrophenol und 1,3-Bromchlorpropan herstellen.

## Patentansprüche

1. Reaktivfarbstoffe der Formel

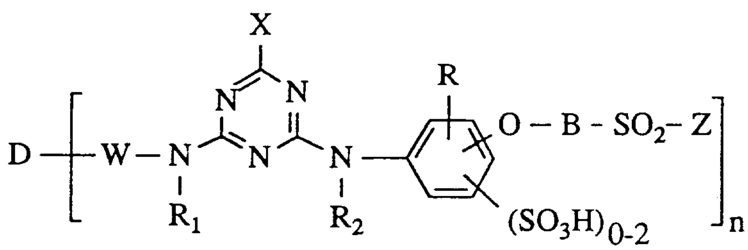

worin

D Rest eines organischen Farbstoffes,
W direkte Bindung oder Brückenglied,
$R_1$ H oder Alkyl,
$R_2$ H oder Alkyl,
R H, $C_1$-$C_2$-Alkyl, Halogen, $C_1$-$C_4$-Alkoxy,
B $C_3$-$C_6$ -Alkylen, gegebenenfalls verzweigt oder/und unterbrochen durch Stickstoff, Sauerstoff, $-SO_2-$ oder 1,4-Piperazinylen.
X

F, Cl, 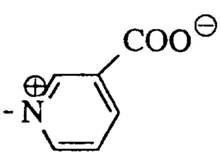

Z $-CH=CH_2$, $-CH_2-CH_2-OSO_3H$, $-CH_2-CH_2-Cl$, $-CH_2-CH_2-Br$, $-CH_2-CH_2-S_2O_3H$, $-CH_2-CH_2-O-CO-CH_3$, $-CH_2-CH_2-OPO_3H_2$, $-CH_2-CH_2-OH$,
n 1 oder 2,

bedeuten.

2. Reaktivfarbstoff gemäß Anspruch 1, dadurch gekennzeichnet, daß D ein Rest aus der Monoazo-, Polyazo-, Metallkomplexo-, Anthrachinon-, Phthalocyanin-, Formazan-, Azomethin-, Dioxazin-, Phenazin-, Stilben-, Triphenylmethan-, Xanthen-, Thioxanthon- oder Nitroarylreihe ist.

3. Reaktivfarbstoffe gemäß wenigstens einem der vorhergehenden Ansprüche, dadurch gekennzeichnet, daß W bedeutet:

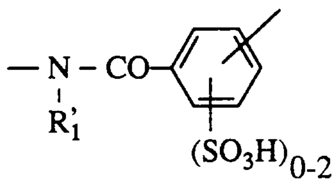

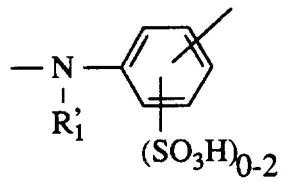

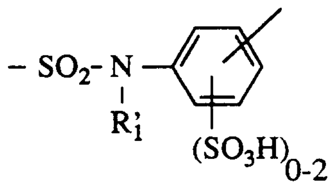

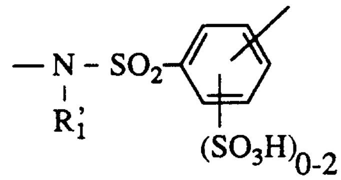

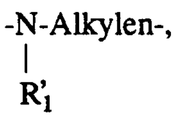

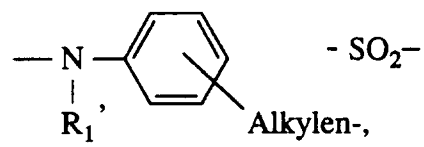

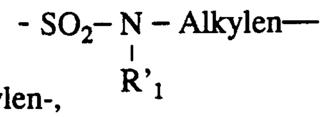

-O-Alkylen-, -Alkylen-, -Alkylen-CO-, Alkylen-$SO_2$-, wobei $R'_1$ für Wasserstoff oder Alkyl steht, und Alkylen einen Alkylenrest mit 1 bis 6 C-Atomen bedeutet.

**4.** Reaktivfarbstoffe gemäß wenigstens einem der vorhergehenden Ansprüche, dadurch gekennzeichnet, daß B bedeutet:
$-(CH_2)_3-$ ,

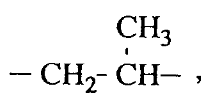

$-(CH_2)_4-$ ,

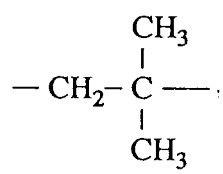

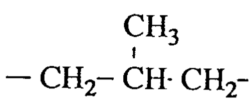 , 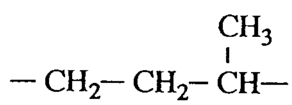 , 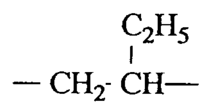 ,

$-(CH_2)_5-$ , $-(CH_2)_6-$ , $-CH_2-CH_2O-CH_2-CH_2-$

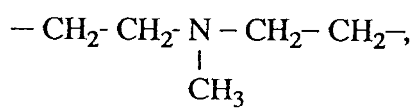

,

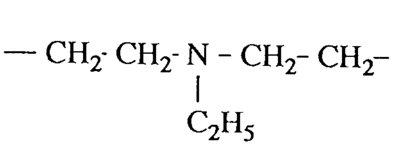 , 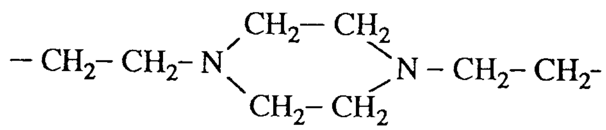

$-CH_2-CH_2-SO_2-CH_2-CH_2-$ .

**5.** Reaktivfarbstoffe gemäß wenigstens einem der vorhergehenden Ansprüche, dadurch gekennzeichnet, daß sie einer der folgenden Formel entsprechen, wobei A einen Rest der Formel

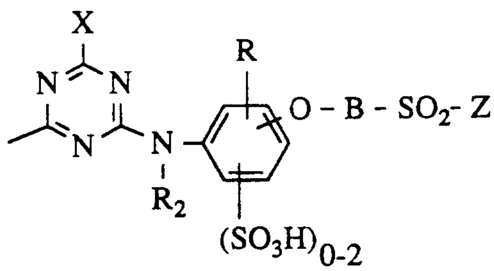

(VIa)

bedeutet, in welchem die Substituenten die in Anspruch 1 angegebene Bedeutung haben und wobei W und $R_1$ die in Anspruch 1 angegebene Bedeutung haben:

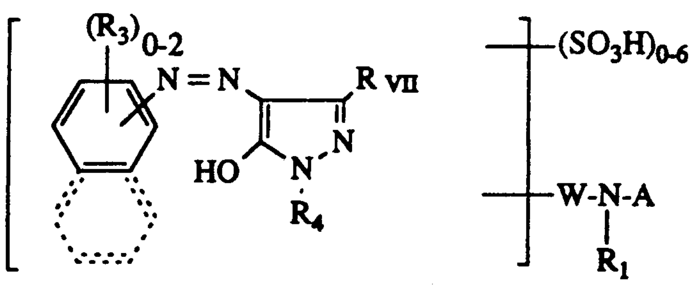

(VII)

mit

| | |
|---|---|
| $R_3$ | Alkyl, Alkoxy, Halogen, |
| $R_4$ | H, Alkyl, Aryl, Hetaryl, Aralkyl |
| $R_{VII}$ | COOH, $CH_3$ |

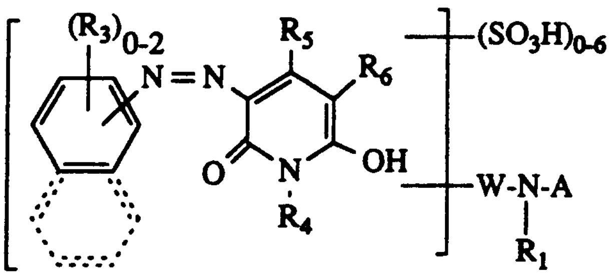

(VIII)

mit

| | |
|---|---|
| $R_3$ | Alkyl, Alkoxy, Halogen |
| $R_4$ | Alkyl, Aralkyl, Aryl |
| $R_5$ | Alkyl, Aryl, Aralkyl, Hetaryl, |
| $R_6$ | H, $COOR_3$, |

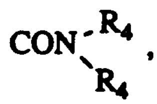

CN, $CH_2$-$SO_3H$, $SO_3H$,

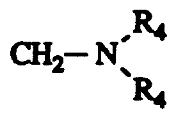

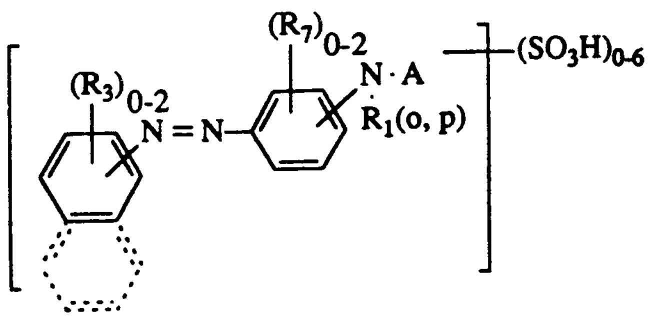

(IX)

mit

| | |
|---|---|
| $R_3$ | Alkyl, Alkoxy, Halogen |
| $R_7$ | H, Alkyl, Alkoxy, Acylamino, Amino, Ureido |
| o, p | in o- bzw. p-Stellung zur Azo-Gruppe |

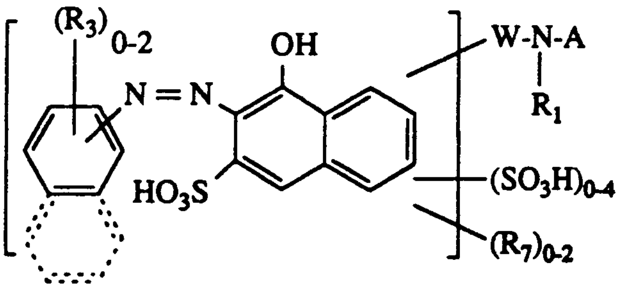

(X)

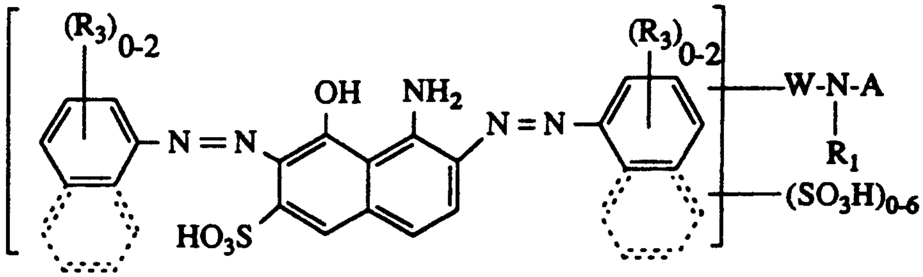

(XI)

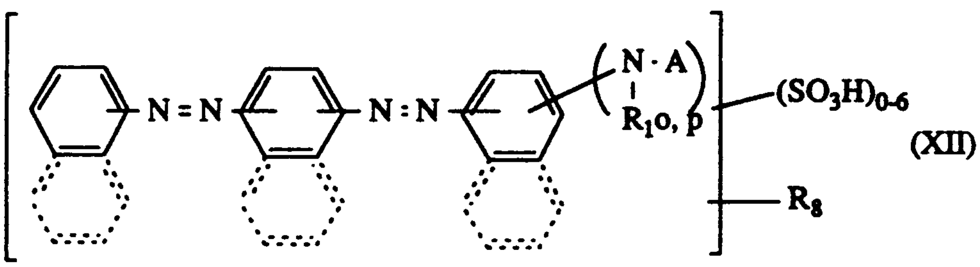

(XII)

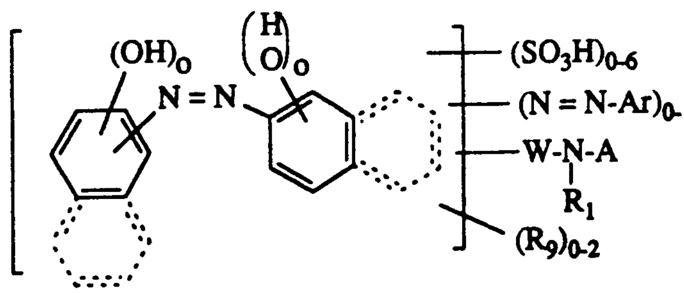

(XIII)

wobei in (X) bis (XIII) bedeuten:

- $R_3$ Alkyl, Alkoxy, Halogen
- $R_7$ Alkyl, Alkoxy, Acylamino
- $R_8$ Alkyl, Alkoxy, Acylamino, Ureido
- o in ortho-Stellung zur Azogruppe
- $R_9$ $R_8$, $NO_2$

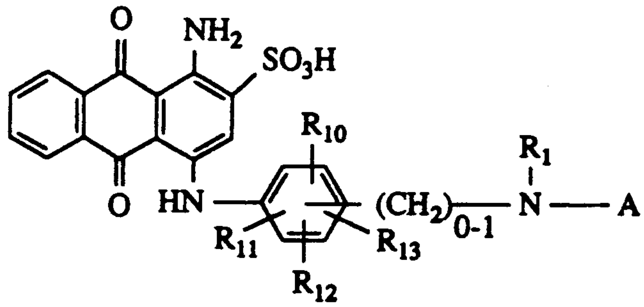

(XIV)

mit

| | |
|---|---|
| $R_{10}$ | H, $C_1$-$C_4$-Alkyl, Halogen (Cl, Br) $C_1$-$C_4$-Alkoxy, Carboxy, $SO_3H$, |
| $R_{11}$ | H, $C_1$-$C_4$-Alkyl, $SO_3H$, |
| $R_{12}$ | H, $C_1$-$C_4$-Alkyl, Cl, Br, |
| $R_{13}$ | H, $C_1$-$C_4$-Alkyl, |

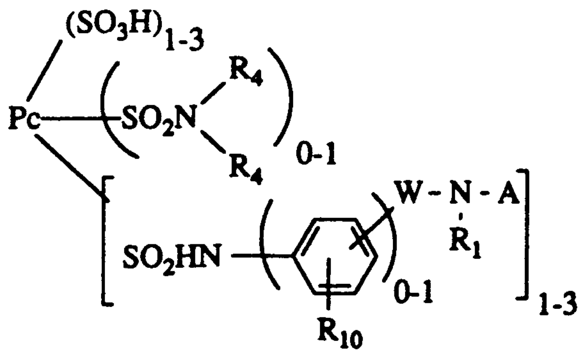

(XV)

mit

| | |
|---|---|
| $R_4$ | H, Alkyl |
| $R_{10}$ | H, $SO_3H$, COOH |
| Pc | Cu oder Ni-Phthalocyaninrest |

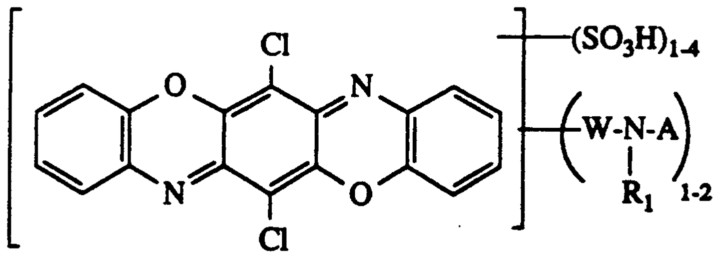

(XVI)

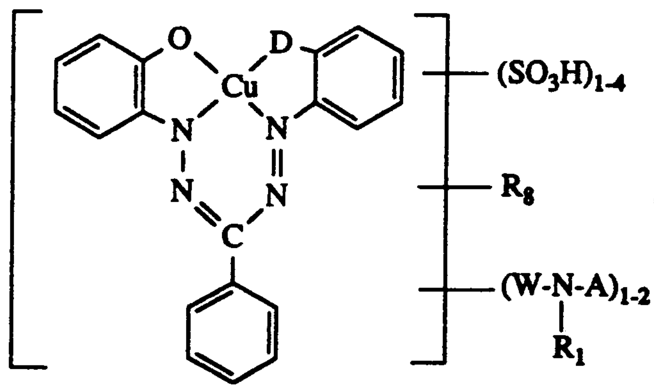

(XVII)

mit

- $R_8$ Alkyl, Halogen, Alkylsulfonyl
- D zur Komplexbildung befähigter Substituent

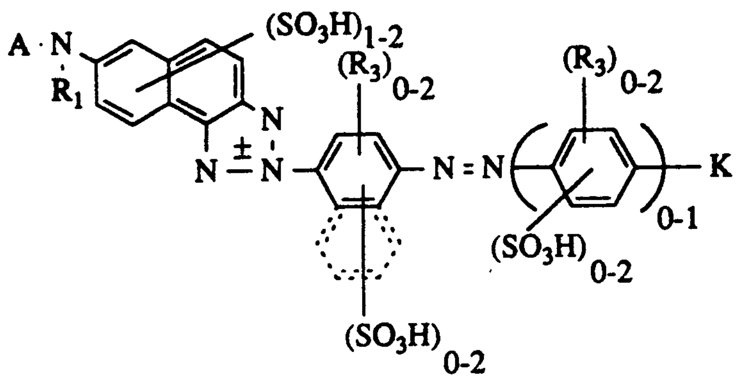

(XVIII)

mit

- $R_3$ Alkyl, Alkoxy, Halogen
- K Rest einer Kupplungskomponente,

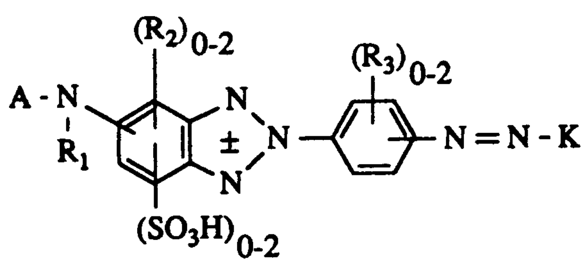

(XIX)

mit

| | |
|---|---|
| $R_2$ | Alkyl, Halogen |
| $R_3$ | Alkyl, Alkoxy |
| K | Rest einer Kupplungskomponente |

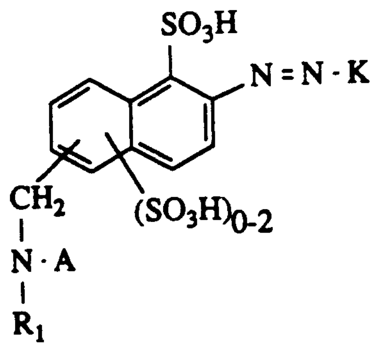

(XX)

mit

| | |
|---|---|
| K | Rest einer Kupplungskomponente |

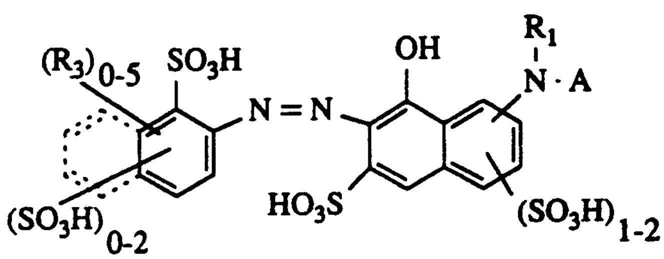

(XXI)

| | |
|---|---|
| $R_3$ | Alkyl, Alkoxy, Acylamino |

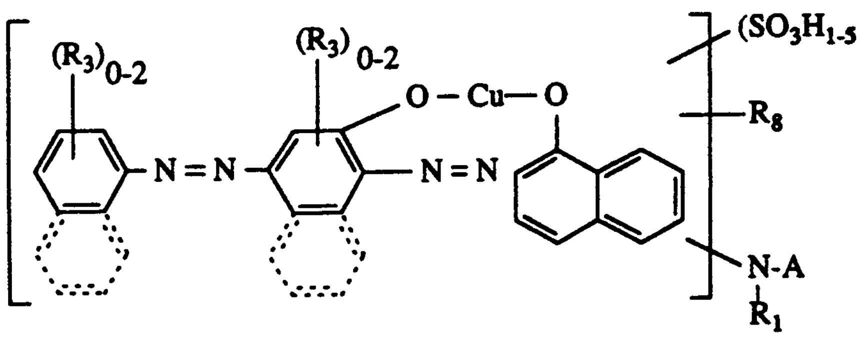

(XXII)

| | |
|---|---|
| $R_3$ | Alkyl, Alkoxy |
| $R_8$ | H, $NH_2$, Acylamino |

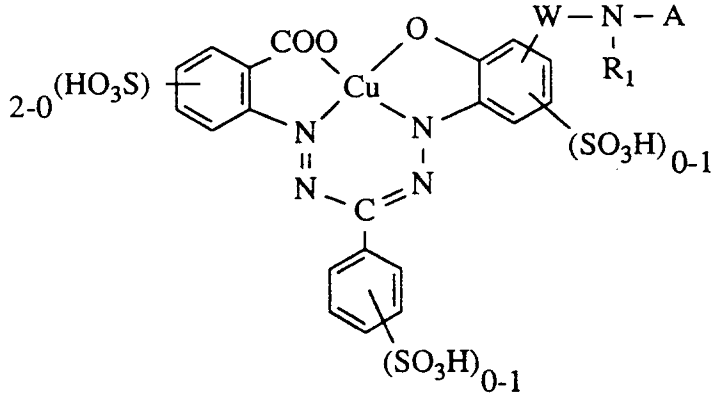

(XXIII)

**6.** Verfahren zur Herstellung der Reaktivfarbstoffe gemäß Anspruch 1 durch:

a) entweder durch Kondensation von Farbstoffen der Formel

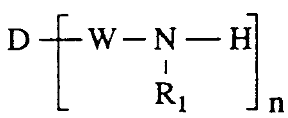

(II)

worin

D, W, $R_1$ die in Anspruch 1 angegebene Bedeutung haben,

mit n-Molen Trihalogentriazinen der Formel

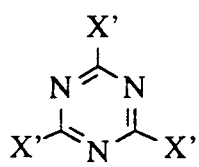

(III)

worin

X' = F, Cl

zu Verbindungen der Formel

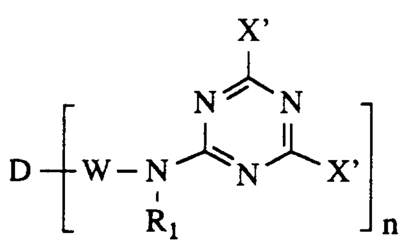

(IV)

und weitere Kondensation der Verbindungen der Formel (IV) mit n-Molen der Komponenten der Formel

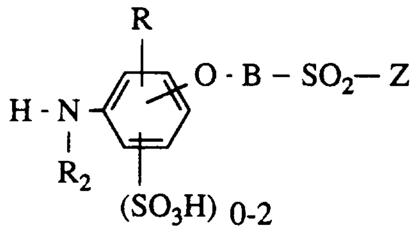

(V)

worin
$R_2$, R, B und Z die in Anspruch 1 angegebene Bedeutung haben,
oder
b) in umgekehrter Reihenfolge durch Kondensation von Trihalogentriazinen der Formel (III) mit den Komponenten der Formel (V) zu den Primärkondensationsprodukten

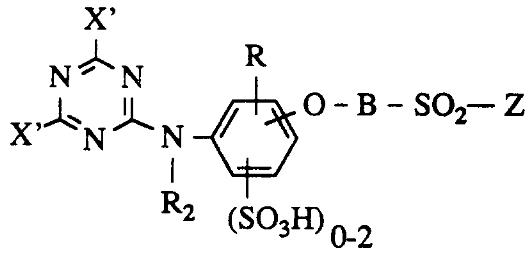

(VI)

worin
X' = F, Cl und
$R_2$, R, B und Z die in Anspruch 1 angegebene Bedeutung haben,
und weitere Kondensation mit n-Molen der Verbindungen der Formel (VI) mit den Farbstoffen der Formel (II),
oder
c) durch Kondensation geeigneter Vorprodukte mit den Trihalogentriazinen (III) und den Komponenten der Formel (V) bzw. durch Kondensation geeigneter Vorprodukte mit den Primärkondensationsprodukten der Formel (VI) und anschließender Farbstoffsynthese,
und gegebenenfalls
d) durch Austausch des Halogenatoms X' gegen den Rest der Pyridin-3-carbonsäure im synthetisierten Halogentriazinfarbstoff.

**7.** Verfahren zum Färben und Bedrucken von Substraten mit einem Reaktivfarbstoff, dadurch gekennzeichnet, daß ein Reaktivfarbstoff gemäß wenigstens einem der vorhergehenden Ansprüche verwendet wird.

## Claims

**1.** Reactive dyestuffs of the formula

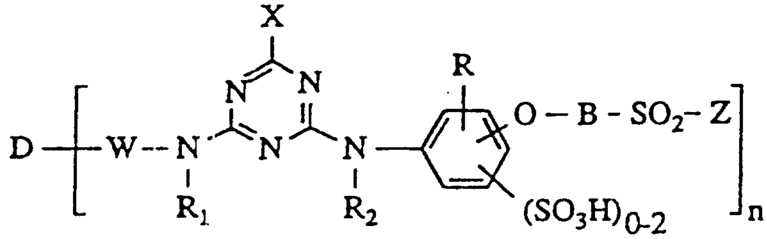

in which

- D denotes a radical of an organic dyestuff,
- W denotes a direct bond or bridging member,
- $R_1$ denotes H or alkyl,
- $R_2$ denotes H or alkyl,
- R denotes H, $C_1$-$C_2$-alkyl, halogen, $C_1$-$C_4$-alkoxy,
- B denotes $C_3$-$C_6$-alkylene, which, if desired, is branched and/or interrupted by nitrogen, oxygen, $-SO_2-$ or 1,4-piperazinylene,
- X denotes

F, Cl, 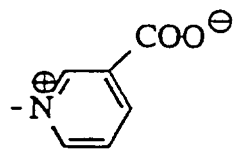

- Z denotes $-CH=CH_2$, $-CH_2-CH_2-OSO_3H$, $-CH_2-CH_2-Cl$, $-CH_2-CH_2-Br$, $-CH_2-CH_2-S_2O_3H$, $-CH_2-CH_2-O-CO-CH_3$, $-CH_2-CH_2-OPO_3H_2$, $-CH_2-CH_2-OH$,
- n denotes 1 or 2.

**2.** Reactive dyestuff according to Claim 1, characterised in that D is a radical from the monoazo, polyazo, metal complex, anthraquinone, phthalocyanine, formazan, azomethine, dioxazine, phenazine, stilbene, triphenylmethane, xanthene, thioxanthone or nitroaryl series.

**3.** Reactive dyestuffs according to at least one of the preceding claims, characterised in that W denotes:

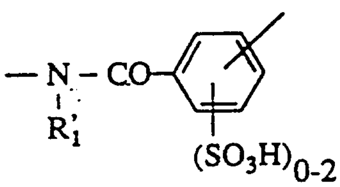 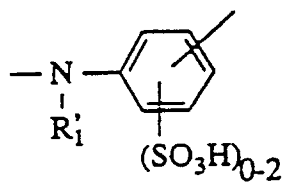

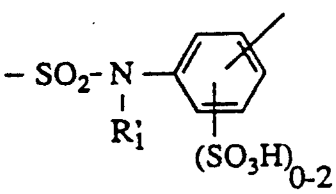 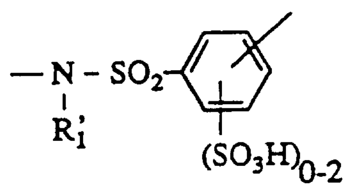

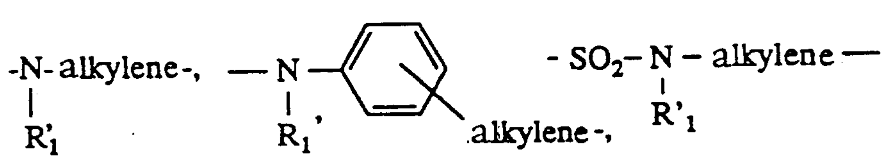

-O-alkylene-, -alkylene-, -alkylene-CO-, $-alkylene-SO_2-$,
in which R'₁ represents hydrogen or alkyl, and alkylene denotes an alkylene radical having 1 to 6 C atoms.

**4.** Reactive dyestuffs according to at least one of the preceding claims, characterised in that B denotes: $-(CH_2)_3-$,

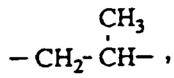

-$(CH_2)_4$— ,

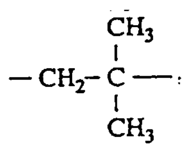

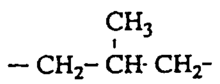 , 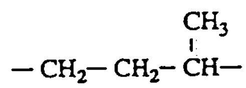 , 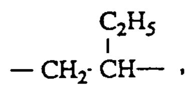 ,

-$(CH_2)_5$— , -$(CH_2)_6$- , —$CH_2$-$CH_2$O-$CH_2$-$CH_2$- ,

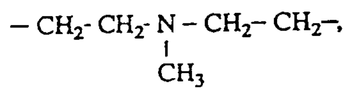

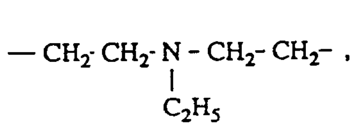 , 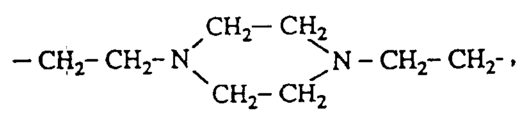

—$CH_2$-$CH_2$-$SO_2$—$CH_2$—$CH_2$— .

**5.** Reactive dyestuffs according to at least one of the preceding claims, characterised in that they have one of the following formulae, in which A denotes a radical of the formula

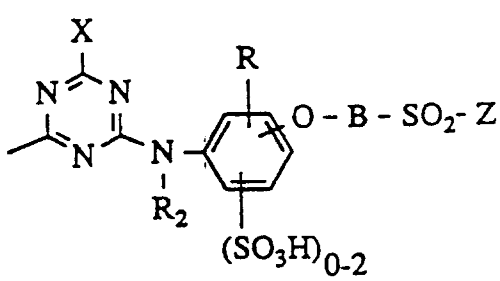

(VIa)

in which the substituents have the meaning given in Claim 1 and in which W and $R_1$ have the meaning given in Claim 1:

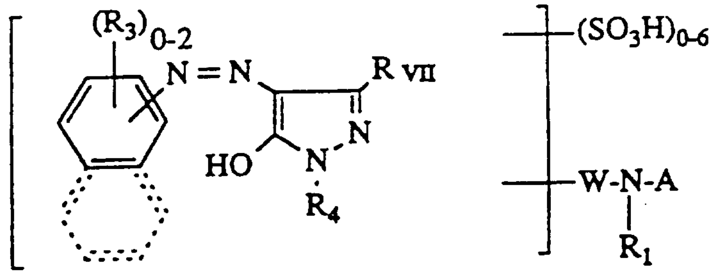

(VII)

where

- $R_3$ denotes alkyl, alkoxy, halogen,
- $R_4$ denotes H, alkyl, aryl, hetaryl, aralkyl
- $R_{VII}$ denotes COOH, $CH_3$

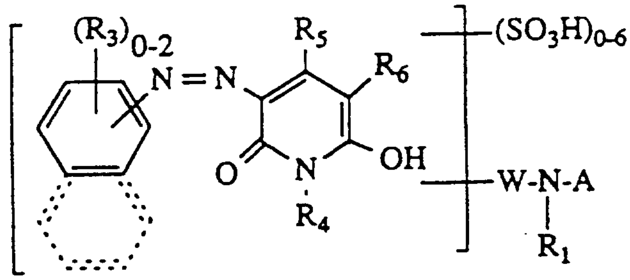

(VIII)

where

- $R_3$ denotes alkyl, alkoxy, halogen,
- $R_4$ denotes alkyl, aralkyl, aryl,
- $R_5$ denotes alkyl, aryl, aralkyl, hetaryl,
- $R_6$ denotes H, $COOR_3$,

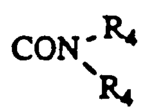
,

CN, $CH_2$-$SO_3H$, $SO_3H$,

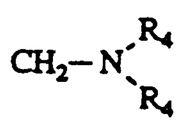

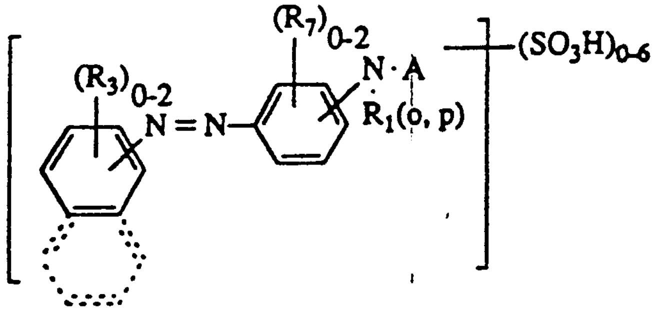

(IX)

with

- $R_3$ denoting alkyl, alkoxy, halogen
- $R_7$ denoting H, alkyl, alkoxy, acylamino, amino, ureido
- o,p denoting in o or p position relative to the azo group

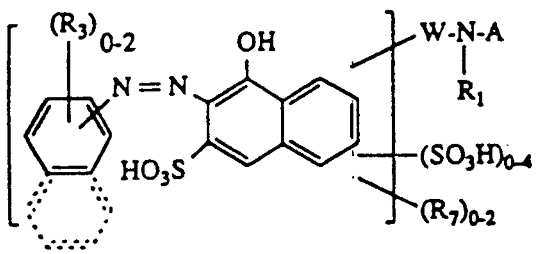

(X)

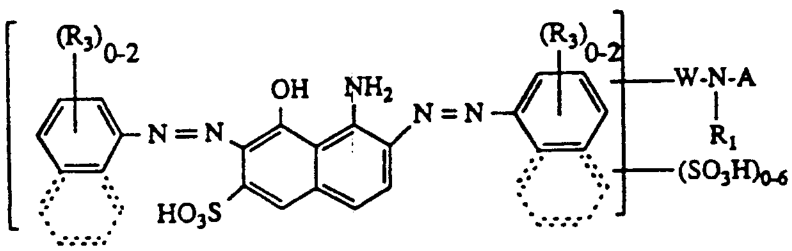

(XI)

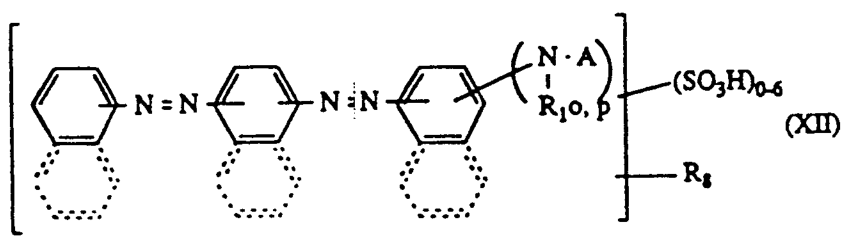

(XII)

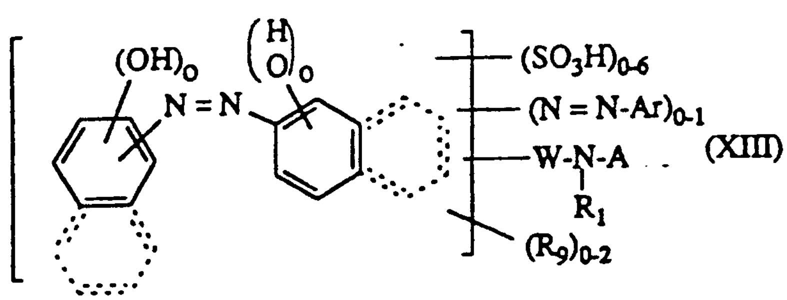

(XIII)

where in (X) to (XIII):

$R_3$ denotes alkyl, alkoxy, halogen
$R_7$ denotes alkyl, alkoxy, acylamino
$R_8$ denotes alkyl, alkoxy, acylamino, ureido
o denotes in ortho position relative to the azo group
$R_9$ denotes $R_8$, $NO_2$

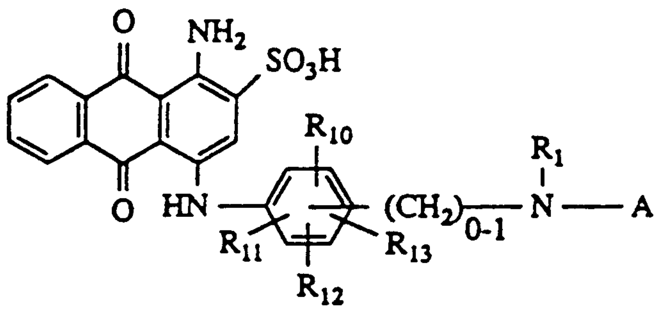

(XIV)

where
$R_{10}$ denotes H, $C_1$-$C_4$-alkyl, halogen (Cl, Br), $C_1$-$C_4$-alkoxy, carboxyl, $SO_3H$,
$R_{11}$ denotes H, $C_1$-$C_4$-alkyl, $SO_3H$
$R_{12}$ denotes H, $C_1$-$C_4$-alkyl, Cl, Br,
$R_{13}$ denotes H, $C_1$-$C_4$-alkyl,

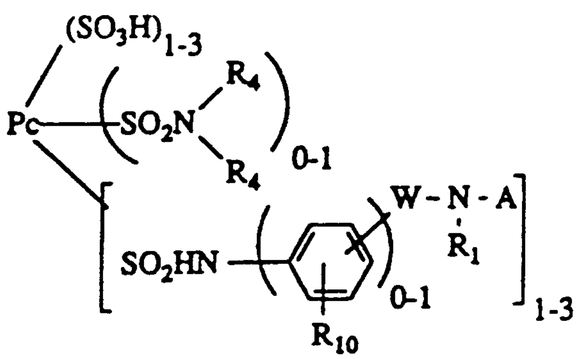

(XV)

where
$R_4$ denotes H, alkyl,
$R_{10}$ denotes H, $SO_3H$, COOH
Pc denotes Cu or Ni phthalocyanine radical

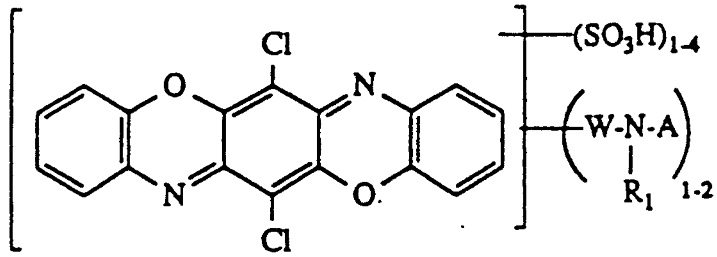

(XVI)

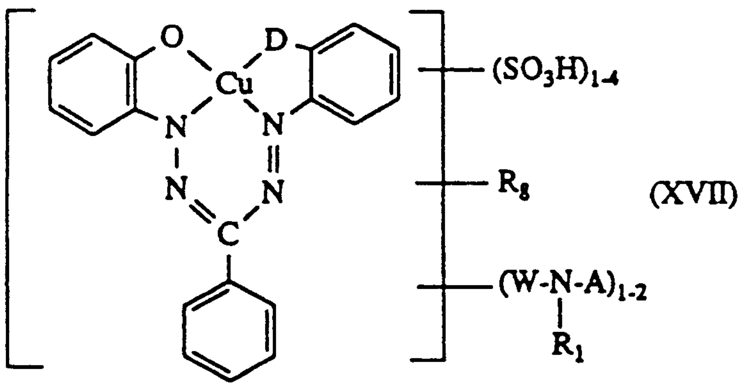

(XVII)

where

- $R_8$ denotes alkyl, halogen, alkylsulphonyl
- D denotes substituent capable of complex formation,

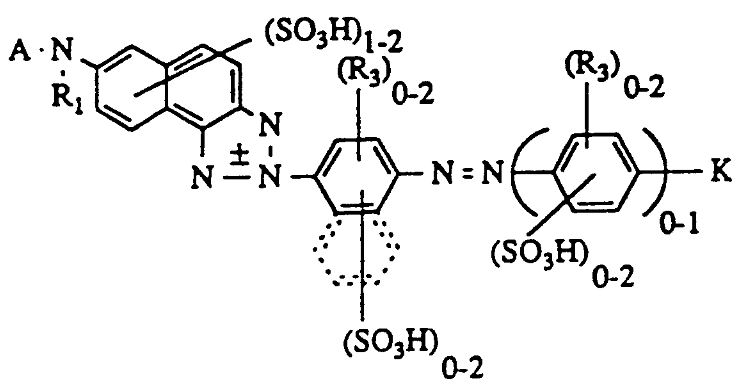

(XVIII)

where

- $R_3$ denotes alkyl, alkoxy, halogen
- K denotes radical of a coupling component,

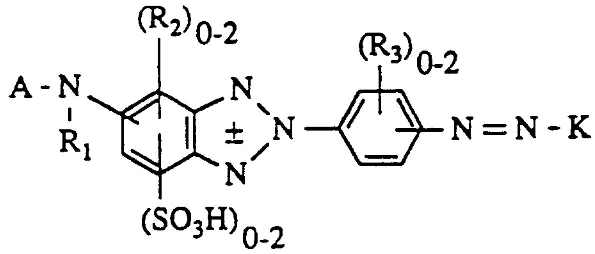

(XIX)

where

R2 denotes alkyl, halogen

R3 denotes alkyl, alkoxy

K denotes radical of a coupling component

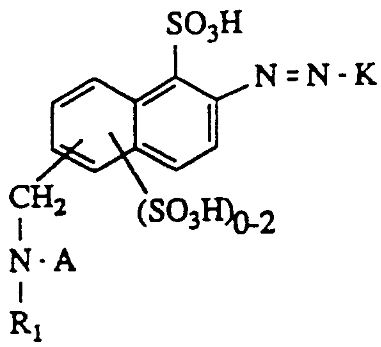

(XX)

where

K denotes radical of a coupling component

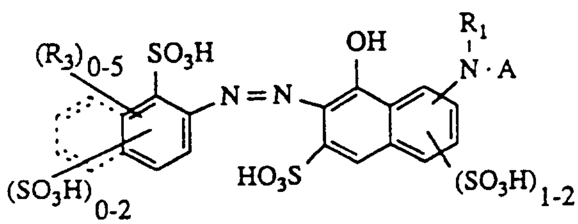

(XXI)

R3 denotes alkyl, alkoxy, acylamino

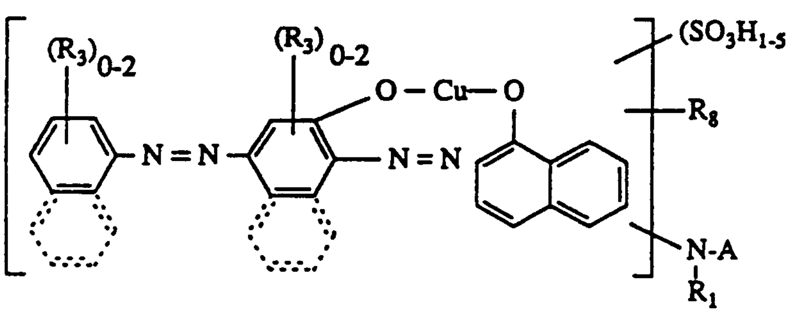

(XXII)

R3 denotes alkyl, alkoxy

R8 denotes H, $NH_2$, acylamino

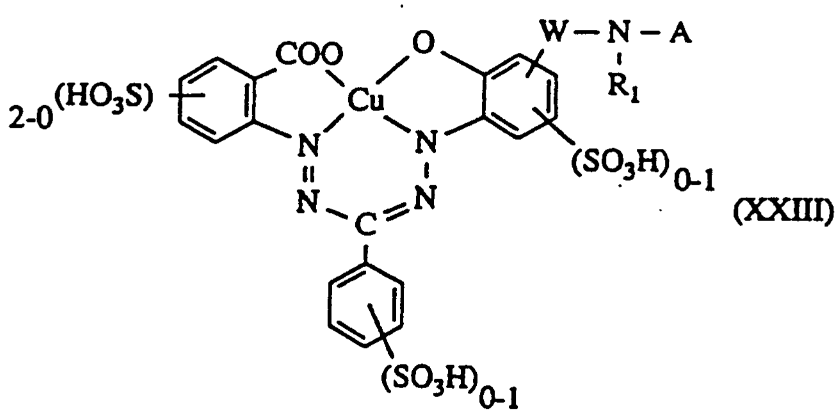

(XXIII)

6. Process for the preparation of the reactive dyestuffs according to Claim 1:
a) either by condensation of dyestuffs of the formula

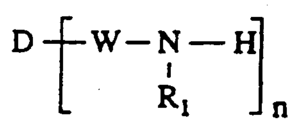

(II)

in which
D, W, $R_1$ have the meaning given in Claim 1,
with n mol of trihalogenotriazines of the formula

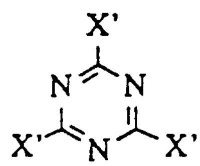

(III)

in which
X' is F, Cl
to give compounds of the formula

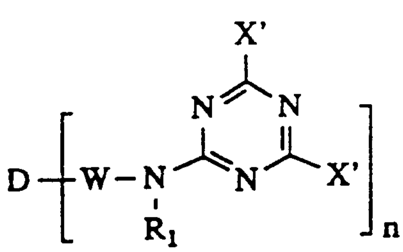

(IV)

and further condensation of the compounds of the formula (IV) with n mol of the components of the formula

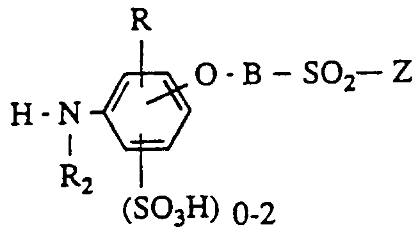

(V)

in which

$R_2$, R, B and Z have the meaning given in Claim 1,

or

b) in reverse order, by condensation of trihalogenotriazines of the formula (III) with the components of the formula (V) to give the primary condensation products

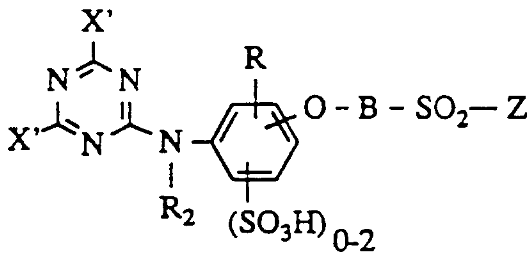

(VI)

in which

X' is F, Cl and

$R_2$, R, B and Z have the meaning given in Claim 1,

and further condensation with n mol of the compounds of the formula (VI) with the dyestuffs of the formula (II),

or

c) by condensation of suitable precursors with trihalogenotriazines (III) and the components of the formula (V) or by condensation of suitable precursors with the primary condensation products of the formula (VI), followed by dyestuff synthesis,

and, if desired,

d) by exchange of the halogen atom X' for the radical of pyridine-3-carboxylic acid in the synthesised halogenotriazine dyestuff.

**7.** Process for the dyeing and printing of substrates using a reactive dyestuff, characterised in that a reactive dyestuff according to at least one of the preceding claims is used.

**Revendications**

**1.** Colorants réactifs de formule :

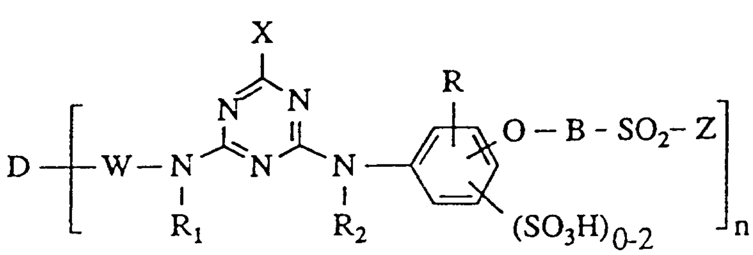

dans laquelle
D représente le reste d'un colorant organique,
W représente une liaison directe ou un terme de pontage,
$R_1$ représente H ou un groupe alkyle,
$R_2$ représente H ou un groupe alkyle,
R représente H, un groupe alkyle en $C_1$ ou $C_2$, un atome d'halogène, un groupe alcoxy en $C_1$ à $C_4$,
B représente un groupe alkylène en $C_3$ à $C_6$, éventuellement ramifié et/ou interrompu par de l'azote, de l'oxygène, $-SO_2-$ ou un groupe 1,4-pipérazinylène,
X représente F, Cl,

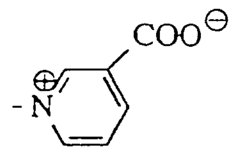

Z représente un groupe $-CH = CH_2$, $-CH_2-CH_2-OSO_3H$, $-CH_2-CH_2-Cl$, $-CH_2-CH_2-Br$, $-CH_2CH_2-S_2O_3H$, $-CH_2-CH_2-O-CO-CH_3$,$-CH_2CH_2-OPO_3H_2$, $-CH_2-CH_2-OH$,
n vaut 1 ou 2.

**2.** Colorants réactifs selon la revendication 1, caractérisés en ce que D représente un reste de la série monoazoïque, polyazoïque, de complexe de métal, anthraquinonique, de phtalocyanine, de formazane, azométhinique, de dioxazine, de phénazine, du stilbène, du triphénylméthane, du xanthène, de la thioxanthone ou de la série nitroarylique.

**3.** Colorants réactifs selon au moins l'une des revendications précédentes, caractérisés en ce que W représente :

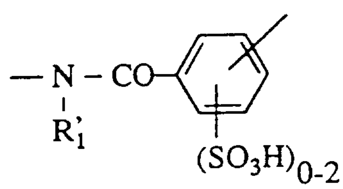

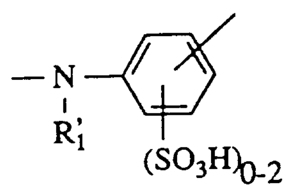

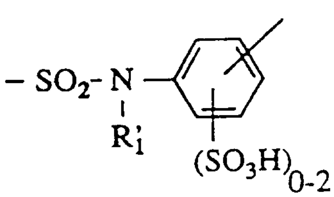

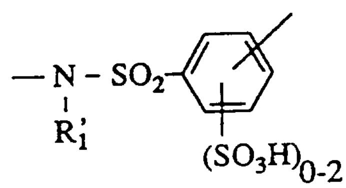

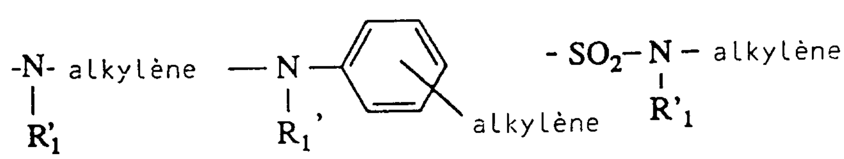

-O-alkylène, -alkylène, -alkylène-CO-, -alkylène-$SO_2$-,
formules dans lesquelles $R'_1$ représente un atome d'hydrogène ou un groupe alkyle, et alkylène représente un reste alkylène ayant 1 à 6 atomes de carbone.

**4.** Colorants réactifs selon l'une au moins des revendications précédentes, caractérisés en ce que B représente :

$-(CH_2)_3-$ ,

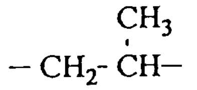

$-(CH_2)_4-$ ,

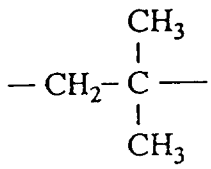

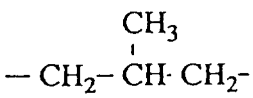 , 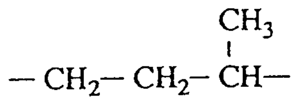 , 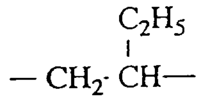 ,

$-(CH_2)_5-$ , $-(CH_2)_6-$ , $-CH_2-CH_2O-CH_2-CH_2-$ ,

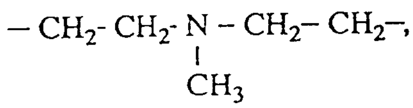

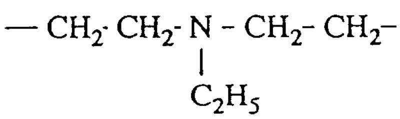 , 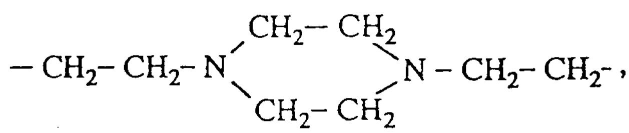

$-CH_2-CH_2-SO_2-CH_2-CH_2-$ .

**5.** Colorants réactifs selon au moins l'une des revendications précédentes, caractérisés en ce qu'ils répondent à l'une des formules suivantes, dans lesquelles A représente un reste de formule

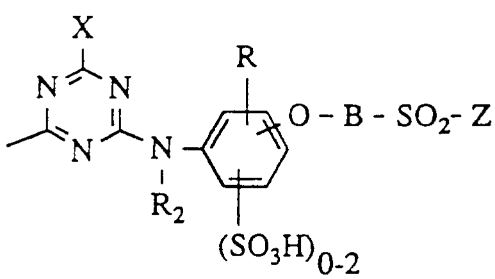
(VIa)

et les substituants ont le sens indiqué à la revendication 1

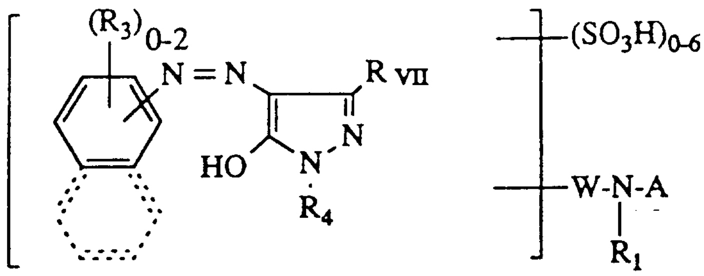

(VII)

avec
$R_3$ représentant un groupe alkyle, alcoxy, un atome d'halogène
$R_4$ représente H, un groupe alkyle, aryle, hétaryle, aralkyle
$R_{VII}$ représente COOH, $CH_3$

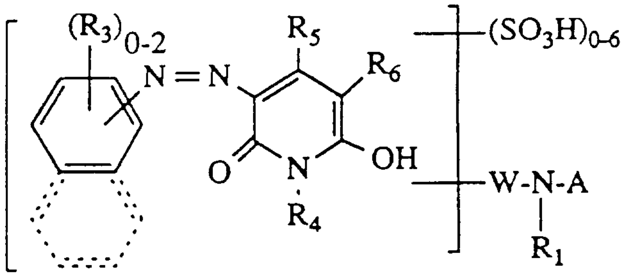

(VIII)

dans laquelle
$R_3$ représente un groupe alkyle, alcoxy, un atome d'halogène,
$R_4$ représente un groupe alkyle, aralkyle, aryle,
$R_5$ représente un groupe alkyle, aryle, aralkyle, hétaryle,
$R_6$ représente un groupe

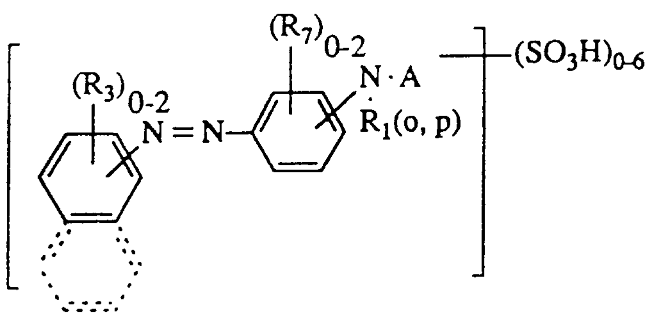

(IX)

dans laquelle
$R_3$ représente un alkyle, alcoxy, un atome d'halogène,
$R_7$ représente H, un groupe alkyle, alcoxy, acylamino, amino, uréido,
o, p indiquent une position en ortho ou para par rapport au groupement azoïque,

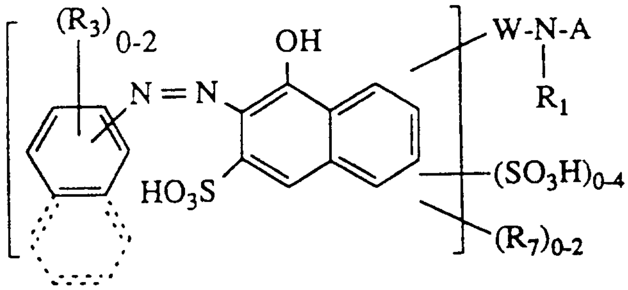

(X)

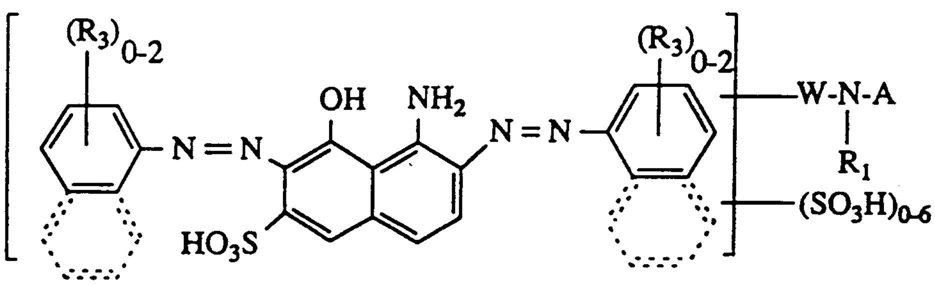

(XI)

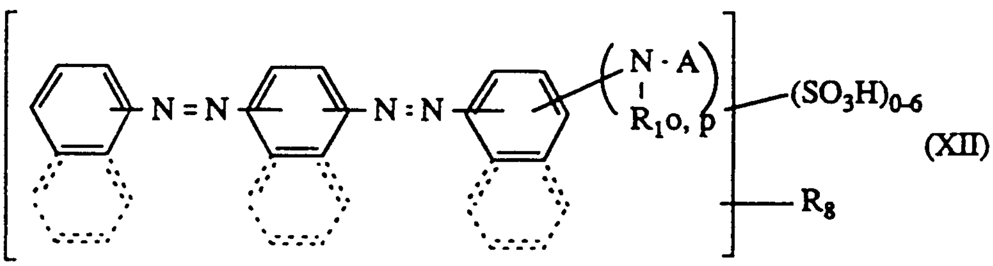

(XII)

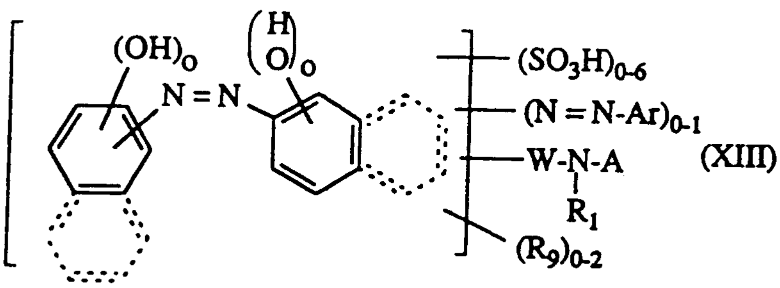

(XIII)

et, dans les formules (X) à (XIII) :
$R_3$ représente un groupe alkyle, alcoxy, un atome d'halogène,
$R_7$ représente une groupe alkyle, alcoxy, acylamino,
$R_8$ représente un groupe alkyle, alcoxy, acylamino, uréido,
o est en position ortho par rapport à un groupe azoïque,
$R_9$ représente $R_8$, $NO_2$,

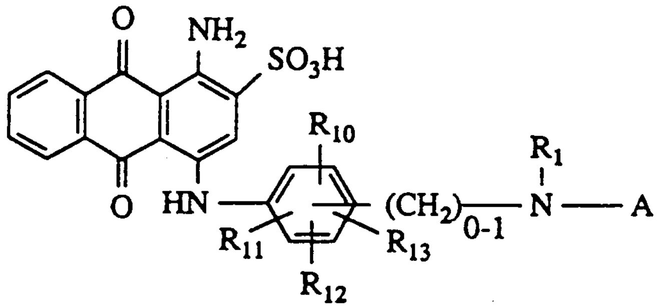

(XIV)

avec
$R_{10}$ représente H, un groupe alkyle en $C_1$-$C_4$, un atome d'halogène (Cl, Br), un groupe alcoxy en $C_1$-$C_4$, carboxy, $SO_3H$,
$R_{11}$ représente H, un groupe alkyle en $C_1$-$C_4$, $SO_3H$,
$R_{12}$ représente H, un groupe alkyle en $C_1$-$C_4$, Cl, Br,
$R_{13}$ représente H, un groupe alkyle en $C_1$-$C_4$

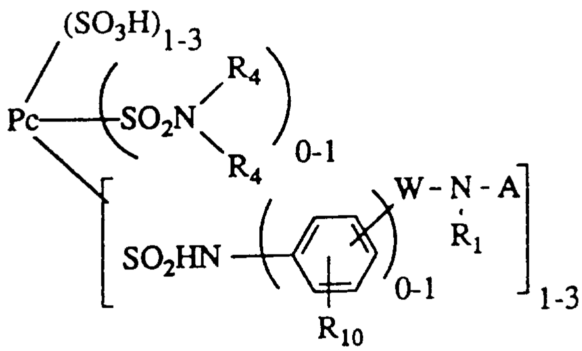

(XV)

avec
$R_4$ représente H, un groupe alkyle,
$R_{10}$ représente H, un groupe $SO_3H$, COOH,
Pc représente un reste phtalocyanine de Cu ou de Ni,

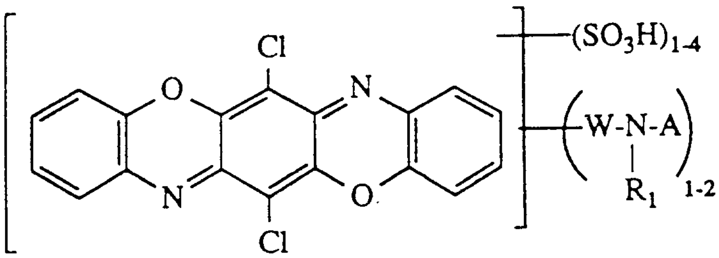

(XVI)

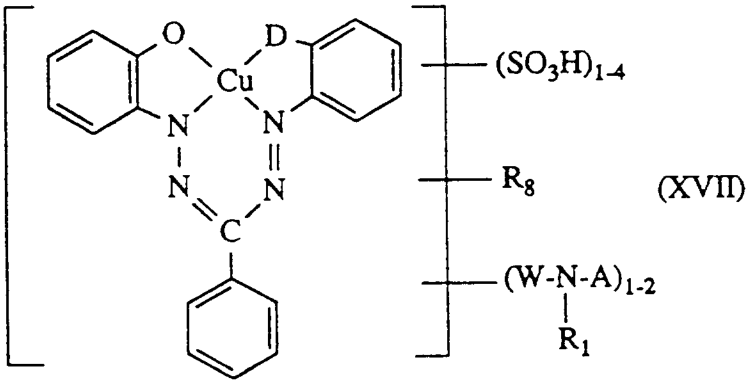

(XVII)

avec

$R_8$ représente un groupe alkyle, un atome d'halogène, un groupe alkylsulfonyle,

D représente un substituant capable de former un complexe,

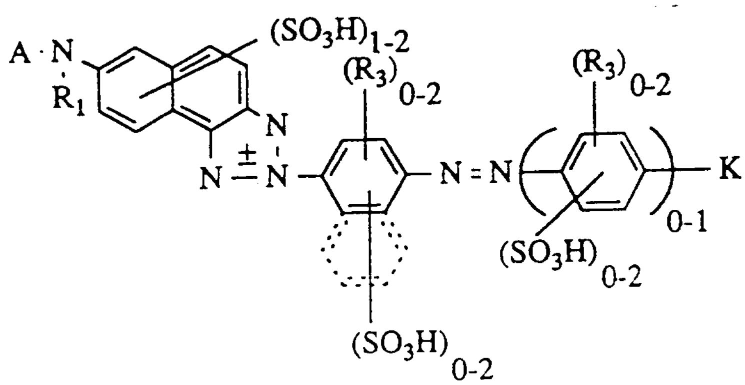

(XVIII)

avec

$R_3$ représente un groupe alkyle, alcoxy, un atome d'halogène,

K représente le reste d'un copulant,

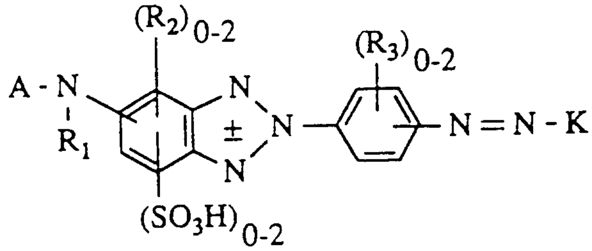

(XIX)

avec

$R_2$ représente un groupe alkyle, un atome d'halogène,
$R_3$ représente un groupe alkyle, alcoxy,
K représente le reste d'un copulant

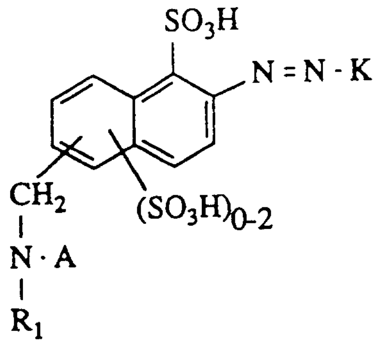

(XX)

avec
K représente le reste d'un copulant

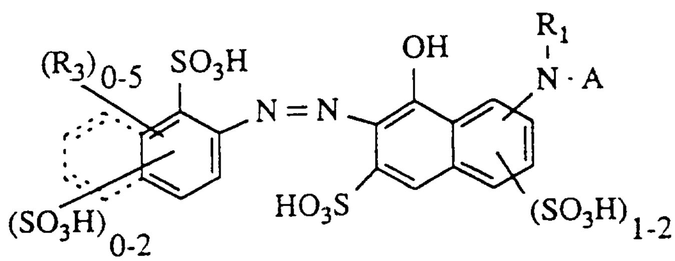

(XXI)

$R_3$ représente un groupe alkyle, alcoxy, acylamino,

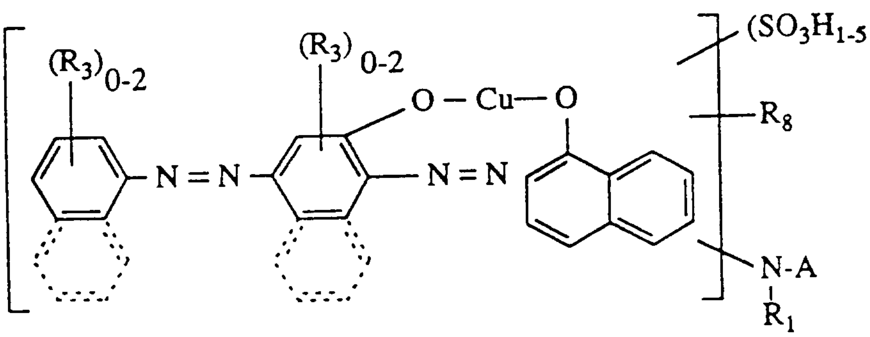

(XXII)

$R_3$ représente un groupe alkyle, alcoxy
$R_8$ représente H, un groupe $NH_2$, acylamino,

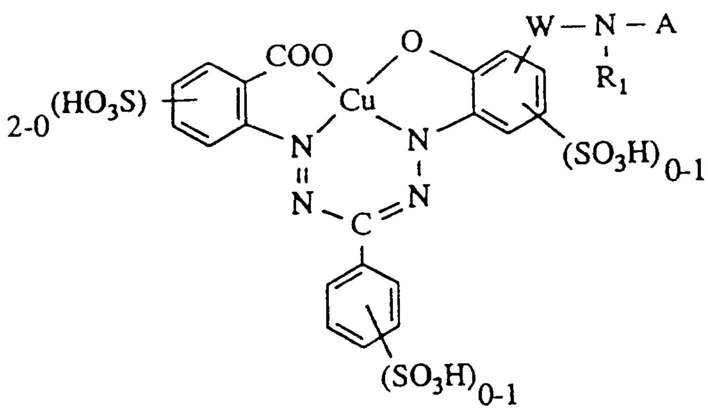

(XXIII)

**6.** Procédé de préparation des colorants réactifs selon la revendication 1, par

a) condensation de colorants de formule

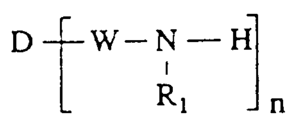

(II)

dans laquelle

D, W, $R_1$ ont le sens indiqué à la revendication 1,

avec n moles de trihalogénotriazines de formule

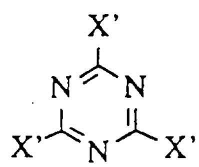

(III)

dans laquelle

X' représente F, Cl

pour obtenir des composés de formule

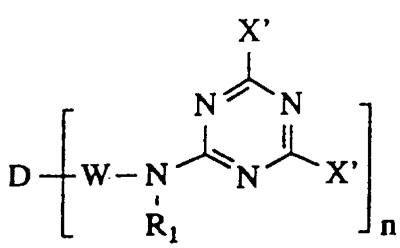

(IV)

et poursuite de la condensation des composés de formule (IV) avec n moles des composants de formule

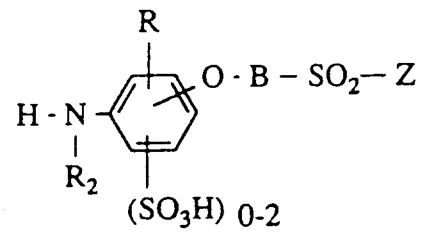

(V)

dans laquelle
$R_2$, R, B et Z ont le sens indiqué à la revendication 1, ou bien
b) dans l'ordre inverse, par condensation de trihalogénotriazine de formule (III) avec les composants de formule (V) pour obtenir les produits de condensation primaires

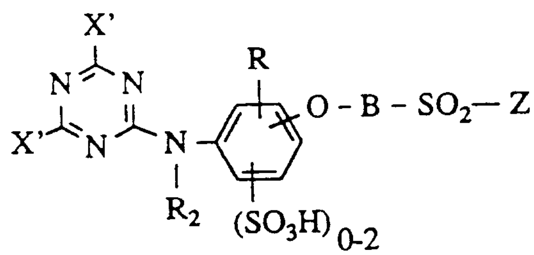

(VI)

avec
X' = F, Cl et
$R_2$, R, B et Z ayant le sens indiqué à la revendication 1.,
et poursuite de la condensation avec n moles des composés de formule (VI) avec les colorants de formule (II),
ou bien
c) par condensation de précurseurs convenables avec les trihalogénotriazines (III) et les composants de formule (V) ou par condensation de précurseurs convenables avec les produits de condensation primaires de formule (VI) puis synthèse de colorants
et éventuellement,
d) par échange de remplacement de l'atome d'halogène X' par le reste de l'acide pyridine-3-carboxylique dans le colorant halogénotriazinique obtenu par synthèse.

**7.** Procédé pour teindre et imprimer des substrats avec un colorant réactif, procédé caractérisé en ce qu'on utilise un colorant réactif selon au moins l'une des revendications précédentes.